(19) **Europäisches Patentamt / European Patent Office / Office européen des brevets**

(11) **EP 4 152 668 A1**

(12) **EUROPEAN PATENT APPLICATION**
published in accordance with Art. 153(4) EPC

(43) Date of publication:
**22.03.2023 Bulletin 2023/12**

(21) Application number: **21804435.2**

(22) Date of filing: **30.04.2021**

(51) International Patent Classification (IPC):
**H04L 5/00** (2006.01)　　**H04W 28/26** (2009.01)

(52) Cooperative Patent Classification (CPC):
**H04L 5/00; H04W 28/26**

(86) International application number:
**PCT/CN2021/091264**

(87) International publication number:
**WO 2021/227893 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.05.2020　CN 202010403296**
**19.06.2020　CN 202010565265**
**22.06.2020　CN 202010571957**

(71) Applicant: **SHANGHAI LANGBO COMMUNICATION TECHNOLOGY COMPANY LIMITED**
**Shanghai 200240 (CN)**

(72) Inventor: **ZHANG, Xiaobo**
**Shanghai 201206 (CN)**

(74) Representative: **Zhang, Fan et al**
**Am Quälenberg 3A**
**38124 Braunschweig (DE)**

(54) **METHOD AND DEVICE USED IN NODE FOR WIRELESS COMMUNICATION**

(57) Disclosed in the present application are a method and device used in a node for wireless communication. Disclosed are a first receiver which receives first signaling and second signaling and a first transmitter which transmits a first signal in a sixth air interface resource block, the first signal bearing a first bit block; the first signaling and the second signaling are respectively used to determine a first air interface resource block and a second air interface resource block; the first air interface resource block and the second air interface resource block overlap in the time domain; the first air interface resource block and the second air interface resource block correspond to a first index and a second index, respectively; the second air interface resource block is reserved for a second bit block, and the second bit block corresponds to the second index; a first air interface resource block group comprises one air interface resource block that corresponds to the first index and that is different from the first air interface resource block; and the first air interface resource block group is used to determine whether the first signal bears a bit block generated by the second bit block.

100A

First node

receiving first signaling and second signaling — 101A

transmitting first signal in sixth radio resource block — 102A

FIG. 1A

**100B**

First node

receiving first
signaling **101B**

transmitting second signal in second
time-frequency resource sub-block **102B**

transmitting first signal in first radio
resource block **103B**

FIG. 1B

## Description

## TECHNICAL FIELD

The present application relates to transmission methods and devices in wireless communication systems, and in particular to a method and device for radio signal transmission in a wireless communication system supporting cellular networks.

## BACKGROUND

In the 5G system, Enhance Mobile Broadband (eMBB) and Ultra Reliable and Low Latency Communication (URLLC) are two typical service types. Targeting the request for a lower target BLER (i.e., 10^-5) in URLLC services, the 3rd Generation Partner Project (3GPP) has defined a new Modulation and Coding Scheme (MCS) in New Radio (NR) Release 15. To support more demanding URLLC traffics, for instance, with higher reliability (e.g., the target BLER is 10^-6), lower latency (e.g., 0.5-1ms) and so on, a Downlink Control Information (DCI) signaling can, as defined in the 3GPP NR Release 16, indicate whether services being scheduled is of Low Priority or High Priority, where the High Priority is for URLLC services while the Low Priority is for eMBB services. When a transmission of Low Priority is overlapping with a transmission of High Priority, the High-priority transmission is performed and the Low-priority one is dropped.

A Work Item (WI) of URLLC advancement in NR Release 17 was approved by the 3GPP RAN Plenary#86. The WI is proceeded with a focus of study on the Multiplexing of different intra-User-Euipment (Intra-UE) services.

## SUMMARY

In protocols of the current version, when one or multiple high-priority physical channels is or are in collisions with a Physical Uplink Control CHannel (PUCCH) carrying low-priority UCI, particularly Hybrid Automatic Repeat reQuest Acknowledgement (HARQ-ACK), the low-priority UCI will be directly dropped; such way of handling collisions will lead to a reduction of the entire system efficiency. After introducing the multiplexing of various intra-UE services of high and low priorities, it is possible to multiplex the low-priority UCI(s) into a high-priority Physical Uplink Shared CHannel (PUSCH)/PUCCH; then how to multiplex low-priority UCI in a high-priority physical layer channel in a rational manner becomes a key issue that needs to addressed since the introduction of multiplexing of different priorities of intra-UE services.

To address the above problem, the present application provides a solution. In the statement above, Uplink is presented only for example; the present application is also applicable to other scenarios, such as Downlink transmission and Sidelink transmission, where similar technical effects can be achieved. Additionally, the adoption of a unified solution for various scenarios, including but not limited to Uplink, Downlink or Sidelink, contributes to the reduction of hardcore complexity and costs.an uplink (Uplink). It should be noted that if no conflict is incurred, embodiments in a User Equipment (UE) in the present application and the characteristics of the embodiments are also applicable to a base station, and vice versa. What's more, the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:

receiving a first signaling and a second signaling;
transmitting a first signal in a sixth radio resource block, the first signal carrying a first bit block;
herein, the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

In one embodiment, a problem to be solved in the present application includes: in a case when a PUCCH carrying low-priority UCI is in collision with one or multiple high-priority physical layer channels, how to determine whether the low-priority UCI is multiplexed in one said high-priority physical layer channel.

In one embodiment, a problem to be solved in the present application includes: in a case when a PUCCH carrying low-priority UCI is in collision with multiple high-priority physical layer channels, how to determine in which one of the said high-priority physical layer channels the low-priority UCI is to be multiplexed.

In one embodiment, a problem to be solved in the present application includes: in a case when a PUCCH carrying low-priority UCI is in collision with one high-priority PUSCH and meanwhile the PUCCH carrying the low-priority UCI is in collision with another high-priority PUCCH, how to transmit the low-priority UCI.

In one embodiment, the low-priority UCI in the present application includes eMBB service-type UCI.

In one embodiment, the low-priority UCI in the present application includes eMBB service-type HARQ-ACK.

In one embodiment, the low-priority UCI in the present application includes a UCI corresponding to priority index 0.

In one embodiment, the low-priority UCI in the present application includes a HARQ-ACK corresponding to priority index 0.

In one embodiment, the low-priority UCI in the present application includes a low-priority HARQ-ACK.

In one embodiment, the high-priority physical layer channel in the present application includes a physical layer channel reserved for URLLC service type.

In one embodiment, the high-priority physical layer channel in the present application includes a physical layer channel of priority index 1.

In one embodiment, the high-priority PUSCH in the present application includes a PUSCH reserved for URLLC service type.

In one embodiment, the high-priority PUSCH in the present application includes a PUSCH of priority index 1.

In one embodiment, the high-priority PUCCH in the present application includes a PUCCH reserved for URLLC service type.

In one embodiment, the high-priority PUCCH in the present application includes a PUCCH of priority index 1.

In one embodiment, the essence of the above method lies in that: low-priority UCI is multiplexed into a high-priority channel only on the condition that the transmission performance of high-priority information is guaranteed.

In one embodiment, an advantage of the above method is that: the transmission performance of UCI is enhanced, and the system efficiency is improved.

In one embodiment, an advantage of the above method is that: some cases where directly dropping low-priority UCI leads to unnecessary data retransmission can be avoided.

In one embodiment, an advantage of the above method is that: the transmission performance of high-priority information is guaranteed.

In one embodiment, an advantage of the above method is that: the reliability of transmitting high-priority information is guaranteed.

In one embodiment, an advantage of the above method is that: the requirement for delay of high-priority information transmission is guaranteed.

According to one aspect of the present application, the above method is characterized in that, the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

In one embodiment, the essence of the above method lies in that: in a case when a PUCCH carrying low-priority UCI is in collision with one high-priority PUSCH and meanwhile the PUCCH carrying the low-priority UCI is in collision with another high-priority PUCCH, the low-priority UCI is transmitted in the high-priority PUSCH.

In one embodiment, an advantage of the above method is that: the reliability of transmitting high-priority UCI can be guaranteed.

In one embodiment, an advantage of the above method is that: the impact of PUCCH resource reselection caused by low-priority UCI being multiplexed in a high-priority PUCCH on physical layer channels other than the PUCCH (especially those high-priority physical layer channels) can be avoided.

In one embodiment, the high-priority UCI in the present application includes URLLC service-type UCI.

In one embodiment, the high-priority UCI in the present application includes URLLC service-type HARQ-ACK.

In one embodiment, the high-priority UCI in the present application includes a UCI corresponding to priority index 1.

In one embodiment, the high-priority UCI in the present application includes a HARQ-ACK corresponding to priority index 1.

In one embodiment, the high-priority UCI in the present application includes a high-priority HARQ-ACK.

According to one aspect of the present application, the above method is characterized in that, a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block.

According to one aspect of the present application, the above method is characterized in that, when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

In one embodiment, the essence of the above method lies in that: in a case when a PUCCH carrying low-priority UCI is in collision with one high-priority PUSCH and meanwhile the PUCCH carrying the low-priority UCI is in collision with another high-priority PUCCH: only when the low-priority UCI being multiplexed in the high-priority PUCCH won't lead to PUCCH resource reselection will the low-priority UCI be multiplexed in the high-priority PUCCH; otherwise, the low-priority UCI is transmitted in the high-priority PUSCH.

According to one aspect of the present application, the above method is characterized in that, the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block.

According to one aspect of the present application, the above method is characterized in that, when the fourth radio resource block is overlapping with at least one radio resource block in the first radio resource block group in time domain, the first signal does not carry any bit block generated by the second bit block; when the fourth radio resource block is orthogonal with all radio resource blocks in the first radio resource block group, the first signal carries a bit block generated by the second bit block.

In one embodiment, the essence of the above method lies in that: when a PUCCH carrying low-priority UCI is in collision with a high-priority PUCCH; only when the low-priority UCI being multiplexed in the high-priority PUCCH won't have any impact on other physical layer channels (especially those high-priority ones) due to PUCCH resource reselection will the low-priority UCI be multiplexed in the high-priority PUCCH; otherwise, the low-priority UCI is not transmitted.

According to one aspect of the present application, the above method is characterized in comprising:

receiving first information;
herein, the first information indicates that a bit block corresponding to a target index is allowed to be transmitted in a radio resource block corresponding to an index different from the target index.

In one embodiment, the method in the present application has the following advantages: avoiding the impact of resource reselection caused by low-priority information being multiplexed in a high-priority physical layer channel on other physical layer channels other than the high-priority physical layer channel.

In one embodiment, the method in the present application has the following advantages: avoiding the impact of resource reselection caused by low-priority information being multiplexed in a high-priority physical layer channel on high-priority information transmitted in other physical layer channels other than the high-priority physical layer channel.

In one embodiment, the impact in the present application includes: the impact on the transmission reliability.

In one embodiment, the impact in the present application includes: the impact on delay.

The present application provides a method in a second node for wireless communications, comprising:

transmitting a first signaling and a second signaling;
receiving a first signal in a sixth radio resource block, the first signal carrying a first bit block;
herein, the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

According to one aspect of the present application, the above method is characterized in that, the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

According to one aspect of the present application, the above method is characterized in that, a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block.

According to one aspect of the present application, the above method is characterized in that,
when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

According to one aspect of the present application, the above method is characterized in that,
the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block.

According to one aspect of the present application, the above method is characterized in that,
when the fourth radio resource block is overlapping with at least one radio resource block in the first radio resource block group in time domain, the first signal does not carry any bit block generated by the second bit block; when the fourth radio resource block is orthogonal with all radio resource blocks in the first radio resource block group, the first signal carries a bit block generated by the second bit block.

According to one aspect of the present application, the above method is characterized in comprising:

transmitting first information;
herein, the first information indicates that a bit block corresponding to a target index is allowed to be transmitted in a radio resource block corresponding to an index different from the target index.

The present application provides a first node for wireless communications, comprising:

a first receiver, receiving a first signaling and a second signaling; and
a first transmitter, transmitting a first signal in a sixth radio resource block, the first signal carrying a first bit block;
herein, the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

The present application provides a second node for wireless communications, comprising:

a second transmitter, transmitting a first signaling and a second signaling; and
a second receiver, receiving a first signal in a sixth radio resource block, the first signal carrying a first bit block;
herein, the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

In one embodiment, the method in the present application has the following advantages:

- allowing different types (e.g., different priorities or service types) of UCIs to be multiplexed on a same physical channel;
- enhancing the UCI transmission performance and system efficiency, thus preventing unnecessary data retransmission resulting from directly dropped low-priority UCI in some cases;
- ensuring the transmission performance of high-priority information;
- avoiding the impact of PUCCH resource reselection caused by low-priority UCI being multiplexed in a high-priority PUCCH on physical layer channels other than the PUCCH (especially those high-priority physical layer channels).

In the current 3GPP protocols, when a low-priority Physical Uplink Shared CHannel (PUSCH) carrying eMBB UCI and a high-priority UpLink (UL) Transmission are overlapping in time domain, part or all of transmission of the low-priority PUSCH is dropped; if the transmission related to the eMBB UCI is still not finished yet at this time, the uncompleted part or all of the eMBB UCI transmission will be dropped, too. The practice of directly dropping the eMBB UCI (particularly when the eMBB UCI is UCI comprising Hybrid Automatic Repeat reQuest Acknowledgement (HARQ-ACK) information) will lead to a reduction of the overall efficiency of the system. The multiplexing of various intra-UE services that will be introduced in NR Release 17 is offering the guidance on ameliorating the issue; how to rationally handle multiplexing of different priorities of UCIs/Data in collisions is a key issue to be solved.

To address the above problem, the present application provides a solution. The statement above only took Uplink (UL) for example; but the present application also applies to Downlink (DL) and Sidelink (SL) transmission scenarios, where similar technical effect can be achieved. And the present application is also applicable to the scenarios of Downlink (DL) transmission and Sidelink transmission, where similar technical effects can be achieved. Additionally, the adoption of a unified solution for various scenarios, including but not limited to UL, DL and SL, contributes to the reduction of hardcore complexity and costs. It should be noted that if no conflict is incurred, embodiments in a User Equipment (UE) in the present application and the characteristics of the embodiments are also applicable to a base station, and vice versa. What's more, the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:

receiving a first signaling;
transmitting a second signal in a second time-frequency resource sub-block, the second signal carrying a fourth bit block and a third bit block; and
transmitting a first signal in a first radio resource block, the first radio resource block being reserved for a first bit block, the first signal carrying the first bit block;
herein, the second time-frequency resource sub-block is a subset of a second time-frequency resource block, an end time of the second time-frequency resource sub-block is no later than a second time, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is a first time; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by a second bit block, the second bit block being used for generating the third bit block.

In one embodiment, a problem to be solved in the present application includes: when a low-priority PUSCH carrying eMBB UCI overlapping with a high-priority UL transmission in time domain leads to a result that part of the low-priority PUSCH transmission is dropped, how to avoid the loss of system performance caused by part or all of the eMBB UCI transmission being canceled.

In one embodiment, the essence of the above method lies in that whether transmitting a part of the second signal that is related to the third bit block is completed at or before the second time is used to determine whether the first signal carries a bit block generated by a second bit block.

In one embodiment, the essence of the above method lies in that: when a low-priority PUSCH carrying eMBB UCI is overlapping with a high-priority UL transmission in time domain, which leads to part of transmission of the low-priority PUSCH being dropped: when the eMBB UCI is already transmitted, a channel of the high-priority UL transmission does not comprise any information bit related to the eMBB UCI; when the eMBB UCI is not yet transmitted, an information bit related to the eMBB UCI is multiplexed into a channel of the high-priority UL transmission.

In one embodiment, an advantage of the above method is that the system performance loss resulting from partial or all eMBB UCI transmissions being cancelled due to collision of different priorities of UL transmissions can be reduced.

In one embodiment, an advantage of the above method is that the HARQ-ACK feedback performance can be enhanced.

In one embodiment, an advantage of the above method is that resource wastes caused by UCI (e.g., eMBB HARQ/low-priority HARQ) which is already transmitted being multiplexed again in other UL transmission channel (for instance, URLLC/high-priority PUSCH or URLLC/high-priority PUCCH) can be avoided.

According to one aspect of the present application, the above method is characterized in that, when the first time is no later than the second time, the first signal does not carry bit block(s) generated by the second bit block; when the first time is later than the second time, the first signal carries a bit block generated by the second bit block.

In one embodiment, the essence of the above method lies in that: when transmitting a part of the second signal that is related to the third bit block is completed at the second time or before the second time, the first signal does not carry bit block(s) generated by the second bit block; when transmitting a part of the second signal that is related to the third bit block is not yet completed at the second time, the first signal carries a bit block generated by the second bit block.

According to one aspect of the present application, the above method is characterized in that, the first signaling indicates the first radio resource block.

According to one aspect of the present application, the above method is characterized in comprising:

receiving a second signaling;
herein, the second signaling indicates the first radio resource block; the second signaling is different from the first signaling.

According to one aspect of the present application, the above method is characterized in that, the first bit block corresponds to a first index, while the second bit block corresponds to a second index, the first index being different from the second index.

According to one aspect of the present application, the above method is characterized in that, the second bit block comprises a HARQ-ACK.

According to one aspect of the present application, the above method is characterized in comprising:

receiving a third signaling;
herein, the third signaling indicates the second time-frequency resource block; the third signaling comprises scheduling information of the fourth bit block.

The present application provides a method in a second node for wireless communications, comprising:

transmitting a first signaling;

receiving a second signal in a second time-frequency resource sub-block, the second signal carrying a fourth bit block and a third bit block; and
receiving a first signal in a first radio resource block, the first radio resource block being reserved for a first bit block, the first signal carrying the first bit block;
herein, the second time-frequency resource sub-block is a subset of a second time-frequency resource block, an end time of the second time-frequency resource sub-block is no later than a second time, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is a first time; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by a second bit block, the second bit block being used for generating the third bit block.

According to one aspect of the present application, the above method is characterized in that, when the first time is no later than the second time, the first signal does not carry bit block(s) generated by the second bit block; when the first time is later than the second time, the first signal carries a bit block generated by the second bit block.

According to one aspect of the present application, the above method is characterized in that, the first signaling indicates the first radio resource block.

According to one aspect of the present application, the above method is characterized in comprising:

transmitting a second signaling;
herein, the second signaling indicates the first radio resource block; the second signaling is different from the first signaling.

According to one aspect of the present application, the above method is characterized in that, the first bit block corresponds to a first index, while the second bit block corresponds to a second index, the first index being different from the second index.

According to one aspect of the present application, the above method is characterized in that, the second bit block comprises a HARQ-ACK.

According to one aspect of the present application, the above method is characterized in comprising:

transmitting a third signaling;
herein, the third signaling indicates the second time-frequency resource block; the third signaling comprises scheduling information of the fourth bit block.

The present application provides a first node for wireless communications, comprising:

a first receiver, receiving a first signaling; and
a first transmitter, transmitting a second signal in a second time-frequency resource sub-block, the second signal carrying a fourth bit block and a third bit block; and
the first transmitter, transmitting a first signal in a first radio resource block, the first radio resource block being reserved for a first bit block, the first signal carrying the first bit block;
herein, the second time-frequency resource sub-block is a subset of a second time-frequency resource block, an end time of the second time-frequency resource sub-block is no later than a second time, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is a first time; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by a second bit block, the second bit block being used for generating the third bit block.

The present application provides a second node for wireless communications, comprising:

a second transmitter, transmitting a first signaling;
a second receiver, receiving a second signal in a second time-frequency resource sub-block, the second signal carrying a fourth bit block and a third bit block; and
the second receiver, receiving a first signal in a first radio resource block, the first radio resource block being reserved for a first bit block, the first signal carrying the first bit block;
herein, the second time-frequency resource sub-block is a subset of a second time-frequency resource block, an end time of the second time-frequency resource sub-block is no later than a second time, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is a first time; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by a second bit block, the second bit block being used for generating the third bit block.

In one embodiment, the method in the present application has the following advantages:

-    reducing the loss of system performance caused by partial or all low-priority UCI (e.g., HARQ-ACK) transmissions being canceled due to collisions of UL transmissions of different priorities;
-    improving the performance of HARQ-ACK (especially eMBB/low-priority HARQ-ACK) feedback;
-    avoiding extra waste of resources produced by multiplexing already transmitted UCI one more time into another UL transmission channel.

**BRIEF DESCRIPTION OF THE DRAWINGS**

Other features, objects and advantages of the present application will become more apparent from the detailed description of non-restrictive embodiments taken in conjunction with the following drawings:

FIG. 1A illustrates a flowchart of processing of a first node according to one embodiment of the present application.
FIG. 1B illustrates a flowchart of processing of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.

FIG. 5A illustrates a flowchart of signal transmission according to one embodiment of the present application.

FIG. 5B illustrates a flowchart of signal transmission according to one embodiment of the present application.

FIG. 6A illustrates a schematic diagram of a procedure of determining whether a first signal carries a bit block generated by a second bit block depending on a radio resource block in a first radio resource block group according to one embodiment of the present application.

FIG. 6B illustrates a schematic diagram of a procedure of determining whether a first signal carries a bit block generated by a second bit block according to one embodiment of the present application.

FIG. 7A illustrates a schematic diagram of time-domain relations among a first radio resource block, a second radio resource block and a first radio resource block group according to one embodiment of the present application.

FIG. 7B illustrates a schematic diagram of relations among a first signaling, a first radio resource block and a second time-frequency resource block according to one embodiment of the present application.

FIG. 8A illustrates a schematic diagram of relations among a second radio resource block, a second bit block, a radio resource block in a first radio resource block group, a third bit block and a third radio resource block according to one embodiment of the present application.

FIG. 8B illustrates a schematic diagram of relations among a second signaling, a first radio resource block, a first signaling, a radio resource block and a second time-frequency resource block according to one embodiment of the present application.

FIG. 9A illustrates a schematic diagram of a procedure of determining whether a first signal carries a bit block generated by a second bit block depending on whether a third radio resource block is the same as a radio resource block in a first radio resource block group according to one embodiment of the present application.

FIG. 9B illustrates a schematic diagram of relations among a start time of a second time-frequency resource block in time domain, an end time of a second time-frequency resource sub-block, a second time and a start time of a first radio resource block in time domain according to one embodiment of the present application.

FIG. 10A illustrates a schematic diagram of relations among a second signaling, a second bit block, a first signaling and a fourth bit block, a first bit block and a fourth radio resource block according to one embodiment of the present application.

FIG. 10B illustrates a schematic diagram of relations among a first bit block, a second bit block, a first index and a second index according to one embodiment of the present application.

FIG. 11A illustrates a schematic diagram of a procedure of determining whether a first signal carries a bit block generated by a second bit block depending on whether a fourth radio resource block is orthogonal in time domain with each radio resource block in a first radio resource block group according to one embodiment of the present application.

FIG. 11B illustrates a structure block diagram of a processing device in a first node according to one embodiment of the present application.

FIG. 12A illustrates a structure block diagram of a processing device in a first node according to one embodiment of the present application.

FIG. 12B illustrates a structure block diagram a processing device in a second node according to one embodiment of the present application.

FIG. 13 illustrates a structure block diagram a processing device in a second node according to one embodiment of the present application.

## DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1A

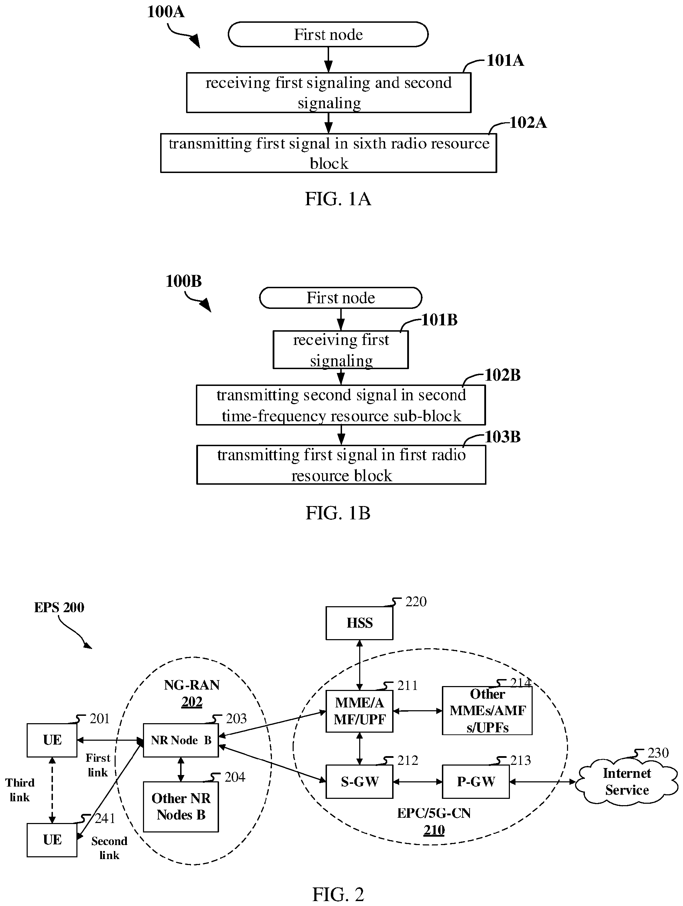

Embodiment 1A illustrates a flowchart of processing of a first node according to one embodiment of the present application, as shown in FIG. 1A.

In Embodiment 1A, the first node in the present application receives a first signaling and a second signaling in step 101A; and transmits a first signal in a sixth radio resource block in step 102A.

In Embodiment 1A, the first signal carries a first bit block; the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

In one embodiment, the first signal comprises a radio signal.

In one embodiment, the first signal comprises a radio frequency signal.

In one embodiment, the first signal comprises a baseband signal.

In one embodiment, the first signaling is an RRC layer signaling.

In one embodiment, the first signaling comprises one or more fields in an RRC layer signaling.

In one embodiment, the first signaling is dynamically configured.

In one embodiment, the first signaling is a Physical Layer signaling.

In one embodiment, the first signaling comprises one or more fields in a physical layer signaling.

In one embodiment, the first signaling is a Higher Layer signaling.

In one embodiment, the first signaling comprises one or more fields in a Higher Layer signaling.

In one embodiment, the first signaling is a Downlink Control Information (DCI) signaling.

In one embodiment, the first signaling comprises one or more fields in a DCI.

In one embodiment, the first signaling comprises one or more fields in an Information Element (IE).

In one embodiment, the first signaling is a DownLink Grant Signaling.

In one embodiment, the first signaling is an UpLink Grant Signaling.

In one embodiment, the first signaling is transmitted in a downlink physical layer control channel (i.e., a downlink channel only capable of bearing physical layer signaling).

In one embodiment, the downlink physical layer control channel in the present application is a Physical Downlink Control CHannel (PDCCH).

In one embodiment, the downlink physical layer control channel in the present application is a short PDCCH (sPDCCH).

In one embodiment, the downlink physical layer control channel in the present application is a Narrow Band PDCCH (NB-PDCCH).

In one embodiment, the first signaling is DCI format 1_0, for the specific definition of the DCI format 1_0, refer to 3GPP TS38.212, Chapter 7.3.1.2.

In one embodiment, the first signaling is DCI format 1_1, for the specific definition of the DCI format 1_1, refer to 3GPP TS38.212, Chapter 7.3.1.2.

In one embodiment, the first signaling is DCI format 1_2, for the specific definition of the DCI format 1_2, refer to 3GPP TS38.212, Chapter 7.3.1.2.

In one embodiment, the first signaling is a signaling used for scheduling a downlink physical layer data channel.

In one embodiment, the downlink physical layer data channel in the present application is a Physical Downlink Shared Channel (PDSCH).

In one embodiment, the downlink physical layer data channel in the present application is a short PDSCH (sPDSCH).

In one embodiment, the downlink physical layer data channel in the present application is a Narrow Band PDSCH (NB-PDSCH).

In one embodiment, the first signaling is DCI format 0_0, for the specific definition of the DCI format 0_0, refer to 3GPP TS38.212, Chapter 7.3.1.1.

In one embodiment, the first signaling is DCI format 0_1, for the specific definition of the DCI format 0_1, refer to 3GPP TS38.212, Chapter 7.3.1.1.

In one embodiment, the first signaling is DCI format 0_2, for the specific definition of the DCI format 0_2, refer to 3GPP TS38.212, Chapter 7.3.1.1.

In one embodiment, the first signaling is a signaling used for scheduling an uplink physical layer data channel.

In one embodiment, the uplink physical layer data channel in the present application is a Physical Uplink Shared Channel (PUSCH).

In one embodiment, the uplink physical layer data channel in the present application is a short PUSCH (sPUSCH).

In one embodiment, the uplink physical layer data channel in the present application is a Narrow Band PUSCH (NB-PUSCH).

In one embodiment, the second signaling is an RRC layer signaling.

In one embodiment, the second signaling comprises one or more fields in an RRC layer signaling.

In one embodiment, the second signaling is dynamically configured.

In one embodiment, the second signaling is a Physical Layer signaling.

In one embodiment, the second signaling comprises one or more fields in a physical layer signaling.

In one embodiment, the second signaling is a Higher Layer signaling.

In one embodiment, the second signaling comprises one or more fields in a Higher Layer signaling.

In one embodiment, the second signaling is a Downlink Control Information (DCI) signaling.

In one embodiment, the second signaling comprises one or more fields in a DCI.

In one embodiment, the second signaling comprises one or more fields in an Information Element (IE).

In one embodiment, the second signaling is a Downlink (DL) scheduling signaling.

In one embodiment, the second signaling is transmitted in a downlink physical layer control channel (i.e., a downlink channel only capable of bearing physical layer signaling).

In one embodiment, the second signaling is DCI format 1_0, for the specific definition of the DCI format 1_0, refer to 3GPP TS38.212, Chapter 7.3.1.2.

In one embodiment, the second signaling is DCI format 1_1, for the specific definition of the DCI format 1_1, refer to 3GPP TS38.212, Chapter 7.3.1.2.

In one embodiment, the second signaling is DCI format 1_2, for the specific definition of the DCI format 1_2, refer to 3GPP TS38.212, Chapter 7.3.1.2.

In one embodiment, the second signaling is a signaling used for scheduling a downlink physical layer data channel.

In one embodiment, the first signaling comprises a priority indicator field, and the priority indicator field comprised in the first signaling indicates the first index.

In one embodiment, the second signaling comprises a priority indicator field, and the priority indicator field comprised in the second signaling indicates the second index.

In one embodiment, the first radio resource block in the present application comprises a positive integer number of Resource Element(s) (RE(s)) in time-frequency domain.

In one embodiment, the second radio resource block in the present application comprises a positive integer number of RE(s) in time-frequency domain.

In one embodiment, the third radio resource block in the present application comprises a positive integer number of RE(s) in time-frequency domain.

In one embodiment, the fourth radio resource block in the present application comprises a positive integer number of RE(s) in time-frequency domain.

In one embodiment, the fifth radio resource block in the present application comprises a positive integer number of RE(s) in time-frequency domain.

In one embodiment, a said RE occupies a multicarrier symbol in time domain, and a subcarrier in frequency domain.

In one embodiment, the multicarrier symbol is an Orthogonal Frequency Division Multiplexing (OFDM) Symbol.

In one embodiment, the multicarrier symbol is a Single Carrier- Frequency Division Multiple Access (SC-FDMA) symbol.

In one embodiment, the multicarrier symbol is a Discrete Fourier Transform Spread OFDM (DFT-S-OFDM) symbol.

In one embodiment, the first radio resource block comprises a positive integer number of subcarrier(s) in frequency domain.

In one embodiment, the first radio resource block comprises a positive integer number of Physical Resource Block(s) (PRB(s)) in frequency domain.

In one embodiment, the first radio resource block comprises a positive integer number of Resource Block(s) (RB(s)) in frequency domain.

In one embodiment, the first radio resource block comprises a positive integer number of multicarrier symbol(s) in time domain.

In one embodiment, the first radio resource block comprises a positive integer number of slot(s) in time domain.

In one embodiment, the first radio resource block comprises a positive integer number of sub-slot(s) in time domain.

In one embodiment, the first radio resource block comprises a positive integer number of millisecond(s) (ms) in time domain.

In one embodiment, the first radio resource block comprises a positive integer number of non-consecutive slots in time domain.

In one embodiment, the first radio resource block comprises a positive integer number of consecutive slots in time domain.

In one embodiment, the first radio resource block comprises a positive integer number of sub-frame(s) in time domain.

In one embodiment, the first radio resource block is configured by a higher layer signaling.

In one embodiment, the first radio resource block is configured by a Radio Resource Control (RRC) signaling.

In one embodiment, the first radio resource block is configured by a Medium Access Control layer Control Element (MAC CE) signaling.

In one embodiment, the first radio resource block is reserved for a physical layer channel.

In one embodiment, the first radio resource block is reserved for a physical layer channel corresponding to the first index.

In one embodiment, the first radio resource block comprises radio resources reserved for a physical layer channel.

In one embodiment, the first radio resource block comprises radio resources occupied by a physical layer channel.

In one embodiment, the first radio resource block comprises time-frequency resources occupied by a physical layer channel in time-frequency domain.

In one embodiment, the first radio resource block comprises time-frequency resources reserved for a physical layer channel in time-frequency domain.

In one embodiment, the physical layer channel in the present application includes a sPUSCH.

In one embodiment, the physical layer channel in the present application includes an NB-PUSCH.

In one embodiment, the physical layer channel in the present application includes a PUCCH or a PUSCH.

In one embodiment, the physical layer channel in the present application includes an uplink physical layer channel.

In one embodiment, the physical layer channel in the present application is a PUCCH or a PUSCH.

In one embodiment, the first radio resource block comprises a PUCCH resource.

In one embodiment, the first radio resource block comprises radio resources occupied by a PUCCH of priority index 1.

In one embodiment, the second radio resource block comprises a positive integer number of subcarrier(s) in frequency domain.

In one embodiment, the second radio resource block comprises a positive integer number of PRB(s) in frequency domain.

In one embodiment, the second radio resource block comprises a positive integer number of RB(s) in frequency domain.

In one embodiment, the second radio resource block comprises a positive integer number of multicarrier symbol(s) in time domain.

In one embodiment, the second radio resource block comprises a positive integer number of slot(s) in time domain.

In one embodiment, the second radio resource block comprises a positive integer number of sub-slot(s) in time domain.

In one embodiment, the second radio resource block comprises a positive integer number of millisecond(s) in time domain.

In one embodiment, the second radio resource block comprises a positive integer number of non-consecutive slots in time domain.

In one embodiment, the second radio resource block comprises a positive integer number of consecutive slots in time domain.

In one embodiment, the second radio resource block comprises a positive integer number of sub-frame(s) in time domain.

In one embodiment, the second radio resource block is configured by a higher layer signaling.

In one embodiment, the second radio resource block is configured by an RRC signaling.

In one embodiment, the second radio resource block is configured by a MAC CE signaling.

In one embodiment, the second radio resource block is reserved for a physical layer channel.

In one embodiment, the second radio resource block is reserved for a physical layer channel corresponding to the second index.

In one embodiment, the second radio resource block comprises radio resources reserved for a physical layer channel.

In one embodiment, the second radio resource block comprises radio resources occupied by a physical layer channel.

In one embodiment, the second radio resource block comprises time-frequency resources occupied by a physical layer channel in time-frequency domain.

In one embodiment, the second radio resource block comprises time-frequency resources reserved for a physical layer channel in time-frequency domain.

In one embodiment, the second radio resource block comprises a PUCCH resource.

In one embodiment, the second radio resource block comprises radio resources occupied by a PUCCH of priority index 0.

In one embodiment, the third radio resource block in the present application comprises a positive integer number of subcarrier(s) in frequency domain.

In one embodiment, the third radio resource block in the present application comprises a positive integer number of PRB(s) in frequency domain.

In one embodiment, the third radio resource block in the present application comprises a positive integer number of RB(s) in frequency domain.

In one embodiment, the third radio resource block in the present application comprises a positive integer number of multicarrier symbol(s) in time domain.

In one embodiment, the third radio resource block in the present application comprises a positive integer number of slot(s) in time domain.

In one embodiment, the third radio resource block in the present application comprises a positive integer number of sub-slot(s) in time domain.

In one embodiment, the third radio resource block in the present application comprises a positive integer number of millisecond(s) in time domain.

In one embodiment, the third radio resource block in the present application comprises a positive integer number of non-consecutive slots in time domain.

In one embodiment, the third radio resource block in the present application comprises a positive integer number of consecutive slots in time domain.

In one embodiment, the third radio resource block in the present application comprises a positive integer number of sub-frame(s) in time domain.

In one embodiment, the third radio resource block in the present application is configured by a higher layer signaling.

In one embodiment, the third radio resource block in the present application is configured by an RRC signaling.

In one embodiment, the third radio resource block in the present application is configured by a MAC CE signaling.

In one embodiment, the third radio resource block in the present application is reserved for a physical layer channel.

In one embodiment, the third radio resource block in the present application is reserved for a physical layer channel corresponding to the first index.

In one embodiment, the third radio resource block in the present application comprises radio resources reserved for a physical layer channel.

In one embodiment, the third radio resource block in the present application comprises radio resources occupied by a physical layer channel.

In one embodiment, the third radio resource block in the present application comprises time-frequency resources occupied by a physical layer channel in time-frequency domain.

In one embodiment, the third radio resource block in the present application comprises time-frequency resources reserved for a physical layer channel in time-frequency domain.

In one embodiment, the third radio resource block in the present application comprises a PUCCH resource.

In one embodiment, the third radio resource block in the present application comprises radio resources occupied by a PUCCH of priority index 1.

In one embodiment, the fourth radio resource block in the present application comprises a positive integer number of subcarrier(s) in frequency domain.

In one embodiment, the fourth radio resource block in the present application comprises a positive integer number of PRB(s) in frequency domain.

In one embodiment, the fourth radio resource block in the present application comprises a positive integer number of RB(s) in frequency domain.

In one embodiment, the fourth radio resource block in the present application comprises a positive integer number of multicarrier symbol(s) in time domain.

In one embodiment, the fourth radio resource block in the present application comprises a positive integer number of slot(s) in time domain.

In one embodiment, the fourth radio resource block in the present application comprises a positive integer number of sub-slot(s) in time domain.

In one embodiment, the fourth radio resource block in the present application comprises a positive integer number of millisecond(s) in time domain.

In one embodiment, the fourth radio resource block in the present application comprises a positive integer number of non-consecutive slots in time domain.

In one embodiment, the fourth radio resource block in the present application comprises a positive integer number of consecutive slots in time domain.

In one embodiment, the fourth radio resource block in the present application comprises a positive integer number of sub-frame(s) in time domain.

In one embodiment, the fourth radio resource block in the present application is configured by a higher layer signaling.

In one embodiment, the fourth radio resource block in the present application is configured by an RRC signaling.

In one embodiment, the fourth radio resource block in the present application is configured by a MAC CE signaling.

In one embodiment, the fourth radio resource block in the present application is reserved for a physical layer channel.

In one embodiment, the fourth radio resource block in the present application is reserved for a physical layer channel corresponding to the first index.

In one embodiment, the fourth radio resource block in the present application comprises radio resources reserved for a physical layer channel.

In one embodiment, the fourth radio resource block in the present application comprises radio resources occupied by a physical layer channel.

In one embodiment, the fourth radio resource block in the present application comprises time-frequency resources occupied by a physical layer channel in time-frequency domain.

In one embodiment, the fourth radio resource block in the present application comprises time-frequency resources reserved for a physical layer channel in time-frequency domain.

In one embodiment, the fourth radio resource block in the present application comprises a PUCCH resource.

In one embodiment, the fourth radio resource block in the present application comprises radio resources occupied by a PUCCH of priority index 1.

In one embodiment, the fifth radio resource block in the present application comprises a positive integer number of subcarrier(s) in frequency domain.

In one embodiment, the fifth radio resource block in the present application comprises a positive integer number of PRB(s) in frequency domain.

In one embodiment, the fifth radio resource block in the present application comprises a positive integer number of RB(s) in frequency domain.

In one embodiment, the fifth radio resource block in the present application comprises a positive integer number of multicarrier symbol(s) in time domain.

In one embodiment, the fifth radio resource block in the present application comprises a positive integer number of slot(s) in time domain.

In one embodiment, the fifth radio resource block in the present application comprises a positive integer number of sub-slot(s) in time domain.

In one embodiment, the fifth radio resource block in the present application comprises a positive integer number of millisecond(s) in time domain.

In one embodiment, the fifth radio resource block in the present application comprises a positive integer number of non-consecutive slots in time domain.

In one embodiment, the fifth radio resource block in the present application comprises a positive integer number of consecutive slots in time domain.

In one embodiment, the fifth radio resource block in the present application comprises a positive integer number of sub-frame(s) in time domain.

In one embodiment, the fifth radio resource block in the present application is configured by a higher layer signaling.

In one embodiment, the fifth radio resource block in the present application is configured by an RRC signaling.

In one embodiment, the fifth radio resource block in the present application is configured by a MAC CE signaling.

In one embodiment, the fifth radio resource block in the present application is reserved for a physical layer channel.

In one embodiment, the fifth radio resource block in the present application is reserved for a physical layer channel corresponding to the first index.

In one embodiment, the fifth radio resource block in the present application comprises radio resources reserved for a physical layer channel.

In one embodiment, the fifth radio resource block in the present application comprises radio resources occupied by a physical layer channel.

In one embodiment, the fifth radio resource block in the present application comprises time-frequency resources occupied by a physical layer channel in time-frequency domain.

In one embodiment, the fifth radio resource block in the present application comprises time-frequency resources reserved for a physical layer channel in time-frequency domain.

In one embodiment, the fifth radio resource block in the present application comprises a PUCCH resource.

In one embodiment, the fifth radio resource block in the present application comprises radio resources occupied by a PUCCH of priority index 1.

In one embodiment, the radio resource block corresponding to the first index that is different from the first radio resource block in the present application comprises a positive integer number of subcarrier(s) in frequency domain.

In one embodiment, the radio resource block corresponding to the first index that is different from the first radio resource block in the present application comprises a positive integer number of PRB(s) in frequency domain.

In one embodiment, the radio resource block corresponding to the first index that is different from the first radio resource block in the present application comprises a positive integer number of RB(s) in frequency domain.

In one embodiment, the radio resource block corresponding to the first index that is different from the first radio resource block in the present application comprises a positive integer number of multicarrier symbol(s) in time domain.

In one embodiment, the radio resource block corresponding to the first index that is different from the first radio resource block in the present application comprises a positive integer number of slot(s) in time domain.

In one embodiment, the radio resource block corresponding to the first index that is different from the first radio resource block in the present application comprises a positive integer number of sub-slot(s) in time domain.

In one embodiment, the radio resource block corresponding to the first index that is different from the first radio resource block in the present application comprises a positive integer number of millisecond(s) in time domain.

In one embodiment, the radio resource block corresponding to the first index that is different from the first radio resource block in the present application comprises a positive integer number of non-consecutive slots in time domain.

In one embodiment, the radio resource block corresponding to the first index that is different from the first radio resource block in the present application comprises a positive integer number of consecutive slots in time domain.

In one embodiment, the radio resource block corresponding to the first index that is different from the first radio resource block in the present application comprises a positive integer number of sub-frame(s) in time domain.

In one embodiment, the radio resource block corresponding to the first index that is different from the first radio resource block in the present application is configured by a higher layer signaling.

In one embodiment, the radio resource block corresponding to the first index that is different from the first radio resource block in the present application is configured by an RRC signaling.

In one embodiment, the radio resource block corresponding to the first index that is different from the first radio resource block in the present application is configured by a MAC CE signaling.

In one embodiment, the radio resource block corresponding to the first index that is different from the first radio resource block in the present application is reserved for a physical layer channel.

In one embodiment, the radio resource block corresponding to the first index that is different from the first radio resource block in the present application is reserved for a physical layer channel corresponding to the first index.

In one embodiment, the radio resource block corresponding to the first index that is different from the first radio resource block in the present application comprises radio resources reserved for a physical layer channel.

In one embodiment, the radio resource block corresponding to the first index that is different from the first radio resource block in the present application comprises radio resources occupied by a physical layer channel.

In one embodiment, the radio resource block corresponding to the first index that is different from the first radio resource block in the present application comprises time-frequency resources occupied by a physical layer channel in time-frequency domain.

In one embodiment, the radio resource block corresponding to the first index that is different from the first radio resource block in the present application comprises time-frequency resources reserved for a physical layer channel in time-frequency domain.

In one embodiment, the radio resource block corresponding to the first index that is different from the first radio resource block in the present application comprises a PUCCH resource.

In one embodiment, the radio resource block corresponding to the first index that is different from the first radio resource block in the present application comprises radio resources occupied by a PUCCH of priority index 1.

In one embodiment, a transmitting end of the first signal performs calculation or/and judgment to determine the first radio resource block.

In one embodiment, a receiving end of the first signal performs calculation or/and judgment to determine the first radio resource block.

In one embodiment, a transmitting end of the first signal performs calculation or/and judgment to determine the second radio resource block.

In one embodiment, a receiving end of the first signal performs calculation or/and judgment to determine the second radio resource block.

In one embodiment, a transmitting end of the first signal performs calculation or/and judgment to determine the fifth radio resource block.

In one embodiment, a receiving end of the first signal performs calculation or/and judgment to determine the fifth radio resource block.

In one embodiment, a transmitting end of the first signal performs calculation or/and judgment to determine the radio resource block corresponding to the first index that is different from the first radio resource block.

In one embodiment, a receiving end of the first signal performs calculation or/and judgment to determine the radio resource block corresponding to the first index that is different from the first radio resource block.

In one embodiment, the second radio resource block and any radio resource block in the first radio resource block group are orthogonal in time domain.

In one embodiment, the second radio resource block and a radio resource block in the first radio resource block group are overlapping in time domain.

In one embodiment, the second radio resource block and the radio resource block that corresponds to the first index and is different from the first radio resource block are overlapping in time domain.

In one embodiment, the second radio resource block and the radio resource block that corresponds to the first index and is different from the first radio resource block are orthogonal in time domain.

In one embodiment, the sixth radio resource block is the first radio resource block.

In one embodiment, the sixth radio resource block is a radio resource block indicated by the first signaling.

In one embodiment, the first signaling is used to determine the sixth radio resource block.

In one embodiment, the first signaling indicates the sixth radio resource block.

In one embodiment, the first signaling explicitly indicates the sixth radio resource block.

In one embodiment, the first signaling implicitly indicates the sixth radio resource block.

In one embodiment, the first signaling indicates the sixth radio resource block in a radio resource block set.

In one embodiment, the first signaling indicates the first radio resource block.

In one embodiment, the first signaling explicitly indicates the first radio resource block.

In one embodiment, the first signaling implicitly indicates the first radio resource block.

In one embodiment, the first signaling indicates time-domain resources occupied by the first radio resource block.

In one embodiment, the first signaling indicates frequency-domain resources occupied by the first radio resource block.

In one embodiment, the first signaling indicates the first radio resource block in a radio resource set.

In one embodiment, the first signaling is associated with the first radio resource block.

In one embodiment, the second signaling indicates the second radio resource block.

In one embodiment, the second signaling explicitly indicates the second radio resource block.

In one embodiment, the second signaling implicitly indicates the second radio resource block.

In one embodiment, the second signaling indicates time-domain resources occupied by the second radio resource block.

In one embodiment, the second signaling indicates frequency-domain resources occupied by the second radio resource block.

In one embodiment, the second signaling indicates the second radio resource block in a radio resource set.

In one embodiment, the second signaling is associated with the second radio resource block.

In one embodiment, the phrase that the first signaling is used to determine the first bit block includes that the first signaling is used to determine a size of the first bit block.

In one embodiment, the first signaling indicates a Modulation and Coding Scheme (MCS); the MCS indicated by the first signaling is used to determine a size of the first bit block.

In one embodiment, a field in the first signaling is used to determine a size of the first bit block.

In one subembodiment, the field in the first signaling is a Modulation and coding scheme field.

In one subembodiment, a value of the field in the first signaling and time-frequency resources occupied by a radio resource block are used together to determine the size of the first bit block.

In one embodiment, a size of the first bit block is a Transport Block Size (TBS) of the first bit block.

In one embodiment, the first bit block comprises a Transport Block (TB).

In one embodiment, the first bit block comprises a Code Block Group (CBG).

In one embodiment, the first bit block comprises a URLLC service-type TB or a URLLC service-type CBG.

In one embodiment, the first bit block comprises a high-priority TB or a high-priority CBG.

In one embodiment, the first bit block comprises a TB of priority index 1 or a CBG of priority index 1.

In one embodiment, the first bit block comprises a TB corresponding to the first index or a CBG corresponding to the first index.

In one embodiment, the first radio resource block is reserved for the first bit block.

In one embodiment, the first bit block corresponds to the first index.

In one embodiment, the phrase that the first signaling is used to determine the first bit block includes that the first bit block comprises information indicating whether the first signaling is correctly received, or, the first bit block comprises information indicating whether a bit block scheduled by the first signaling is correctly received.

In one embodiment, the phrase that the first signaling is used to determine the first bit block includes that the first signaling is used to determine a fourth bit block; the fourth bit block is used for generating the first bit block.

In one embodiment, the first bit block comprises a HARQ-ACK.

In one embodiment, the first bit block comprises a positive integer number of ACK(s) or NACK(s).

In one embodiment, the first bit block comprises a positive integer number of HARQ-ACK bit(s).

In one embodiment, the first bit block comprises a HARQ-ACK codebook.

In one embodiment, the first bit block comprises a HARQ-ACK of URLLC service type.

In one embodiment, the first bit block comprises a high-priority HARQ-ACK.

In one embodiment, the first bit block comprises a HARQ-ACK of priority index 1.

In one embodiment, the first bit block comprises a HARQ-ACK corresponding to the first index.

In one embodiment, the first radio resource block and the second radio resource block are at least overlapping in one multicarrier symbol in time domain.

In one embodiment, the first index and the second index are both priority indexes.

In one embodiment, the first index and the second index are both used for indicating physical layer (PHY) priority.

In one embodiment, the first signaling indicates the first index.

In one embodiment, the second signaling indicates the second index.

In one embodiment, the first signaling and the second signaling respectively indicate the first index and the second index.

In one embodiment, the first index is equal to 1; the second index is equal to 0.

In one embodiment, the first index and the second index are different values, respectively.

In one embodiment, the first index and the second index are different priority indexes, respectively.

In one embodiment, the first index and the second index respectively indicate different QoSs.

In one embodiment, the first index and the second index respectively indicate different service types.

In one embodiment, the different service types include URLLC and eMBB.

In one embodiment, the different service types include services on different links.

In one embodiment, the different service types include service on licensed spectrum and service on unlicensed spectrum.

In one embodiment, the first index and the second index are different CORESETPoolIndexes, respectively.

In one embodiment, the first index and the second index respectively correspond to different COntrol REsource SET (CORESET) pools.

In one embodiment, the first index and the second index respectively correspond to different resource pools.

In one embodiment, the phrase that the first radio resource block and the second radio resource block respectively correspond to a first index and a second index includes that: the first signaling indicates the first index, and the first signaling indicates the first radio resource block; the second signaling indicates the second index, and the second signaling indicates the second radio resource block.

In one embodiment, the phrase that the first radio resource block and the second radio resource block respectively correspond to a first index and a second index includes that: a signaling indicating the first radio resource block indicates the first index; another signaling indicating the second radio resource block indicates the second index.

In one embodiment, the phrase that the second radio resource block is reserved for a second bit block includes that: the second signaling indicates that the second radio resource block is reserved for transmitting the second bit block.

In one embodiment, the phrase that the second radio resource block is reserved for a second bit block includes that: a transmitting end of the first signal performs calculation or/and judgment according to indication of the second signaling to determine that the second radio resource block is reserved for transmitting the second bit block.

In one embodiment, the phrase that the second radio resource block is reserved for a second bit block includes that: a receiving end of the first signal performs calculation or/and judgment to determine that the second radio resource block is reserved for transmitting the second bit block.

In one embodiment, the phrase that the second radio resource block is reserved for a second bit block includes that: the second radio resource block is reserved for a physical layer channel used for transmitting the second bit block.

In one embodiment, the phrase of the second bit block corresponding to the second index includes that the second signaling is used to determine the second bit block; the second signaling indicates the second index.

In one embodiment, the phrase of the second bit block corresponding to the second index includes that the second bit block comprises information indicating whether the second signaling is correctly received, or, the second bit block comprises information indicating whether a bit block scheduled by the second signaling is correctly received; the second signaling indicates the second index.

In one embodiment, the phrase of the second bit block corresponding to the second index includes that a signaling group is used to determine the second bit block; each signaling in the signaling group indicates the second index.

In one subembodiment, the signaling group comprises the second signaling.

In one embodiment, the second bit block comprises a HARQ-ACK.

In one embodiment, the second bit block comprises a positive integer number of ACK(s) or NACK(s).

In one embodiment, the second bit block comprises a positive integer number of HARQ-ACK bit(s).

In one embodiment, the second bit block comprises a HARQ-ACK codebook.

In one embodiment, the second bit block comprises a HARQ-ACK of eMBB service type.

In one embodiment, the second bit block comprises a low-priority HARQ-ACK.

In one embodiment, the second bit block comprises a HARQ-ACK of priority index 0.

In one embodiment, the second bit block comprises a HARQ-ACK corresponding to the second index.

In one embodiment, the first signal carries a bit block generated by the second bit block.

In one subembodiment, the bit block generated by the second bit block comprises a HARQ-ACK.

In one subembodiment, the bit block generated by the second bit block comprises a positive integer number of ACK(s) or NACK(s).

In one subembodiment, the bit block generated by the second bit block comprises a positive integer number of HARQ-ACK bit(s).

In one subembodiment, the bit block generated by the second bit block comprises a HARQ-ACK codebook.

In one subembodiment, the bit block generated by the second bit block comprises a HARQ-ACK of eMBB service type.

In one subembodiment, the bit block generated by the second bit block comprises a low-priority HARQ-ACK.

In one subembodiment, the bit block generated by the second bit block comprises a HARQ-ACK of priority index 0.

In one subembodiment, the bit block generated by the second bit block comprises a HARQ-ACK corresponding to the second index.

In one subembodiment, the bit block generated by the second bit block is a bit block that comprises a HARQ-ACK comprised in the second bit block or a positive integer number of bit(s) generated by a HARQ-ACK comprised in the second bit block.

In one embodiment, the second bit block comprises information indicating whether the second signaling is correctly received, or, the second bit block comprises information indicating whether a bit block scheduled by the second signaling is correctly received.

In one embodiment, the phrase that the first radio resource block group is used to determine whether the first signal carries a bit block generated by the second bit block includes that at least one radio resource block in the first radio resource block group is used to determine whether the first signal carries a bit block generated by the second bit block.

In one embodiment, the phrase that the first radio resource block group is used to determine whether the first signal carries a bit block generated by the second bit block includes that a transmitting end of the first signal performs calculation or/and judgment according to information about at least one radio resource block in the first radio resource block group to determine whether the first signal carries a bit block generated by the second bit block.

In one embodiment, the phrase that the first radio resource block group is used to determine whether the first signal carries a bit block generated by the second bit block includes that a receiving end of the first signal performs calculation or/and judgment according to information about at least one radio resource block in the first radio resource block group to determine whether the first signal carries a bit block generated by the second bit block.

In one embodiment, the first radio resource block group only comprises the radio resource block corresponding to the first index that is different from the first radio resource block.

In one embodiment, the first radio resource block group also comprises a radio resource block other than the radio resource block corresponding to the first index that is different from the first radio resource block.

In one embodiment, the first radio resource block group only comprises one radio resource block.

In one embodiment, all radio resource blocks in the first radio resource block group correspond to the first index.

In one embodiment, any radio resource block in the first radio resource block group is reserved for a bit block.

In one embodiment, in time domain all radio resource blocks comprised in the first radio resource block group comprise partial or all time-domain resources within a same time-domain unit.

In one embodiment, the time-domain unit in the present application is a sub-slot.

In one embodiment, the time-domain unit in the present application comprises a sub-slot.

In one embodiment, the time-domain unit in the present application is a slot.

In one embodiment, the time-domain unit in the present application comprises a slot.

In one embodiment, a signaling other than the first signaling is used to determine the radio resource block corresponding to the first index that is different from the first radio resource block.

In one embodiment, a signaling other than the first signaling indicates the radio resource block corresponding to the first index that is different from the first radio resource block.

In one embodiment, a signaling indicating the first index is used to determine the radio resource block corresponding to the first index that is different from the first radio resource block.

In one embodiment, a signaling indicating the first index indicates the radio resource block corresponding to the first index that is different from the first radio resource block.

In one embodiment, the first signaling is not used to determine the radio resource block corresponding to the first index that is different from the first radio resource block.

In one embodiment, the first signaling is not used to indicate the radio resource block corresponding to the first index that is different from the first radio resource block.

In one embodiment, the sixth radio resource block is the first radio resource block; the first signal does not carry a bit block generated by the second bit block; any bit block related to the second bit block is not transmitted in the first radio resource block.

In one embodiment, when the first signal does not carry a bit block generated by the second bit block: the second bit block or any bit block generated by the second bit block is not transmitted in the second radio resource block, or, a bit block generated by the second bit block is transmitted in a radio resource block determined by a signaling other than the first signaling.

In one embodiment, when the first signal does not carry a bit block generated by the second bit block: a transmitting end of the first signal drops signal transmitting in the second radio resource block.

In one embodiment, a bit block generated by the second bit block is the second bit block.

In one embodiment, a bit block generated by the second bit block comprises the second bit block.

In one embodiment, a bit block generated by the second bit block comprises all or partial bits in the second bit block.

In one embodiment, a bit block generated by the second bit block is an output by partial or all bits in the second bit block through one or more of logic conjunction (logic and), logic disjunction (logic or), exclusive OR (XOR), deleting bits or zero-padding operations.

In one embodiment, the phrase that the first signal carries a first bit block includes that: the first signal comprises an output by all or part of bits in the first bit block sequentially through some or all of CRC Insertion, Segmentation, Code Block (CB)-level CRC Insertion, Channel Coding, Rate Matching, Concatenation, Scrambling, Modulation, Layer Mapping, Precoding, Mapping to Resource Element, Multicarrier Symbol Generation, and Modulation and Upconversion.

In one embodiment, the first signaling is used for indicating a Semi-Persistent Scheduling (SPS) release, where a positive integer number of bit(s) in the first bit block is(are) used to indicate whether the first signaling is correctly received.

In one embodiment, a transmitting end of the first signal receives a sixth bit block; the first signaling comprises scheduling information of the sixth bit block, where a positive integer number of bit(s) in the first bit block is(are) used to indicate whether the sixth bit block is correctly received.

In one embodiment, the second signaling is used for indicating a Semi-Persistent Scheduling (SPS) release, where a positive integer number of bit(s) in the second bit block is(are) used to indicate whether the second signaling is correctly received.

In one embodiment, a transmitting end of the first signal receives a seventh bit block; the second signaling comprises scheduling information of the seventh bit block, where a positive integer number of bit(s) in the second bit block is(are) used to indicate whether the seventh bit block is correctly received.

In one embodiment, the scheduling information in the present application comprises: at least one of time-domain resources occupied, frequency-domain resources occupied, a Modulation and Coding Scheme (MCS), configuration information of DeModulation Reference Signals (DMRS), a Hybrid Automatic Repeat reQuest (HARQ) process number, a Redundancy Version (RV), a New Data Indicator (NDI), a transmission antenna port, or a corresponding Transmission Configuration Indicator (TCI) state.

In one embodiment, the sixth bit block comprises one TB.

In one embodiment, the sixth bit block comprises one CBG.

In one embodiment, the seventh bit block comprises one TB.

In one embodiment, the seventh bit block comprises one CBG.

In one embodiment, the HARQ-ACK in the present application comprises a HARQ-ACK bit.

In one embodiment, the HARQ-ACK in the present application comprises a HARQ-ACK Codebook.

In one embodiment, the HARQ-ACK in the present application comprises a HARQ-ACK Sub-codebook.

In one embodiment, the HARQ-ACK in the present application indicates an ACK or a NACK.

In one embodiment, the HARQ-ACK in the present application is used for a bit indicating whether a bit block or a signaling is correctly received.

In one embodiment, some part of time-domain resources occupied by the first radio resource block are comprised in a time-domain unit; the other part of the time-domain resources occupied by the first radio resource block are comprised in another time-domain unit.

In one embodiment, all time-domain resources occupied by the first radio resource block are comprised in a time-domain unit.

In one embodiment, an end time of the first radio resource block in time domain is an end time of a time-domain unit.

In one embodiment, all time-domain resources occupied by the first radio resource block are comprised in a time-domain unit; an end time of the first radio resource block in time domain is no later than an end time of the time-domain unit in which the first radio resource block is comprised.

In one embodiment, all time-domain resources occupied by the first radio resource block are comprised in a time-domain unit; an end time of the first radio resource block in time domain is an end time of the time-domain unit in which the first radio resource block is comprised.

In one embodiment, the time-domain unit in which the first radio resource block is comprised is a sub-slot.

In one embodiment, the time-domain unit in which the first radio resource block is comprised is a slot.

In one embodiment, the first radio resource block is reserved for a first physical layer channel; a number of bits comprised in the first bit block is smaller than or equal to a maximum number of information bits allowed to be transmitted in the first physical layer channel.

In one embodiment, the first radio resource block is reserved for a first physical layer channel; a number of bits comprised in the first bit block is equal to a maximum number of information bits allowed to be transmitted in the first physical layer channel.

**Embodiment 1B**

Embodiment 1B illustrates a flowchart of processing of a first node according to one embodiment of the present application, as shown in FIG. 1B.

In Embodiment 1B, the first node in the present application receives a first signaling in step 101B; transmits a second signal in a second time-frequency resource sub-block in step 102B; and transmits a first signal in a first radio resource block in step 103B.

In Embodiment 1B, the second signal carries a fourth bit block and a third bit block; the first radio resource block is reserved for a first bit block, the first signal carrying the first bit block; the second time-frequency resource sub-block is a subset of a second time-frequency resource block, an end time of the second time-frequency resource sub-block is no later than a second time, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is a first time; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by a second bit block, the second bit block being used for generating the third bit block.

In one embodiment, the second signal comprises a radio signal.

In one embodiment, the second signal comprises a radio frequency signal.

In one embodiment, the second signal comprises a baseband signal.

In one embodiment, the first signal comprises a radio signal.

In one embodiment, the first signal comprises a radio frequency signal.

In one embodiment, the first signal comprises a baseband signal.

In one embodiment, the first signaling is an RRC layer signaling.

In one embodiment, the first signaling comprises one or more fields in an RRC layer signaling.

In one embodiment, the first signaling is dynamically configured.

In one embodiment, the first signaling is a Physical Layer signaling.

In one embodiment, the first signaling comprises a physical-layer signaling.

In one embodiment, the first signaling comprises a Higher Layer signaling.

In one embodiment, the first signaling is a Downlink Control Information (DCI) signaling.

In one embodiment, the first signaling comprises one or more fields in a DCI.

In one embodiment, the first signaling comprises one or more fields in an Information Element (IE).

In one embodiment, the first signaling is an Up-Link Grant Signaling.

In one embodiment, the first signaling is a DownLink Grant Signaling.

In one embodiment, the first signaling is transmitted in a downlink physical layer control channel (i.e., a downlink channel only capable of bearing physical layer signaling).

In one embodiment, the downlink physical layer control channel is a Physical Downlink Control CHannel (PDCCH).

In one embodiment, the downlink physical layer control channel is a short PDCCH (sPDCCH).

In one embodiment, the downlink physical layer control channel is a Narrow Band PDCCH (NB-PDCCH).

In one embodiment, the downlink physical layer data channel is a PDSCH.

In one embodiment, the downlink physical layer data channel is a short PDSCH (sPDSCH).

In one embodiment, the downlink physical layer data channel is a Narrow Band PDSCH (NB-PDSCH).

In one embodiment, the first signaling is DCI format 1_0, for the specific definition of the DCI format 1_0, refer to 3GPP TS38.212, Chapter 7.3.1.2.

In one embodiment, the first signaling is DCI format 1_1, for the specific definition of the DCI format 1_1, refer to 3GPP TS38.212, Chapter 7.3.1.2.

In one embodiment, the first signaling is DCI format 1_2, for the specific definition of the DCI format 1_2, refer to 3GPP TS38.212, Chapter 7.3.1.2.

In one embodiment, the first signaling is a signaling used for scheduling a downlink physical layer data channel.

In one embodiment, the first signaling is a signaling used for scheduling a downlink physical layer shared channel.

In one embodiment, the first signaling comprises scheduling information of a Physical Downlink Shared Channel (PDSCH).

In one embodiment, the first signaling indicates a Semi-Persistent Scheduling (SPS) release.

In one embodiment, the first signaling is DCI format 0_0, for the specific definition of the DCI format 0_0, refer to 3GPP TS38.212, Chapter 7.3.1.1.

In one embodiment, the first signaling is DCI format 0_1, for the specific definition of the DCI format 0_1, refer to 3GPP TS38.212, Chapter 7.3.1.1.

In one embodiment, the first signaling is DCI format 0_2, for the specific definition of the DCI format 0_2, refer to 3GPP TS38.212, Chapter 7.3.1.1.

In one embodiment, the first signaling comprises scheduling information of a PUSCH.

In one embodiment, the first signaling comprises scheduling information of a PSSCH.

In one embodiment, the first signaling is a signaling used for scheduling an uplink physical layer data channel.

In one embodiment, the uplink physical layer data channel is a PUSCH.

In one embodiment, the uplink physical layer data channel is a short PUSCH (sPUSCH).

In one embodiment, the uplink physical layer data channel is a Narrow Band PUSCH (NB-PUSCH).

In one embodiment, the first signaling is a signaling used for scheduling an uplink physical layer shared channel.

In one embodiment, the second time-frequency resource block comprises a positive integer number of Resource Element(s) (RE(s)).

In one embodiment, the second time-frequency resource sub-block comprises a positive integer number of RE(s).

In one embodiment, the first radio resource block comprises a positive integer number of RE(s).

In one embodiment, the radio resource block indicated by the first signaling comprises a positive integer number of RE(s).

In one embodiment, a said RE occupies a multicarrier symbol in time domain, and a subcarrier in frequency domain.

In one embodiment, the multicarrier symbol is an Orthogonal Frequency Division Multiplexing (OFDM) Symbol.

In one embodiment, the multicarrier symbol is a Single Carrier- Frequency Division Multiple Access (SC-FDMA) symbol.

In one embodiment, the multicarrier symbol is a Discrete Fourier Transform Spread OFDM (DFT-S-OFDM) symbol.

In one embodiment, the second time-frequency resource block comprises a positive integer number of subcarrier(s) in frequency domain.

In one embodiment, the second time-frequency resource block comprises a positive integer number of Physical Resource Block(s) (PRB(s)) in frequency domain.

In one embodiment, the second time-frequency resource block comprises a positive integer number of Resource Block(s) (RB(s)) in frequency domain.

In one embodiment, the second time-frequency resource block comprises a positive integer number of multicarrier symbol(s) in time domain.

In one embodiment, the second time-frequency resource block comprises a positive integer number of slot(s) in time domain.

In one embodiment, the second time-frequency resource block comprises a positive integer number of sub-slot(s) in time domain.

In one embodiment, the second time-frequency resource block comprises a positive integer number of sub-millisecond(s) (ms) in time domain.

In one embodiment, the second time-frequency resource block comprises a positive integer number of non-consecutive slots in time domain.

In one embodiment, the second time-frequency resource block comprises a positive integer number of consecutive slots in time domain.

In one embodiment, the second time-frequency resource block comprises a positive integer number of sub-frame(s) in time domain.

In one embodiment, the second time-frequency resource block is configured by a higher layer signaling.

In one embodiment, the second time-frequency resource block is configured by a Radio Resource Control (RRC) signaling.

In one embodiment, the second time-frequency resource block is configured by a Medium Access Control layer Control Element (MAC CE) signaling.

In one embodiment, the second time-frequency resource sub-block comprises a positive integer number of subcarrier(s) in frequency domain.

In one embodiment, the second time-frequency resource sub-block comprises a positive integer number of PRB(s) in frequency domain.

In one embodiment, the second time-frequency resource sub-block comprises a positive integer number of RB(s) in frequency domain.

In one embodiment, the second time-frequency resource sub-block comprises a positive integer number of multicarrier symbol(s) in time domain.

In one embodiment, the second time-frequency resource sub-block comprises a positive integer number of slot(s) in time domain.

In one embodiment, the second time-frequency resource sub-block comprises a positive integer number of sub-slot(s) in time domain.

In one embodiment, the second time-frequency resource sub-block comprises a positive integer number of sub-millisecond(s) in time domain.

In one embodiment, the second time-frequency resource sub-block comprises a positive integer number of non-consecutive slots in time domain.

In one embodiment, the second time-frequency resource sub-block comprises a positive integer number of consecutive slots in time domain.

In one embodiment, the second time-frequency resource sub-block comprises a positive integer number of sub-frame(s) in time domain.

In one embodiment, the first radio resource block comprises a positive integer number of subcarrier(s) in frequency domain.

In one embodiment, the first radio resource block comprises a positive integer number of PRB(s) in frequency domain.

In one embodiment, the first radio resource block comprises a positive integer number of RB(s) in frequency domain.

In one embodiment, the first radio resource block comprises a positive integer number of multicarrier symbol(s) in time domain.

In one embodiment, the first radio resource block comprises a positive integer number of slot(s) in time domain.

In one embodiment, the first radio resource block comprises a positive integer number of sub-slot(s) in time domain.

In one embodiment, the first radio resource block comprises a positive integer number of sub-millisecond(s) in time domain.

In one embodiment, the first radio resource block comprises a positive integer number of non-consecutive slots in time domain.

In one embodiment, the first radio resource block comprises a positive integer number of consecutive slots in time domain.

In one embodiment, the first radio resource block comprises a positive integer number of sub-frame(s) in time domain.

In one embodiment, the first radio resource block is configured by a higher layer signaling.

In one embodiment, the first radio resource block is configured by an RRC signaling.

In one embodiment, the first radio resource block is configured by a MAC CE signaling.

In one embodiment, the radio resource block indicated by the first signaling comprises a positive integer number of subcarrier(s) in frequency domain.

In one embodiment, the radio resource block indicated by the first signaling comprises a positive integer number of PRB(s) in frequency domain.

In one embodiment, the radio resource block indicated by the first signaling comprises a positive integer number of RB(s) in frequency domain.

In one embodiment, the radio resource block indicated by the first signaling comprises a positive integer number of multicarrier symbol(s) in time domain.

In one embodiment, the radio resource block indicated by the first signaling comprises a positive integer number of slot(s) in time domain.

In one embodiment, the radio resource block indicated by the first signaling comprises a positive integer number of sub-slot(s) in time domain.

In one embodiment, the radio resource block indicated by the first signaling comprises a positive integer number of sub-millisecond(s) in time domain.

In one embodiment, the radio resource block indicated by the first signaling comprises a positive integer number of non-consecutive slots in time domain.

In one embodiment, the radio resource block indicated by the first signaling comprises a positive integer number of consecutive slots in time domain.

In one embodiment, the radio resource block indicated by the first signaling comprises a positive integer number of sub-frame(s) in time domain.

In one embodiment, the radio resource block indicated by the first signaling is configured by a higher layer signaling.

In one embodiment, the radio resource block indicated by the first signaling is configured by an RRC signaling.

In one embodiment, the radio resource block indicated by the first signaling is configured by a MAC CE signaling.

In one embodiment, the second time-frequency resource block comprises a PUSCH.

In one embodiment, the second time-frequency resource block comprises a sPUSCH.

In one embodiment, the second time-frequency resource block comprises an NB-PUSCH.

In one embodiment, the second time-frequency resource block comprises a Physical Sidelink Shared Channel (PSSCH).

In one embodiment, the second time-frequency resource block comprises time-frequency resources scheduled on Uplink.

In one embodiment, the second time-frequency resource block comprises time-frequency resources scheduled on Sidelink.

In one embodiment, the first radio resource block comprises a PUSCH.

In one embodiment, the first radio resource block comprises a PUCCH.

In one embodiment, the first radio resource block comprises a sPUSCH.

In one embodiment, the first radio resource block comprises an NB-PUSCH.

In one embodiment, the first radio resource block comprises a PSSCH.

In one embodiment, the first radio resource block comprises time-frequency resources scheduled on Uplink.

In one embodiment, the first radio resource block comprises time-frequency resources scheduled on Sidelink.

In one embodiment, the radio resource block indicated by the first signaling comprises a PUSCH.

In one embodiment, the radio resource block indicated by the first signaling comprises a PUCCH.

In one embodiment, the radio resource block indicated by the first signaling comprises a sPUSCH.

In one embodiment, the radio resource block indicated by the first signaling comprises an NB-PUSCH.

In one embodiment, the radio resource block indicated by the first signaling comprises a PSSCH.

In one embodiment, the radio resource block indicated by the first signaling comprises time-frequency resources scheduled on Uplink.

In one embodiment, the radio resource block indicated by the first signaling comprises time-frequency resources scheduled on Sidelink.

In one embodiment, the first bit block comprises a HARQ-ACK.

In one embodiment, the first bit block comprises a Transport Block (TB).

In one embodiment, the first bit block comprises multiple TBs.

In one embodiment, the first bit block comprises a Code Block Group (CBG).

In one embodiment, the first bit block comprises multiple CBGs.

In one embodiment, the first bit block comprises a Code Block (CB).

In one embodiment, the first bit block comprises multiple CBs.

In one embodiment, the first bit block comprises a Channel State Information (CSI) Report.

In one embodiment, the first bit block comprises an aperiodic CSI report.

In one embodiment, the first bit block comprises a positive integer number of bit(s).

In one embodiment, the second bit block comprises a HARQ-ACK.

In one embodiment, the second bit block comprises a positive integer number of bit(s).

In one embodiment, the second bit block comprises a CSI report.

In one embodiment, the third bit block comprises a positive integer number of bit(s).

In one embodiment, the third bit block comprises a HARQ-ACK.

In one embodiment, the third bit block comprises a CSI report.

In one embodiment, the bit block generated by the second bit block comprises a positive integer number of bit(s).

In one embodiment, the bit block generated by the second bit block comprises a HARQ-ACK.

In one embodiment, the bit block generated by the second bit block comprises a CSI report.

In one embodiment, the third bit block comprises the second bit block.

In one embodiment, the third bit block comprises and only comprises the second bit block.

In one embodiment, bit(s) comprised in the bit block generated by the second bit block is(are) the same as bit(s) comprised in the third bit block.

In one embodiment, the bit block generated by the second bit block is different from the third bit block.

In one embodiment, the bit block generated by the second bit block comprises the second bit block.

In one embodiment, the bit block generated by the second bit block comprises and only comprises the second bit block.

In one embodiment, the fourth bit block comprises one TB.

In one embodiment, the fourth bit block comprises multiple TBs.

In one embodiment, the fourth bit block comprises one CBG.

In one embodiment, the fourth bit block comprises multiple CBGs.

In one embodiment, the fourth bit block comprises one CB.

In one embodiment, the fourth bit block comprises multiple CBs.

In one embodiment, the fourth bit block comprises an aperiodic CSI report.

In one embodiment, the fourth bit block comprises a positive integer number of bit(s).

In one embodiment, the second bit block goes through a second procedure to generate the third bit block; the second procedure includes at least one operation of logic and, logic or, xor, deleting bits or zero-padding.

In one embodiment, the second bit block goes through a third procedure to generate the bit block generated by the second bit block; the third procedure includes at least one operation of logic and, logic or, xor, deleting bits or zero-padding.

In one embodiment, a bit block generated by the second bit block is a bit block related to the second bit block.

In one embodiment, time-domain resources occupied by the second time-frequency resource sub-block are a subset of time-domain resources occupied by the second time-frequency resource block.

In one embodiment, a number of time-domain resources occupied by the second time-frequency resource sub-block is smaller than a number of time-domain resources occupied by the second time-frequency resource block.

In one embodiment, time-domain resources occupied by the second time-frequency resource block comprise time-domain resources occupied by the second time-frequency resource sub-block; a number of time-domain resources occupied by the second time-frequency resource block is greater than a number of time-domain resources occupied by the second time-frequency resource sub-block.

In one embodiment, frequency-domain resources occupied by the second time-frequency resource block comprise frequency-domain resources occupied by the second time-frequency resource sub-block.

In one embodiment, frequency-domain resources occupied by the second time-frequency resource sub-block are a subset of frequency-domain resources occupied by the second time-frequency resource block.

In one embodiment, frequency-domain resources occupied by the second time-frequency resource sub-block are the same as frequency-domain resources occupied by the second time-frequency resource block.

In one embodiment, the first node receives a signaling; the signaling is the first signaling or the second signaling; the first radio resource block comprises a physical channel; the signaling indicates that the physical channel is used for transmitting the first bit block; in time domain, the first node receives the signaling before a start time of the first radio resource block in time domain.

In one embodiment, the second time-frequency resource block comprises a physical channel; the third signaling indicates that the physical channel is used for transmitting the fourth bit block; in time domain, the first node receives the third signaling before a start time of the second time-frequency resource block in time domain.

In one embodiment, the physical channel includes a PUSCH.

In one embodiment, the physical channel includes a PUCCH.

In one embodiment, the physical channel includes a PSSCH.

In one embodiment, the first signaling comprises a field, where a value of the field indicates the radio resource block.

In one embodiment, the first signaling indicates frequency-domain resources occupied by the radio resource block.

In one embodiment, the first signaling indicates time-domain resources occupied by the radio resource block.

In one embodiment, the first signaling explicitly indicates the radio resource block.

In one embodiment, the first signaling implicitly indicates the radio resource block.

In one embodiment, the second time-frequency resource block and the radio resource block indicated by the first signaling are partially overlapping in time domain.

In one embodiment, the radio resource block indicated by the first signaling comprises one or multiple multicarrier symbols comprised in the second time-frequency resource block.

In one embodiment, the second time-frequency resource sub-block and the radio resource block indicated by the first signaling are non-overlapping in time domain.

In one embodiment, an end time of a last multicarrier symbol in the second time-frequency resource block being allocated to the third bit block is the first time.

In one embodiment, the second signal comprises a first sub-signal; the first sub-signal is an output by all or part of bits in the fourth bit block sequentially through some or all of CRC Insertion, Segmentation, Code Block (CB)-level CRC Insertion, Channel Coding, Rate Matching, Concatenation, Scrambling, Modulation, Layer Mapping, Precoding, Mapping to Resource Element, Multicarrier Symbol Generation, and Modulation and Upconversion.

In one embodiment, the second signal comprises a second sub-signal; the second sub-signal is an output by all or part of bits in the third bit block sequentially through some or all of CRC Insertion, Segmentation, Code Block (CB)-level CRC Insertion, Channel Coding, Rate Matching, Concatenation, Scrambling, Modulation, Layer Mapping, Precoding, Mapping to Resource Element, Multicarrier Symbol Generation, and Modulation and Upconversion.

In one embodiment, the first signal comprises a third sub-signal; the third sub-signal is an output by all or part of bits in the first bit block sequentially through some or all of CRC Insertion, Segmentation, Code Block (CB)-level CRC Insertion, Channel Coding, Rate Matching, Concatenation, Scrambling, Modulation, Layer Mapping, Precoding, Mapping to Resource Element, Multicarrier Symbol Generation, and Modulation and Upconversion.

In one embodiment, the first signal carries a bit block generated by the second bit block; the first signal comprises a fourth sub-signal; the fourth sub-signal is an output by all or part of bits in the bit block generated by the second bit block sequentially through some or all of CRC Insertion, Segmentation, Code Block (CB)-level CRC Insertion, Channel Coding, Rate Matching, Concatenation, Scrambling, Modulation, Layer Mapping, Precoding, Mapping to Resource Element, Multicarrier Symbol Generation, and Modulation and Upconversion.

In one embodiment, the first node only transmits a part of the second signal in the second time-frequency resource sub-block.

In one embodiment, the first node transmits in the second time-frequency resource sub-block a part of the second signal that is mapped into the second time-frequency resource sub-block.

In one subembodiment, the part of the second signal carries only the third bit block between the fourth bit block and the third bit block.

In one embodiment, the first node drops transmitting the second signal in time-frequency resources in the second time-frequency resource block other than the second time-frequency resource sub-block.

In one embodiment, the first node drops transmitting a part of the second signal that is mapped into time-frequency resources in the second time-frequency resource block other than the second time-frequency resource sub-block.

In one embodiment, partial or all modulation symbols generated by the third bit block are mapped in the second time-frequency resource sub-block.

In one embodiment, none of modulation symbols generated by the third bit block is mapped in the second time-frequency resource sub-block.

In one embodiment, partial or all modulation symbols generated by the fourth bit block are mapped in the second time-frequency resource sub-block.

In one embodiment, none of modulation symbols generated by the fourth bit block is mapped in the second time-frequency resource sub-block.

In one embodiment, an end time of the second time-frequency resource sub-block is equal to the second time; when the first time is no later than the second time, all modulation symbols generated by the third bit block are mapped in the second time-frequency resource sub-block; when the first time is later than the second time, only part of modulation symbols generated by the third bit block are mapped in the second time-frequency resource sub-block, or, none of modulation symbols generated by the third bit block is mapped in the second time-frequency resource sub-block.

In one embodiment, the meaning of the phrase of "transmitting a second signal in a second time-frequency resource sub-block, the second signal carrying a fourth bit block and a third bit block" includes: the first node performs calculation and determines to map a third modulation symbol group and a fourth modulation symbol group into the second time-frequency resource block; the third modulation symbol group comprises a positive integer number of modulation symbol(s), where the third bit block is used for generating the third modulation symbol group; the fourth modulation symbol group comprises a positive integer number of modulation symbol(s), where the fourth bit block is used for generating the fourth modulation symbol group; the first node drops transmitting any modulation symbol comprised in the third modulation symbol group or the fourth modulation symbol group in a first time-frequency resource sub-block; the first time-frequency resource sub-block comprises time-frequency resources in the second time-frequency resource block other than the second time-frequency resource sub-block.

In one subembodiment, the first time-frequency resource sub-block comprises all time-frequency resources in the second time-frequency resource block other than the second time-frequency resource sub-block.

In one subembodiment, the first time-frequency resource sub-block only comprises partial time-frequency resources in the second time-frequency resource block other than the second time-frequency resource sub-block; a start time of the first time-frequency resource sub-block is later than an end time of the second time-frequency resource sub-block.

In one subembodiment, partial or all modulation symbols in the third modulation symbol group are mapped in the second time-frequency resource sub-block; the first node transmits a modulation symbol sub-group in the second time-frequency resource sub-block; the modulation symbol sub-group comprises modulation symbols comprised in the third modulation symbol group that are mapped in the second time-frequency resource sub-block.

In one subembodiment, partial or all modulation symbols in the fourth modulation symbol group are mapped in the second time-frequency resource sub-block; the first node transmits a modulation symbol sub-group in the second time-frequency resource sub-block; the modulation symbol sub-group comprises modulation symbols comprised in the fourth modulation symbol group that are mapped in the second time-frequency resource sub-block.

In one subembodiment, any modulation symbol in the third modulation symbol group is not mapped in the second time-frequency resource sub-block; any modulation symbol in the fourth modulation symbol group is not mapped in the second time-frequency resource sub-block; the first node does not transmit any modulation symbol in the third modulation symbol group or any modulation symbol in the fourth modulation symbol group in the second time-frequency resource sub-block.

In one subembodiment, all modulation symbols in the third modulation symbol group are mapped in the second time-frequency resource sub-block; the first node drops transmitting modulation symbols comprised in the fourth modulation symbol group in time-frequency resources in the second time-frequency resource block other than the second time-frequency resource sub-block.

In one subembodiment, time-frequency resources in the second time-frequency resource block being allocated to the third bit block include time-frequency resources in the second time-frequency resource block used for mapping to the third modulation symbol group determined by the calculation performed by the first node.

In one subembodiment, time-frequency resources in the second time-frequency resource block being allocated to the third bit block are time-frequency resources in the second time-frequency resource block used for mapping to the third modulation symbol group determined by the calculation performed by the first node.

In one embodiment, the third bit block goes through a first process to generate the third modulation symbol group; the first process includes part or all of CRC Insertion, Segmentation, Code Block(CB)-level CRC Insertion, Channel Coding, Rate Matching, Concatenation, Scrambling, or Modulation.

In one embodiment, the fourth bit block goes through a first process to generate the fourth modulation symbol group; the first process includes part or all of CRC Insertion, Segmentation, Code Block(CB)-level CRC Insertion, Channel Coding, Rate Matching, Concatenation, Scrambling, or Modulation.

In one embodiment, the first bit block is different from the fourth bit block.

In one embodiment, the third signaling indicates the second time-frequency resource block; the first signaling indicates the first radio resource block; the third signaling is different from the first signaling.

In one embodiment, the third signaling indicates the second time-frequency resource block; the second signaling indicates the first radio resource block; the third signaling is different from the second signaling.

In one embodiment, when the first time is earlier than the second time, the first signal does not carry a bit block generated by the second bit block; when the first time is no earlier than the second time, the first signal carries a bit block generated by the second bit block.

In one embodiment, only when a first condition set is fulfilled, a relative relation between the first time and the second time can be used to determine whether the first signal carries a bit block generated by the second bit block.

In one embodiment, when the first time is no later than a second time or a first condition set is not being fulfilled, the first signal does not carry a bit block generated by the second bit block; when the first time is later than the second time and the first condition set is fulfilled, the first signal carries a bit block generated by the second bit block.

In one embodiment, the first condition set comprises a positive integer number of condition(s).

In one embodiment, the phrase that a first condition set is fulfilled comprises that all conditions in the first condition set are being fulfilled.

In one embodiment, the phrase that a first condition set is not fulfilled comprises that any condition in the first condition set is not being fulfilled.

In one embodiment, the first condition set comprises a first Timeline condition, the first Timeline condition being one of Timeline conditions described in 3GPP TS38.213, Section 9.2.5.

In one embodiment, a condition in the first condition set is a Timeline condition related to at least one

$$T_{proc,1}^{mux}, \quad T_{proc,2}^{mux}, \quad T_{proc,release}^{mux} \quad T_{proc,CSI}^{mux}$$

of $\quad$ , $\quad$ , $\quad$ or $\quad$ ; for the specific meaning of the Timeline condition, refer to 3GPP TS38.213, Section 9.2.5; specific meanings of the

$$T_{proc,1}^{mux} \quad T_{proc,2}^{mux} \quad T_{proc,release}^{mux} \quad T_{proc,CSI}^{mux}$$

, the $\quad$ , the $\quad$ and the $\quad$ can also be found in 3GPP TS38.213, Section 9.2.5.

In one embodiment, the first condition set comprises a Timeline condition; the Timeline condition in the first condition set is related to an earliest multicarrier symbol in a radio resource bearing the first signal.

In one embodiment, the first condition set comprises a Timeline condition related to a radio resource block of Priority Index 1, and the detailed description of the Timeline condition can be found in 3GPP TS38.213, Section 9.2.5.

In one subembodiment, the radio resource block of Priority Index 1 comprises a PUCCH.

In one subembodiment, the radio resource block of Priority Index 1 comprises a PUSCH.

In one embodiment, the first condition set comprises a condition related to UE Processing Capability.

In one embodiment, the first node drops transmitting the second signal in the second time-frequency resource block after the third time; the third time is no earlier than the second time.

In one embodiment, the first node drops transmitting part of the second signal that is mapped into time-frequency resources comprised in the second time-frequency resource block after the third time; the third time is no earlier than the second time.

In one embodiment, the third time is the second time.

In one embodiment, the third time is later than the second time.

In one embodiment, UE Capability is used to determine the second time.

In one embodiment, UE Processing Capability is used to determine the second time.

In one embodiment, a parameter $T_{proc,2}$ for describing the UE Processing Capability is used to determine the second time, for the specific definition of the parameter $T_{proc,2}$, refer to 3GPP TS38.214, Section 6.4.

In one embodiment, UE Capability is used to determine the third time.

In one embodiment, UE Processing Capability is used to determine the third time.

In one embodiment, a parameter $T_{proc,2}$ for describing the UE Processing Capability is used to determine the third time, for the specific definition of the parameter $T_{proc,2}$, refer to 3GPP TS38.214, Section 6.4.

## Embodiment 2

Embodiment 2 illustrates a schematic diagram of a network architecture according to the present application, as shown in FIG. 2.

FIG. 2 is a diagram illustrating a network architecture 200 of 5G NR, Long-Term Evolution (LTE) and Long-Term Evolution Advanced (LTE-A) systems. The 5G NR or LTE network architecture 200 may be called an Evolved Packet System (EPS) 200 or other suitable terminology. The EPS 200 may comprise one or more UEs 201, an NG-RAN 202, an Evolved Packet Core/5G-Core Network (EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field (AMF)/ User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 241 corresponds to the second node in the present application.

In one embodiment, the gNB203 corresponds to the second node in the present application.

In one embodiment, the UE 241 corresponds to the first node in the present application.

In one embodiment, the UE 201 corresponds to the second node in the present application.

## Embodiment 3

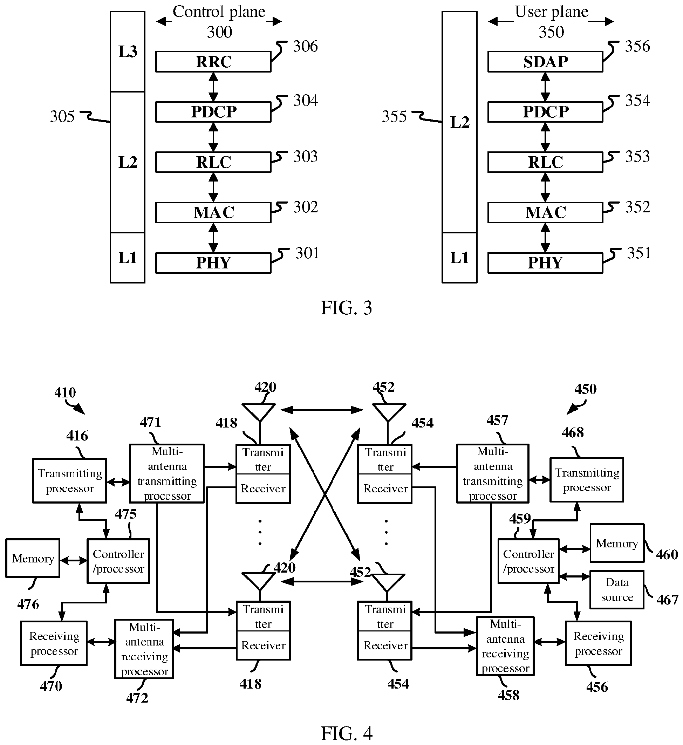

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first communication node (UE, gNB or, RSU in V2X) and a second communication node (gNB, UE, or RSU in V2X), or between two UEs, is represented by three layers, which are a layer 1, a layer 2 and a layer 3, respectively. The layer 1 (L1) is the lowest layer which performs signal processing functions of various PHY layers. The L1 is called PHY 301 in the present application. The layer 2 (L2) 305 is above the PHY 301, and is in charge of the link between the first communication node and the second communication node or between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication nodes of the network side. The PDCP sublayer 304 provides multiplexing among variable radio bearers and logical channels. The PDCP sublayer 304 provides security by encrypting a packet and provides support for handover of a first communication node between second communication nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second communication node and the first communication node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first communication node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first bit block in the present application is generated by the SDAP sublayer 356.

In one embodiment, the first bit block in the present application is generated by the RRC sublayer 306.

In one embodiment, the first bit block in the present application is generated by the MAC sublayer 302.

In one embodiment, the first bit block in the present application is generated by the MAC sublayer 352.

In one embodiment, the first bit block in the present application is generated by the PHY 301.

In one embodiment, the first bit block in the present application is generated by the PHY 351.

In one embodiment, the second bit block in the present application is generated by the RRC sublayer 306.

In one embodiment, the second bit block in the present application is generated by the MAC sublayer 302.

In one embodiment, the second bit block in the present application is generated by the MAC sublayer 352.

In one embodiment, the second bit block in the present application is generated by the PHY 301.

In one embodiment, the second bit block in the present application is generated by the PHY 351.

In one embodiment, the third bit block in the present application is generated by the RRC sublayer 306.

In one embodiment, the third bit block in the present application is generated by the MAC sublayer 302.

In one embodiment, the third bit block in the present application is generated by the MAC sublayer 352.

In one embodiment, the third bit block in the present application is generated by the PHY 301.

In one embodiment, the third bit block in the present application is generated by the PHY 351.

In one embodiment, the fourth bit block in the present application is generated by the SDAP sublayer 356.

In one embodiment, the fourth bit block in the present application is generated by the MAC sublayer 302.

In one embodiment, the fourth bit block in the present application is generated by the MAC sublayer 352.

In one embodiment, the fourth bit block in the present application is generated by the PHY 301.

In one embodiment, the fourth bit block in the present application is generated by the PHY 351.

In one embodiment, the first signaling in the present application is generated by the RRC sublayer 306.

In one embodiment, the first signaling in the present application is generated by the MAC sublayer 302.

In one embodiment, the first signaling in the present application is generated by the MAC sublayer 352.

In one embodiment, the first signaling in the present application is generated by the PHY 301.

In one embodiment, the first signaling in the present application is generated by the PHY 351.

In one embodiment, the second signaling in the present application is generated by the RRC sublayer 306.

In one embodiment, the second signaling in the present application is generated by the MAC sublayer 302.

In one embodiment, the second signaling in the present application is generated by the MAC sublayer 352.

In one embodiment, the second signaling in the present application is generated by the PHY 301.

In one embodiment, the second signaling in the present application is generated by the PHY 351.

In one embodiment, the first information in the present application is generated by the RRC sublayer 306.

In one embodiment, the first information in the present application is generated by the MAC sublayer 302.

In one embodiment, the first information in the present application is generated by the MAC sublayer 352.

In one embodiment, the first information in the present application is generated by the PHY 301.

In one embodiment, the first information in the present application is generated by the PHY 351.

In one embodiment, the first bit block in the present application is generated by the RRC sublayer 306.

In one embodiment, the first bit block in the present application is generated by the SDAP sublayer 356.

In one embodiment, the first bit block in the present application is generated by the MAC sublayer 302.

In one embodiment, the first bit block in the present application is generated by the MAC sublayer 352.

In one embodiment, the first bit block in the present application is generated by the PHY 301.

In one embodiment, the first bit block in the present application is generated by the PHY 351.

In one embodiment, the second bit block in the present application is generated by the RRC sublayer 306.

In one embodiment, the second bit block in the present application is generated by the MAC sublayer 302.

In one embodiment, the second bit block in the present application is generated by the MAC sublayer 352.

In one embodiment, the second bit block in the present application is generated by the PHY 301.

In one embodiment, the second bit block in the present application is generated by the PHY 351.

In one embodiment, the third bit block in the present application is generated by the RRC sublayer 306.

In one embodiment, the third bit block in the present application is generated by the MAC sublayer 302.

In one embodiment, the third bit block in the present application is generated by the MAC sublayer 352.

In one embodiment, the third bit block in the present application is generated by the PHY 301.

In one embodiment, the third bit block in the present application is generated by the PHY 351.

In one embodiment, the bit block generated by the second bit block in the present application is generated by the RRC sublayer 306.

In one embodiment, the bit block generated by the second bit block in the present application is generated by the MAC sublayer 302.

In one embodiment, the bit block generated by the second bit block in the present application is generated by the MAC sublayer 352.

In one embodiment, the bit block generated by the second bit block in the present application is generated by the PHY 301.

In one embodiment, the bit block generated by the second bit block in the present application is generated by the PHY 351.

In one embodiment, the fourth bit block in the present application is generated by the SDAP sublayer 356.

In one embodiment, the fourth bit block in the present application is generated by the MAC sublayer 302.

In one embodiment, the fourth bit block in the present application is generated by the MAC sublayer 352.

In one embodiment, the fourth bit block in the present application is generated by the PHY 301.

In one embodiment, the fourth bit block in the present application is generated by the PHY 351.

In one embodiment, the first signaling in the present application is generated by the PHY 301.

In one embodiment, the first signaling in the present application is generated by the PHY 351.

In one embodiment, the second signaling in the present application is generated by the RRC sublayer 306.

In one embodiment, the second signaling in the present application is generated by the MAC sublayer 302.

In one embodiment, the second signaling in the present application is generated by the PHY 301.

In one embodiment, the second signaling in the present application is generated by the PHY 351.

In one embodiment, the second signaling in the present application is generated by the RRC sublayer 306.

In one embodiment, the third signaling in the present application is generated by the MAC sublayer 302.

In one embodiment, the third signaling in the present application is generated by the PHY 301.

In one embodiment, the third signaling in the present application is generated by the PHY 351.

**Embodiment 4**

Embodiment 4 illustrates a schematic diagram of a first communication device and a second communication device according to the present application, as shown in FIG. 4. FIG. 4 is a block diagram of a first communication device 410 and a second communication device 450 in communication with each other in an access network.

The first communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from a core network is provided to the controller/processor 475. The controller/processor 475 provides functions of the L2 layer. In the transmission from the first communication device 410 to the second communication device 450, the controller/processor 475 provides header compression, encryption, packet segmentation and reordering, and multiplexing between a logical channel and a transport channel, and radio resource allocation of the second communication device 450 based on various priorities. The controller/processor 475 is also in charge of a retransmission of a lost packet and a signaling to the second communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 450 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts baseband multicarrier symbol streams which have gone through reception analog precoding/beamforming operations from time domain to frequency domain using FFT. In frequency domain, physical layer data signals and reference signals are de-multiplexed by the receiving processor 456, where the reference signals are used for channel estimation while data signals are processed in the multi-antenna receiving processor 458 by multi-antenna detection to recover any spatial stream targeting the second communication device 450. Symbols on each spatial stream are demodulated and recovered in the receiving processor 456 to generate a soft decision. Then the receiving processor 456 decodes and de-interleaves the soft decision to recover the higher-layer data and control signal transmitted by the first communication device 410 on the physical channel. Next, the higher-layer data and control signal are provided to the controller/processor 459. The controller/processor 459 provides functions of the L2 layer. The controller/processor 459 can be associated with a memory 460 that stores program code and data. The memory 460 can be called a computer readable medium. In the transmission from the first communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication node 410 to the second communication node 450, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also responsible for a retransmission of a lost packet, and a signaling to the first communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 first converts a baseband symbol stream provided by the multi-antenna transmitting processor 457 into a radio frequency symbol stream, and then provides the radio frequency symbol stream to the antenna 452.

In a transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data. The memory 476 can be called a computer readable medium. In the transmission between the second communication device 450 and the first communication device 410, the controller/processor 475 provides de-multiplexing between a transport channel and a logical channel, packet reassembling, decrypting, header decompression, control signal processing so as to recover a higher-layer packet from the second communication device (UE) 450. The higher-layer packet coming from the controller/processor 475 may be provided to the core network.

In one embodiment, the first node in the present application comprises the second communication device 450, and the second node in the present application comprises the first communication device 410.

In one subembodiment, the first node is a UE, and the second node is a UE.

In one subembodiment, the first node is a UE, and the second node is a relay node.

In one subembodiment, the first node is a relay node, and the second node is a UE.

In one subembodiment, the first node is a UE, and the second node is a base station.

In one subembodiment, the first node is a relay node, and the second node is a base station.

In one subembodiment, the second communication device 450 comprises: at least one controller/processor; the at least one controller/processor is in charge of HARQ operation.

In one subembodiment, the first communication device 410 comprises: at least one controller/processor; the at least one controller/processor is in charge of HARQ operation.

In one subembodiment, the first communication device 410 comprises: at least one controller/processor; the at least one controller/processor is in charge of error detections using ACK and/or NACK protocols to support HARQ operation.

In one embodiment, the second communication node 450 comprises at least one processor and at least one memory, the at least one memory comprises computer program codes; the at least one memory and the computer program codes are configured to be used in collaboration with the at least one processor. The second communication device 450 at least: receives the first signaling in the present application and the second signaling in the present application; and transmits the first signal in the present application in the sixth radio resource block in the present application, the first signal carrying the first bit block in the present application; the first signaling and the second signaling are respectively used to determine the first radio resource block in the present application and the second radio resource block in the present application; the first signaling is used to determine the first bit block; the first radio resource block and the second radio resource block are overlapping in time domain; the first radio resource block and the second radio resource block respectively correspond to the first index in the present application and the second index in the present application, the first index being different from the second index; the second radio resource block is reserved for the second bit block in the present application, the second bit block corresponding to the second index; the first radio resource block group in the present application comprises a radio resource block corresponding to the first index that is different from the first radio resource block; the first radio resource block group is used to determine whether the first signal carries a bit block generated by the second bit block; the first radio resource block and any radio resource block in the first radio resource block group are orthogonal in time domain.

In one subembodiment, the second communication device 450 corresponds to the first node in the present application.

In one embodiment, the second communication node 450 comprises a memory that stores a computer readable instruction program, the computer readable instruction program generates actions when executed by at least one processor, which include: receiving the first signaling in the present application and the second signaling in the present application; and transmitting the first signal in the present application in the sixth radio resource block in the present application, the first signal carrying the first bit block in the present application; the first signaling and the second signaling are respectively used to determine the first radio resource block in the present application and the second radio resource block in the present application; the first signaling is used to determine the first bit block; the first radio resource block and the second radio resource block are overlapping in time domain; the first radio resource block and the second radio resource block respectively correspond to the first index in the present application and the second index in the present application, the first index being different from the second index; the second radio resource block is reserved for the second bit block in the present application, the second bit block corresponding to the second index; the first radio resource block group in the present application comprises a radio resource block corresponding to the first index that is different from the first radio resource block; the first radio resource block group is used to determine whether the first signal carries a bit block generated by the second bit block; the first radio resource block and any radio resource block in the first radio resource block group are orthogonal in time domain.

In one subembodiment, the second communication device 450 corresponds to the first node in the present application.

In one embodiment, the first communication device 410 comprises at least one processor and at least one memory, the at least one memory comprises computer program codes; the at least one memory and the computer program codes are configured to be used in collaboration with the at least one processor. The first communication device 410 at least: transmits the first signaling in the present application and the second signaling in the present application; and receives the first signal in the present application in the sixth radio resource block in the present application, the first signal carrying the first bit block in the present application; the first signaling and the second signaling are respectively used to determine the first radio resource block in the present application and the second radio resource block in the present application; the first signaling is used to determine the first bit block; the first radio resource block and the second radio resource block are overlapping in time domain; the first radio resource block and the second radio resource block respectively correspond to the first index in the present application and the second index in the present application, the first index being different from the second index; the second radio resource block is reserved for the second bit block in the present application, the second bit block corresponding to the second index; the first radio resource block group in the present application comprises a radio resource block corresponding to the first index that is different from the first radio resource block; the first radio resource block group is used to determine whether the first signal carries a bit block generated by the second bit block; the first radio resource block and any radio resource block in the first radio resource block group are orthogonal in time domain.

In one subembodiment, the first communication device 410 corresponds to the second node in the present application.

In one embodiment, the first communication device 410 comprises a memory that stores a computer readable instruction program, the computer readable instruction program generates actions when executed by at least one processor, which include: transmitting the first signaling in the present application and the second signaling in the present application; and receiving the first signal in the present application in the sixth radio resource block in the present application, the first signal carrying the first bit block in the present application; the first signaling and the second signaling are respectively used to determine the first radio resource block in the present application and the second radio resource block in the present application; the first signaling is used to determine the first bit block; the first radio resource block and the second radio resource block are overlapping in time domain; the first radio resource block and the second radio resource block respectively correspond to the first index in the present application and the second index in the present application, the first index being different from the second index; the second radio resource block is reserved for the second bit block in the present application, the second bit block corresponding to the second index; the first radio resource block group in the present application comprises a radio resource block corresponding to the first index that is different from the first radio resource block; the first radio resource block group is used to determine whether the first signal carries a bit block generated by the second bit block; the first radio resource block and any radio resource block in the first radio resource block group are orthogonal in time domain.

In one subembodiment, the first communication device 410 corresponds to the second node in the present application.

In one embodiment, at least one of the antenna 452, the receiver 454, the multi-antenna receiving processor 458, the receiving processor 456, the controller/processor 459, the memory 460, or the data source 467 is used for receiving the first signaling in the present application.

In one embodiment, at least one of the antenna 420, the transmitter 418, the multi-antenna transmitting processor 471, the transmitting processor 416, the controller/processor 475 or the memory 476 is used for transmitting the first signaling in the present application.

In one embodiment, at least one of the antenna 452, the receiver 454, the multi-antenna receiving processor 458, the receiving processor 456, the controller/processor 459, the memory 460, or the data source 467 is used for receiving the second signaling in the present application.

In one embodiment, at least one of the antenna 420, the transmitter 418, the multi-antenna transmitting processor 471, the transmitting processor 416, the controller/processor 475 or the memory 476 is used for transmitting the second signaling in the present application.

In one embodiment, at least one of the antenna 452, the receiver 454, the multi-antenna receiving processor 458, the receiving processor 456, the controller/processor 459, the memory 460, or the data source 467 is used for receiving the first information in the present application.

In one embodiment, at least one of the antenna 420, the transmitter 418, the multi-antenna transmitting processor 471, the transmitting processor 416, the controller/processor 475 or the memory 476 is used for transmitting the first information in the present application.

In one embodiment, at least one of the antenna 452, the transmitter 454, the multi-antenna transmitting processor 458, the transmitting processor 468, the controller/processor 459, the memory 460, or the data source 467 is used for transmitting the first signal in the present application in the sixth radio resource block in the present application.

In one embodiment, at least one of the antenna 420, the receiver 418, the multi-antenna receiving processor 472, the receiving processor 470, the controller/processor 475 or the memory 476 is used for receiving the first signal in the present application in the sixth radio resource block in the present application.

In one embodiment, the second communication node 450 comprises at least one processor and at least one memory, the at least one memory comprises computer program codes; the at least one memory and the computer program codes are configured to be used in collaboration with the at least one processor. The second communication device 450 at least: receives the first signaling in the present application; and transmits the second signal in the present application in the second time-frequency resource sub-block in the present application, the second signal carrying the fourth bit block in the present application and the third bit block in the present application; and transmits the first signal in the present application in the first radio resource block in the present application, the first radio resource block being reserved for the first bit block in the present application, the first signal carrying the first bit block; the second time-frequency resource sub-block is a subset of the second time-frequency resource block in the present application, an end time of the second time-frequency resource sub-block is no later than the second time in the present application, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is the first time in the present application; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by the second bit block in the present application, the second bit block being used for generating the third bit block.

In one subembodiment, the second communication device 450 corresponds to the first node in the present application.

In one embodiment, the second communication node 450 comprises a memory that stores a computer readable instruction program, the computer readable instruction program generates actions when executed by at least one processor, which include: receiving the first signaling in the present application; and transmitting the second signal in the present application in the second time-frequency resource sub-block in the present application, the second signal carrying the fourth bit block in the present application and the third bit block in the present application; and transmitting the first signal in the present application in the first radio resource block in the present application, the first radio resource block being reserved for the first bit block in the present application, the first signal carrying the first bit block; the second time-frequency resource sub-block is a subset of the second time-frequency resource block in the present application, an end time of the second time-frequency resource sub-block is no later than the second time in the present application, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is the first time in the present application; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by the second bit block in the present application, the second bit block being used for generating the third bit block.

In one subembodiment, the second communication device 450 corresponds to the first node in the present application.

In one embodiment, the first communication device 410 comprises at least one processor and at least one memory, the at least one memory comprises computer program codes; the at least one memory and the computer program codes are configured to be used in collaboration with the at least one processor. The first communication device 410 at least: transmits the first signaling in the present application; and receives the second signal in the present application in the second time-frequency resource sub-block in the present application, the second signal carrying the fourth bit block in the present application and the third bit block in the present application; and receives the first signal in the present application in the first radio resource block in the present application, the first radio resource block being reserved for the first bit block in the present application, the first signal carrying the first bit block; the second time-frequency resource sub-block is a subset of the second time-frequency resource block in the present application, an end time of the second time-frequency resource sub-block is no later than the second time in the present application, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is the first time in the present application; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by the second bit block in the present application, the second bit block being used for generating the third bit block.

In one subembodiment, the first communication device 410 corresponds to the second node in the present application.

In one embodiment, the first communication device 410 comprises a memory that stores a computer readable instruction program, the computer readable instruction program generates actions when executed by at least one processor, which include: transmitting the first signaling in the present application; and receiving the second signal in the present application in the second time-frequency resource sub-block in the present application, the second signal carrying the fourth bit block in the present application and the third bit block in the present application; and receiving the first signal in the present application in the first radio resource block in the present application, the first radio resource block being reserved for the first bit block in the present application, the first signal carrying the first bit block; the second time-frequency resource sub-block is a subset of the second time-frequency resource block in the present application, an end time of the second time-frequency resource sub-block is no later than the second time in the present application, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is the first time in the present application; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by the second bit block in the present application, the second bit block being used for generating the third bit block.

In one subembodiment, the first communication device 410 corresponds to the second node in the present application.

In one embodiment, at least one of the antenna 452, the receiver 454, the multi-antenna receiving processor 458, the receiving processor 456, the controller/processor 459, the memory 460, or the data source 467 is used for receiving the first signaling in the present application.

In one embodiment, at least one of the antenna 420, the transmitter 418, the multi-antenna transmitting processor 471, the transmitting processor 416, the controller/processor 475 or the memory 476 is used for transmitting the first signaling in the present application.

In one embodiment, at least one of the antenna 452, the receiver 454, the multi-antenna receiving processor 458, the receiving processor 456, the controller/processor 459, the memory 460, or the data source 467 is used for receiving the second signaling in the present application.

In one embodiment, at least one of the antenna 420, the transmitter 418, the multi-antenna transmitting processor 471, the transmitting processor 416, the controller/processor 475 or the memory 476 is used for transmitting the second signaling in the present application.

In one embodiment, at least one of the antenna 452, the receiver 454, the multi-antenna receiving processor 458, the receiving processor 456, the controller/processor 459, the memory 460, or the data source 467 is used for receiving the third signaling in the present application.

In one embodiment, at least one of the antenna 420, the transmitter 418, the multi-antenna transmitting processor 471, the transmitting processor 416, the controller/processor 475 or the memory 476 is used for transmitting the third signaling in the present application.

In one embodiment, at least one of the antenna 452, the transmitter 454, the multi-antenna transmitting processor 458, the transmitting processor 468, the controller/processor 459, the memory 460, or the data source 467 is used for transmitting the second signal in the present application in the second time-frequency resource sub-block in the present application.

In one embodiment, at least one of the antenna 420, the receiver 418, the multi-antenna receiving processor 472, the receiving processor 470, the controller/processor 475 or the memory 476 is used for receiving the second signal in the present application in the second time-frequency resource sub-block in the present application.

In one embodiment, at least one of the antenna 452, the transmitter 454, the multi-antenna transmitting processor 458, the transmitting processor 468, the controller/processor 459, the memory 460, or the data source 467 is used for transmitting the first signal in the present application in the first radio resource block in the present application.

In one embodiment, at least one of the antenna 420, the receiver 418, the multi-antenna receiving processor 472, the receiving processor 470, the controller/processor 475 or the memory 476 is used for receiving the first signal in the present application in the first radio resource block in the present application.

### Embodiment 5A

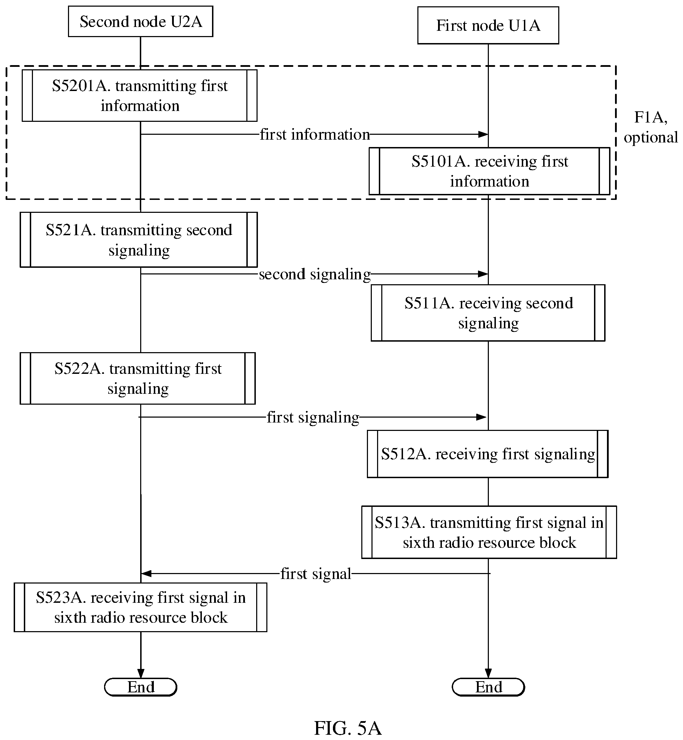

Embodiment 5A illustrates a flowchart of radio signal transmission according to one embodiment of the present application, as shown in FIG. 5A. In FIG. 5A, a **first node U1A** and a **second node U2A** are in communications via an air interface. Particularly, an order in which the two pairs of steps {S521A, S511A} and {S522A, S512A} illustrated in FIG. 5A are arranged does not imply a specific time-domain relation. In FIG. 5A, the part shown in the dotted-line box F1A is optional.

The **first node U1A** receives first information in step S5101A; and receives a second signaling in step S511A; receives a first signaling in step S512A; and transmits a first signal in a sixth radio resource block in step S513A.

The **second node U2A** transmits first information in step S5201A; transmits a second signaling in step S521A; and transmits a first signaling in step S522A; and receives a first signal in a sixth radio resource block in step S523A.

In Embodiment 5A, the first signal carries a first bit block; the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

In one subembodiment of Embodiment 5A, the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

In one subembodiment of Embodiment 5A, a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block; when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

In one subembodiment of Embodiment 5A, the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block; when the fourth radio resource block is overlapping with at least one radio resource block in the first radio resource block group in time domain, the first signal does not carry any bit block generated by the second bit block; when the fourth radio resource block is orthogonal with all radio resource blocks in the first radio resource block group, the first signal carries a bit block generated by the second bit block.

In one subembodiment of Embodiment 5A, the first information indicates that a bit block corresponding to a target index is allowed to be transmitted in a radio resource block corresponding to an index different from the target index.

In one embodiment, the first node U1A is the first node in the present application.

In one embodiment, the second node U2A is the second node in the present application.

In one embodiment, the first node U1A is a UE.

In one embodiment, the second node U2A is a base station.

In one embodiment, the second node U2A is a UE.

In one embodiment, an air interface between the second node U2A and the first node U1A is a Uu interface.

In one embodiment, an air interface between the second node U2A and the first node U1A includes a cellular link.

In one embodiment, an air interface between the second node U2A and the first node U1A is a PC5 interface.

In one embodiment, an air interface between the second node U2A and the first node U1A includes a sidelink.

In one embodiment, an air interface between the second node U2A and the first node U1A includes a radio interface between a base station and a UE.

In one embodiment, all radio resource blocks in a first radio resource block set are radio resource blocks that satisfy conditions in a first condition set.

In one embodiment, a first multicarrier symbol of an earliest radio resource block in a first radio resource block set satisfies conditions in a first condition set.

In one embodiment, each condition in the first condition set is related to UE processing capability.

In one embodiment, conditions in the first condition set include one or more timeline conditions related to the first radio resource block set, where the detailed description of the timeline conditions can be found in 3GPP TS38.213, Section 9.2.5.

In one embodiment, conditions in the first condition set include: a time interval between a first time and a start time of the first multicarrier symbol of the earliest radio resource block in the first radio resource block set is no smaller than a third value.

In one subembodiment, the third value is related to UE processing capability.

In one subembodiment, at least one of $T_{proc,1}^{mux}$, $T_{proc,release}^{mux}$, $T_{proc,CSI}^{mux}$ or $T_{proc,2}^{mux}$ is used to determine the third value, where the specific definition of the $T_{proc,1}^{mux}$, the $T_{proc,release}^{mux}$, the $T_{proc,CSI}^{mux}$ and the $T_{proc,2}^{mux}$ can be found in 3GPP TS38.213, Section 9.2.5.

In one subembodiment, the first time is an end time of a radio resource block used for transmitting a downlink physical channel.

In one subembodiment, the downlink physical channel includes a PDSCH or a PDCCH.

In one embodiment, a start time of the earliest radio resource block in the first radio resource block set is no later than a start time of any radio resource block other than the earliest radio resource block in the first radio resource block set.

In one embodiment, the first radio resource block set comprises the first radio resource block and the second radio resource block.

In one embodiment, the first radio resource block set comprises the first radio resource block, the second radio resource block and the radio resource block that corresponds to the first index and is different from the first radio resource block.

In one embodiment, the first radio resource block set comprises the first radio resource block, the second radio resource block, the third radio resource block and the radio resource block corresponding to the first index that is different from the first radio resource block.

In one embodiment, the first radio resource block set comprises the first radio resource block, the second radio resource block and all radio resource blocks comprised in the first radio resource block group.

In one embodiment, the first radio resource block set comprises the first radio resource block, the second radio resource block, the third radio resource block and all radio resource blocks comprised in the first radio resource block group.

In one embodiment, the first radio resource block set comprises the first radio resource block, the second radio resource block, the fourth radio resource block and all radio resource blocks comprised in the first radio resource block group.

In one embodiment, the first radio resource block set comprises the first radio resource block, the second radio resource block and the fourth radio resource block.

In one embodiment, the first radio resource block set comprises the fourth radio resource block and all radio resource blocks comprised in the first radio resource block group.

In one embodiment, a third radio resource block set comprises the fourth radio resource block and the first radio resource block group; each of timeline conditions related to the third radio resource block set is satisfied; the detailed description of the timeline conditions can be found in 3GPP TS38.213, Section 9.2.5.

In one embodiment, a third radio resource block set comprises the fourth radio resource block and the first radio resource block group; at least one of timeline conditions related to the third radio resource block set is not satisfied; the detailed description of the timeline conditions can be found in 3GPP TS38.213, Section 9.2.5.

In one embodiment, a first multicarrier symbol of an earliest radio resource block in a second radio resource block set satisfies conditions in a second condition set.

In one embodiment, conditions in the second condition set are related to UE processing capability.

In one embodiment, conditions in the second condition set include one or more timeline conditions related to the second radio resource block set, where the detailed definition of the timeline conditions can be found in 3GPP TS38.213, Section 9.2.5.

In one embodiment, conditions in the second condition set include: a time interval between a second time and a start time of the first multicarrier symbol of the earliest radio resource block in the second radio resource block set is no smaller than a fourth value.

In one subembodiment, the fourth value is related to UE processing capability.

In one subembodiment, at least one of $T_{proc,1}^{mux}$, $T_{proc,release}^{mux}$, $T_{proc,CSI}^{mux}$ or $T_{proc,2}^{mux}$ is used to determine the fourth value, where the specific definition of the $T_{proc,1}^{mux}$, the $T_{proc,release}^{mux}$, the $T_{proc,CSI}^{mux}$ and the $T_{proc,2}^{mux}$ can be found in 3GPP TS38.213, Section 9.2.5.

In one subembodiment, the second time is an end time of a radio resource block used for transmitting a downlink physical channel.

In one subembodiment, the downlink physical channel includes a PDSCH or a PDCCH.

In one embodiment, a start time of the earliest radio resource block in the second radio resource block set is no later than a start time of any radio resource block other than the earliest radio resource block in the second radio resource block set.

In one embodiment, the second radio resource block set comprises the second radio resource block and the radio resource block that corresponds to the first index and is different from the first radio resource block.

In one embodiment, the second radio resource block set comprises the second radio resource block, the third radio resource block and the radio resource block corresponding to the first index that is different from the first radio resource block.

In one embodiment, the second radio resource block set comprises the second radio resource block and all radio resource blocks comprised in the first radio resource block group.

In one embodiment, the second radio resource block set comprises the second radio resource block, the third radio resource block and all radio resource blocks comprised in the first radio resource block group.

In one embodiment, the first information is information indicated by a physical layer signaling.

In one embodiment, the first information is information indicated by a higher layer signaling.

In one embodiment, the first information is information indicated by an RRC layer signaling.

In one embodiment, the first information is information indicated by a field in an Information Element (IE).

In one embodiment, a value of a field in an RRC layer signaling is one of multiple candidate values; a candidate value among the multiple candidate values corresponds to the first information; another candidate value among the multiple candidate values corresponds to a piece of information other than the first information; the piece of information other than the first information indicates that a bit block corresponding to a target index is not allowed to be transmitted in a radio resource block corresponding to an index different from the target index.

In one embodiment, the target index is either the first index or the second index; the index different from the target index is the second index or the first index.

In one embodiment, the target index is the second index; the index different from the target index is the first index.

In one embodiment, the target index is the first index; the index different from the target index is the second index.

In one embodiment, a signaling indicating the index different from the target index is used to determine a radio resource block corresponding to the index different from the target index.

In one embodiment, a signaling indicating the index different from the target index indicates a radio resource block corresponding to the index different from the target index.

In one embodiment, a signaling indicating the target index is used to determine a bit block corresponding to the target index.

In one embodiment, the first signaling is used to determine a first bit block; a fifth value is used to determine the fifth radio resource block; the first bit block and the second bit block are used to determine the fifth value; when the fifth radio resource block is orthogonal in time domain with the radio resource block corresponding to the first index that is different from the first radio resource block, the sixth radio resource block is the fifth radio resource block, and the first signal carries a bit block generated by the second bit block; when the fifth radio resource block is overlapping in time domain with the radio resource block corresponding to the first index that is different from the first radio resource block, the sixth radio resource block is the first radio resource block, and the first signal does not carry any bit block generated by the second bit block; a bit block generated by the second bit block is transmitted in the radio resource block corresponding to the first index that is different from the first radio resource block.

In one subembodiment, the second radio resource block and the radio resource block that corresponds to the first index and is different from the first radio resource block are orthogonal in time domain.

In one subembodiment, the fifth radio resource block and the radio resource block corresponding to the first index that is different from the first radio resource block are overlapping in time domain; a third time is used to determine whether a bit block generated by the second bit block is transmitted in the radio resource block corresponding to the first index that is different from the first radio resource block.

In one subembodiment, the first bit block is used to determine a fourth time; the fourth time is no later than an end time of the radio resource block corresponding to the first index that is different from the first radio resource block in time domain; the fourth time is later than the third time.

In one subembodiment, the third time is an end time of a time-domain unit in which the first radio resource block is comprised.

In one subembodiment, the third time is an end time of the first radio resource block in time domain.

In one subembodiment, the third time is the fifth time in the present application.

In one subembodiment, a bit block generated by the first bit block comprises all or partial bits comprised in the first bit block.

In one subembodiment, a bit block generated by the first bit block is an output by partial or all bits in the first bit block through one or more of logic conjunction (logic and), logic disjunction (logic or), exclusive OR (XOR), deleting bits or zero-padding operations.

In one subembodiment, the first radio resource block and the fifth radio resource block are comprised in a same time-domain unit.

In one subembodiment, an end time of the fifth radio resource block in time domain is no later than a fifth time; an end time of the first radio resource block in time domain is used to determine the fifth time.

In one subembodiment, a transmitting end of the first signal performs calculation or/and judgment to determine that an end time of the fifth radio resource block in time domain is no later than a fifth time; an end time of the first radio resource block in time domain is used to determine the fifth time.

In one subembodiment, a receiving end of the first signal performs calculation or/and judgment to determine that an end time of the fifth radio resource block in time domain is no later than a fifth time; an end time of the first radio resource block in time domain is used to determine the fifth time.

In one embodiment, the steps marked by the dotted-line box F1A in FIG. 5A exist.

In one embodiment, the steps marked by the dotted-line box F1A in FIG. 5A do not exist.

## Embodiment 5B

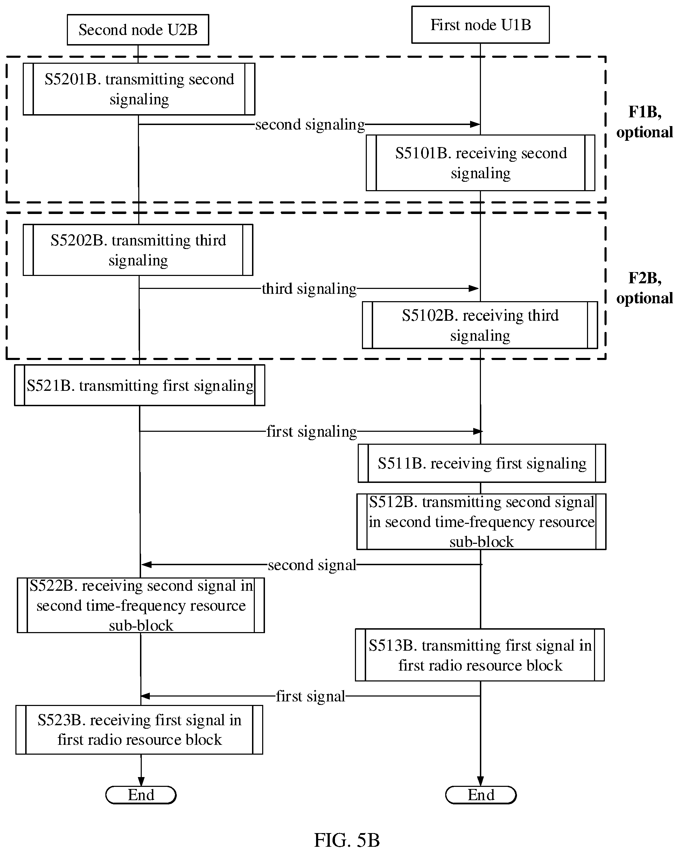

Embodiment 5B illustrates a flowchart of radio signal transmission according to one embodiment of the present application, as shown in FIG. 5B. In FIG. 5B, a **first node U1B** and a **second node U2B** are in communications via an air interface. In FIG. 5B, the section marked by the dotted-line box F1B and the section marked by the dotted-line box F2B are optional.

The **first node U1B** receives a second signaling in step S5101B; receives a third signaling in step S5102B; and receives a first signaling in step S511B; transmits a second signal in a second time-frequency resource sub-block in step 512B; and transmits a first signal in a first radio resource block in step S513B.

The **second node U2B** transmits a second signaling in step S5201B; transmits a third signaling in step S5202B; and transmits a first signaling in step S521B; receives a second signal in a second time-frequency resource sub-block in step 522B; and receives a first signal in a first radio resource block in step S523B.

In Embodiment 5B, the second signal carries a fourth bit block and a third bit block; the first radio resource block is reserved for a first bit block, the first signal carrying the first bit block; the second time-frequency resource sub-block is a subset of a second time-frequency resource block, an end time of the second time-frequency resource sub-block is no later than a second time, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is a first time; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by a second bit block, the second bit block being used for generating the third bit block; when the first time is no later than the second time, the first signal does not carry a bit block generated by the second bit block; when the first time is later than the second time, the first signal carries a bit block generated by the second bit block; the first bit block corresponds to a first index, while the second bit block corresponds to a second index, the first index being different from the second index; the second bit block comprises a HARQ-ACK; the third signaling indicates the second time-frequency resource block; the third signaling comprises scheduling information of the fourth bit block.

In one subembodiment of Embodiment 5, the first signaling indicates the first radio resource block.

In one subembodiment of Embodiment 5, the section marked by the dotted-line box F1 exists; the second signaling indicates the first radio resource block; the second signaling is different from the first signaling.

In one embodiment, the first node U1B is the first node in the present application.

In one embodiment, the second node U2B is the second node in the present application.

In one embodiment, the first node U1B is a UE.

In one embodiment, the second node U2B is a base station.

In one embodiment, the second node U2B is a UE.

In one embodiment, an air interface between the second node U2B and the first node U1B is a Uu interface.

In one embodiment, an air interface between the second node U2B and the first node U1B includes a cellular link.

In one embodiment, an air interface between the second node U2B and the first node U1B is a PC5 interface.

In one embodiment, an air interface between the second node U2B and the first node U1B includes a sidelink.

In one embodiment, an air interface between the second node U2B and the first node U1B includes a radio interface between a base station and a UE.

In one embodiment, the first node receives a second signaling group; the second signaling group comprises a positive integer number of signaling(s); the second signaling group is used to determine the second bit block, the second bit block comprising a HARQ-ACK related to the second signaling group.

In one embodiment, the first node receives a first signaling group; the first signaling group comprises a positive integer number of signaling(s); the first signaling group is used to determine the first bit block, the first bit block comprising a HARQ-ACK related to the first signaling group.

In one subembodiment, the first signaling group comprises the first signaling; the first signaling is a last signaling comprised in the first signaling group.

In one subembodiment, the first signaling group comprises the second signaling; the second signaling is a last signaling comprised in the first signaling group.

In one embodiment, the third signaling is an RRC layer signaling.

In one embodiment, the third signaling comprises one or more fields in an RRC layer signaling.

In one embodiment, the third signaling is dynamically configured.

In one embodiment, the third signaling is a physical layer signaling.

In one embodiment, the third signaling comprises a physical-layer signaling.

In one embodiment, the third signaling comprises a higher-layer signaling.

In one embodiment, the third signaling is an Uplink (UL) scheduling signaling.

In one embodiment, the third signaling is a DCI signaling.

In one embodiment, the third signaling comprises one or more fields in a DCI.

In one embodiment, the third signaling comprises one or more fields in an IE.

In one embodiment, the third signaling is transmitted in a downlink physical layer control channel (i.e., a downlink channel only capable of bearing physical layer signaling).

In one embodiment, the third signaling is DCI format 0_0, for the specific definition of the DCI format 0_0, refer to 3GPP TS38.212, Chapter 7.3.1.1.

In one embodiment, the third signaling is DCI format 0_1, for the specific definition of the DCI format 0_1, refer to 3GPP TS38.212, Chapter 7.3.1.1.

In one embodiment, the third signaling is DCI format 0_2, for the specific definition of the DCI format 0_2, refer to 3GPP TS38.212, Chapter 7.3.1.1.

In one embodiment, the third signaling comprises scheduling information of a PUSCH.

In one embodiment, the third signaling comprises scheduling information of a PSSCH.

In one embodiment, the third signaling is a signaling used for scheduling an uplink physical layer data channel.

In one embodiment, the third signaling is a signaling used for scheduling an uplink physical layer shared channel.

In one embodiment, the third signaling indicates the second index.

In one embodiment, the fourth bit block corresponds to the second index.

In one embodiment, the HARQ-ACK comprises a HARQ-ACK bit.

In one embodiment, the HARQ-ACK comprises multiple HARQ-ACK bits.

In one embodiment, the HARQ-ACK comprises a HARQ-ACK Codebook.

In one embodiment, the HARQ-ACK comprises a HARQ-ACK Sub-codebook.

In one embodiment, the HARQ-ACK comprises a positive integer number of bit(s).

In one embodiment, the HARQ-ACK comprises a positive integer number of bit(s), where each of the positive integer number of bit(s) indicates an ACK or a NACK.

In one embodiment, the HARQ-ACK is used for indicating whether a bit block is correctly received.

In one embodiment, the scheduling information comprises: at least one of time-domain resources occupied, frequency-domain resources occupied, a Modulation and Coding Scheme (MCS), configuration information of DeModulation Reference Signals (DMRS), a Hybrid Automatic Repeat reQuest (HARQ) process number, a Redundancy Version (RV), a New Data Indicator (NDI), a transmission antenna port, or a corresponding Transmission Configuration Indicator (TCI) state.

In one embodiment, the section marked by the dotted-line box F1B exists.

In one embodiment, the section marked by the dotted-line box F1B does not exist.

In one embodiment, the section marked by the dotted-line box F2B exists.

In one embodiment, the section marked by the dotted-line box F2B does not exist.

## Embodiment 6A

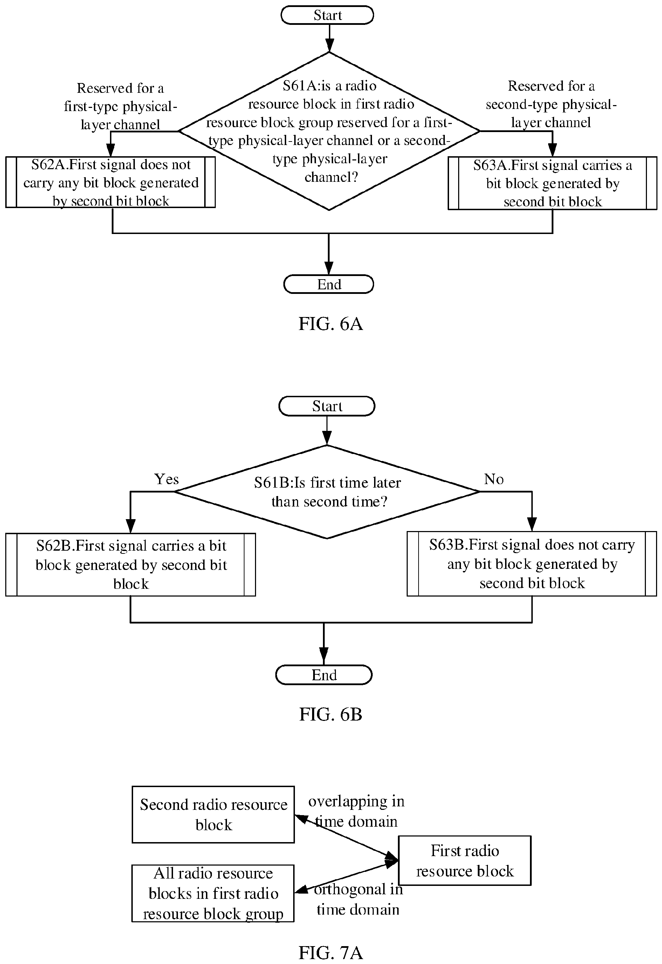

Embodiment 6A illustrates a schematic diagram of a procedure of determining whether a first signal carries a bit block generated by a second bit block depending on a radio resource block in a first radio resource block group according to one embodiment of the present application, as shown in FIG. 6A.

In Embodiment 6A, the first node in the present application determines in step S61A whether a radio resource block in a first radio resource block group is reserved for a first-type physical layer channel or a second-type physical layer channel; if the determination result is being reserved for a first-type physical layer channel, move forward to step S62A to determine that a first signal does not carry a bit block generated by a second bit block; if the determination result is being reserved for a second-type physical layer channel, move forward to step S63A to determine that a first signal carries a bit block generated by a second bit block.

In one embodiment, the second radio resource block and the radio resource block that corresponds to the first index and is different from the first radio resource block are at least overlapping in one multicarrier symbol in time domain.

In one embodiment, the phrase that the first radio resource block and a radio resource block in the first radio resource block group are respectively reserved for different types of physical-layer channels includes that the first radio resource block is reserved for a said first-type physical layer channel, while the radio resource block in the first radio resource block group is reserved for a said second-type physical layer channel; or, the first radio resource block is reserved for a said second-type physical layer channel, while the radio resource block in the first radio resource block group is reserved for a said first-type physical layer channel.

In one embodiment, the phrase that the first radio resource block and a radio resource block in the first radio resource block group are respectively reserved for different types of physical-layer channels includes that the first radio resource block comprises radio resources occupied by a said first-type physical layer channel, while the radio resource block in the first radio resource block group comprises radio resources occupied by a said second-type physical layer channel; or, the first radio resource block comprises radio resources occupied by a said second-type physical layer channel, while the radio resource block in the first radio resource block group comprises radio resources occupied by a said first-type physical layer channel.

In one embodiment, the phrase that the first radio resource block and a radio resource block in the first radio resource block group are respectively reserved for different types of physical-layer channels includes that the first radio resource block is reserved for a PUCCH, while the radio resource block in the first radio resource block group is reserved for a PUSCH; or, the first radio resource block is reserved for a PUSCH, while the radio resource block in the first radio resource block group is reserved for a PUCCH.

In one embodiment, the first radio resource block is reserved for a PUCCH, the first radio resource block comprising radio resources occupied by the PUCCH; the radio resource block corresponding to the first index that is different from the first radio resource block is reserved for a PUSCH, the radio resource block corresponding to the first index that is different from the first radio resource block comprising radio resources occupied by the PUSCH.

In one embodiment, the first radio resource block is reserved for a PUSCH, the first radio resource block comprising radio resources occupied by the PUSCH; the radio resource block corresponding to the first index that is different from the first radio resource block is reserved for a PUCCH, the radio resource block corresponding to the first index that is different from the first radio resource block comprising radio resources occupied by the PUCCH.

In one embodiment, when the first radio resource block is reserved for a said first-type physical layer channel, the first radio resource block comprises radio resources reserved for the said first-type physical layer channel.

In one embodiment, when the radio resource block in the first radio resource block group is reserved for a said second-type physical layer channel, the radio resource block in the first radio resource block group comprises radio resources reserved for the said second-type physical layer channel.

In one embodiment, when the first radio resource block is reserved for a said second-type physical layer channel, the first radio resource block comprises radio resources reserved for the said second-type physical layer channel.

In one embodiment, when the radio resource block in the first radio resource block group is reserved for a said first-type physical layer channel, the radio resource block in the first radio resource block group comprises radio resources reserved for the said first-type physical layer channel.

In one embodiment, the radio resource block in the first radio resource block group is the radio resource block corresponding to the first index that is different from the first radio resource block.

In one embodiment, the different types of physical-layer channels include a PUCCH and a PUSCH.

In one embodiment, the different types of physical-layer channels include a physical layer channel used for transmitting uplink information and a physical layer channel used for transmitting sidelink information.

In one embodiment, the first-type physical layer channel is a PUSCH.

In one embodiment, the second-type physical layer channel is a PUCCH.

In one embodiment, the first-type physical layer channel is a physical-layer channel used for transmitting uplink information.

In one embodiment, the second-type physical layer channel is a physical-layer channel used for transmitting sidelink information.

in one embodiment, the first-type physical layer channel and the second-type physical layer channel are respectively different types of physical-layer channels.

in one embodiment, the first-type physical layer channel and the second-type physical layer channel are respectively a PUSCH and a PUCCH.

in one embodiment, the first-type physical layer channel and the second-type physical layer channel are respectively a PUCCH and a PUSCH.

In one embodiment, the second radio resource block and the radio resource block that corresponds to the first index and is different from the first radio resource block are overlapping in time domain; the radio resource block in the first radio resource block group is the radio resource block corresponding to the first index that is different from the first radio resource block; one of the first radio resource block and the radio resource block that corresponds to the first index and is different from the first radio resource block is reserved for a said first-type physical-layer channel, and the other one of the first radio resource block and the radio resource block that corresponds to the first index and is different from the first radio resource block is reserved for a said second-type physical-layer channel; the radio resource block corresponding to the first index that is different from the first radio resource block is used to determine a target radio resource block; the target radio resource block is a radio resource block being reserved for the first-type physical layer channel between the first radio resource block and the radio resource block corresponding to the first index that is different from the first radio resource block; a bit block generated by the second bit block is transmitted in the target radio resource block.

In one embodiment, the second radio resource block and the radio resource block that corresponds to the first index and is different from the first radio resource block are overlapping in time domain; the radio resource block in the first radio resource block group is the radio resource block corresponding to the first index that is different from the first radio resource block; when the radio resource block corresponding to the first index that is different from the first radio resource block is reserved for a said first-type physical-layer channel, the first signal does not carry any bit block generated by the second bit block; when the radio resource block corresponding to the first index that is different from the first radio resource block is reserved for a said second-type physical-layer channel, the first signal carries a bit block generated by the second bit block.

In one embodiment, the second radio resource block and the radio resource block that corresponds to the first index and is different from the first radio resource block are overlapping in time domain; the radio resource block in the first radio resource block group is the radio resource block corresponding to the first index that is different from the first radio resource block; the sixth radio resource block is the first radio resource block; one of the first radio resource block and the radio resource block that corresponds to the first index and is different from the first radio resource block is reserved for a said first-type physical-layer channel, and the other one of the first radio resource block and the radio resource block that corresponds to the first index and is different from the first radio resource block is reserved for a said second-type physical-layer channel; when the radio resource block that corresponds to the first index and is different from the first radio resource block is reserved for a said first-type physical-layer channel, the first radio resource block is reserved for a said second-type physical-layer channel, where the first signal does not carry any bit block generated by the second bit block; when the radio resource block that corresponds to the first index and is different from the first radio resource block is reserved for a said second-type physical-layer channel, the first radio resource block is reserved for a said first-type physical-layer channel, where the first signal carries a bit block generated by the second bit block.

In one subembodiment, when the radio resource block that corresponds to the first index and is different from the first radio resource block is reserved for a said first-type physical-layer channel, the first radio resource block is reserved for a said second-type physical-layer channel, where the first signal does not carry any bit block generated by the second bit block, and a bit block generated by the second bit block is transmitted in the radio resource block corresponding to the first index that is different from the first radio resource block.

In one embodiment, the phrase of the first signal not carrying the bit block generated by the second bit block includes that the first signal does not carry any bit block generated by the second bit block.

In one embodiment, the phrase of the first signal not carrying the bit block generated by the second bit block includes that the first signal does not carry any bit block related to the second bit block.

## Embodiment 6B

Embodiment 6B illustrates a schematic diagram of a procedure of determining whether a first signal carries a bit block generated by a second bit block according to one embodiment of the present application, as shown in FIG. 6B.

In Embodiment 6B, the first node in the present application determines whether a first time is later than a second time in step S61B; if so, move forward to step S62B to determine that a first signal carries a bit block generated by a second bit block; if not, move forward to step S63B to determine that a first signal does not carry any bit block generated by a second bit block.

## Embodiment 7A

Embodiment 7A illustrates a schematic diagram of time-domain relations among a first radio resource block, a second radio resource block and a first radio resource block group according to one embodiment of the present application, as shown in FIG. 7A.

In Embodiment 7A, a first radio resource block and a second radio resource block are overlapping in time domain, while the first radio resource block is orthogonal with all radio resource blocks in a first radio resource block group in time domain.

In one embodiment, in time domain, the first radio resource block does not comprise any time-domain resource occupied by any radio resource block in the first radio resource block group; in time domain, each radio resource block in the first radio resource block group does not comprise time-domain resources occupied by the first radio resource block.

In one embodiment, the phrase of being orthogonal in time domain includes: being non-overlapping in time domain.

In one embodiment, the phrase of being orthogonal in time domain includes: being non-overlapping at any time in time domain.

In one embodiment, a radio resource block in the first radio resource block group and the second radio resource block are overlapping in time domain.

In one embodiment, a radio resource block in the first radio resource block group and the second radio resource block are non-overlapping in time domain.

In one embodiment, a radio resource block in the first radio resource block group and the second radio resource block are orthogonal in time domain.

In one embodiment, the second radio resource block and the radio resource block that corresponds to the first index and is different from the first radio resource block are overlapping in time domain.

In one embodiment, the second radio resource block and the radio resource block that corresponds to the first index and is different from the first radio resource block are non-overlapping in time domain.

In one embodiment, the second radio resource block and the radio resource block that corresponds to the first index and is different from the first radio resource block are orthogonal in time domain.

In one embodiment, the second radio resource block and each radio resource block in the first radio resource block group are orthogonal in time domain.

## Embodiment 7B

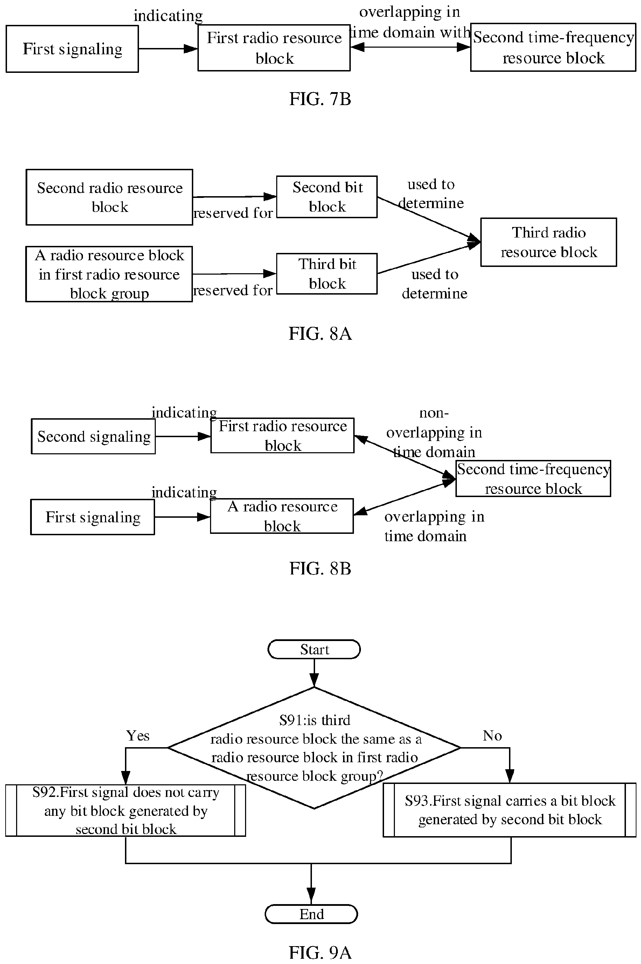

Embodiment 7B illustrates a schematic diagram of relations among a first signaling, a first radio resource block and a second time-frequency resource block according to one embodiment of the present application, as shown in FIG. 7B.

In Embodiment 7B, a first signaling indicates a first radio resource block; the first radio resource block and a second time-frequency resource block are overlapping in time domain.

In one embodiment, the radio resource block indicated by the first signaling is the first radio resource block.

In one embodiment, the first signaling indicates frequency-domain resources occupied by the first radio resource block.

In one embodiment, the first signaling indicates time-domain resources occupied by the first radio resource block.

In one embodiment, the first signaling explicitly indicates the first radio resource block.

In one embodiment, the first signaling implicitly indicates the first radio resource block.

In one embodiment, the first radio resource block and the second time-frequency resource block are partially overlapping in time domain.

In one embodiment, the first radio resource block comprises one or multiple multicarrier symbols comprised in the second time-frequency resource block.

In one embodiment, a number of bits comprised in the first bit block is used to determine a first radio resource block set; the first signaling indicates the first radio resource block in the first radio resource block set; the first radio resource block set comprises multiple radio resource blocks.

In one subembodiment, N number ranges respectively correspond to N radio resource block sets; the N radio resource block sets include the first radio resource block set, and the N number ranges include a first number range; the first number range corresponds to the first radio resource block set; a number of bits comprised in the first bit block belongs to the first number range.

In one embodiment, the first signal carries a bit block generated by the second bit block; the number of bits comprised in the first bit block and a number of bits comprised in a bit block generated by the second bit block are used together to determine a first radio resource block set; the first signaling indicates the first radio resource block in the first radio resource block set; the first radio resource block set comprises multiple radio resource blocks.

In one subembodiment, N number ranges respectively correspond to N radio resource block sets; the N radio resource block sets include the first radio resource block set, and the N number ranges include a first number range; the first number range corresponds to the first radio resource block set; a sum of the number of bits comprised in the first bit block and the number of bits comprised in a bit block generated by the second bit block belongs to the first number range.

In one embodiment, the first radio resource block set comprises a PUCCH Resource Set.

In one embodiment, the first radio resource block set comprises a PUCCH resource.

In one embodiment, the first bit block comprises a HARQ-ACK related to the first signaling.

In one embodiment, the first signaling comprises scheduling information of the first bit block.

In one subembodiment, the scheduling information comprises at least one of time-domain resources occupied, frequency-domain resources occupied, an MCS, configuration information of DMRS, a HARQ process ID, an RV, an NDI, a transmission antenna port or a corresponding TCI state.

## Embodiment 8A

Embodiment 8A illustrates a schematic diagram of relations among a second radio resource block, a second bit block, a radio resource block in a first radio resource block group, a third bit block and a third radio resource block according to one embodiment of the present application, as shown in FIG. 8A.

In Embodiment 8A, a second radio resource block is reserved for a second bit block, while a radio resource block in a first radio resource block group is reserved for a third bit block, the second bit block and the third bit block being used together to determine a third radio resource block.

In one embodiment, the radio resource block in the first radio resource block group is the radio resource block corresponding to the first index that is different from the first radio resource block; the radio resource block corresponding to the first index that is different from the first radio resource block is reserved for the third bit block.

In one embodiment, a transmitting end of the first signal receives a third signaling; the third signaling indicates the first index; the third signaling is used to determine the third bit block.

In one embodiment, a receiving end of the first signal transmits a third signaling; the third signaling indicates the first index; the third signaling is used to determine the third bit block.

In one embodiment, the third bit block comprises information indicating whether the third signaling is correctly received, or, the third bit block comprises information indicating whether a bit block scheduled by the third signaling is correctly received.

In one embodiment, the third signaling is an RRC layer signaling.

In one embodiment, the third signaling comprises one or more fields in an RRC layer signaling.

In one embodiment, the third signaling is dynamically configured.

In one embodiment, the third signaling is a physical layer signaling.

In one embodiment, the third signaling comprises one or more fields in a physical layer signaling.

In one embodiment, the third signaling is a higher-layer signaling.

In one embodiment, the third signaling comprises one or more fields in a Higher Layer signaling.

In one embodiment, the third signaling is DCI.

In one embodiment, the third signaling comprises one or more fields in a DCI.

In one embodiment, the third signaling comprises one or more fields in an IE.

In one embodiment, the third signaling is a Downlink (DL) scheduling signaling.

In one embodiment, the third bit block corresponds to the first index.

In one embodiment, the third bit block comprises a HARQ-ACK.

In one embodiment, the third bit block comprises a positive integer number of ACK(s) or NACK(s).

In one embodiment, the third bit block comprises a positive integer number of HARQ-ACK bit(s).

In one embodiment, the third bit block comprises a HARQ-ACK codebook.

In one embodiment, the third bit block comprises a HARQ-ACK of URLLC service type.

In one embodiment, the third bit block comprises a high-priority HARQ-ACK.

In one embodiment, the third bit block comprises a HARQ-ACK of priority index 1.

In one embodiment, the third bit block comprises a HARQ-ACK corresponding to the first index.

In one embodiment, a number of bits comprised in the third bit block is used to determine the radio resource block in the first radio resource block group.

In one embodiment, a number of bits comprised in the third bit block is used to determine the radio resource block corresponding to the first index that is different from the first radio resource block.

In one embodiment, the radio resource block corresponding to the first index that is different from the first radio resource block is reserved for a second physical layer channel; a number of bits comprised in the third bit block is smaller than or equal to a maximum number of information bits allowed to be transmitted in the second physical layer channel.

In one embodiment, the radio resource block corresponding to the first index that is different from the first radio resource block is reserved for a second physical layer channel; a number of bits comprised in the third bit block is equal to a maximum number of information bits allowed to be transmitted in the second physical layer channel.

In one embodiment, the radio resource block in the first radio resource block group is reserved for a second physical layer channel; a number of bits comprised in the third bit block is smaller than or equal to a maximum number of information bits allowed to be transmitted in the second physical layer channel.

In one embodiment, the radio resource block in the first radio resource block group is reserved for a second physical layer channel; a number of bits comprised in the third bit block is equal to a maximum number of information bits allowed to be transmitted in the second physical layer channel.

In one embodiment, N1 value range(s) respectively corresponds/correspond to N1 radio resource block set(s); a first value range is one of the N1 value range(s); a fourth radio resource block set is a radio resource block set corresponding to the first value range among the N1 radio resource block set(s); a number of bits comprised in the third bit block is equal to a value in the first value range; the third signaling indicates the radio resource block comprised in the first radio resource block group from the fourth radio resource block set.

In one subembodiment, the N1 radio resource block set(s) is(are respectively) N1 PUCCH resource set(s).

In one embodiment, a sum of a number of bits comprised in the second bit block and a number of bits comprised in the third bit block is used to determine the third radio resource block.

In one embodiment, a sum of a number of bits comprised in a fifth bit block and a number of bits comprised in the third bit block is used to determine the third radio resource block; the second bit block is used for generating the fifth bit block.

In one embodiment, N2 value range(s) respectively corresponds/correspond to N2 radio resource block set(s); a second value range is one of the N2 value range(s); a second radio resource block set is a radio resource block set corresponding to the second value range among the N2 radio resource block set(s); a second value is equal to a value in the second value range; the third signaling indicates the third radio resource block in the second radio resource block set; the second bit block and the third bit block are used together to determine the second value.

In one subembodiment, the second value is equal to a sum of a number of bits comprised in the second bit block and a number of bits comprised in the third bit block.

In one subembodiment, the second value is equal to a sum of a number of bits comprised in a fifth bit block and a number of bits comprised in the third bit block; the second bit block is used for generating the fifth bit block.

In one subembodiment, the N2 radio resource block set(s) is(are respectively) N2 PUCCH resource set(s).

In one embodiment, the fifth bit block is a bit block that comprises a HARQ-ACK comprised in the second bit block or a positive integer number of bit(s) generated by a HARQ-ACK comprised in the second bit block.

In one embodiment, the fifth bit block comprises all or partial bits comprised in the second bit block.

In one embodiment, the fifth bit block is an output by partial or all bits in the second bit block through one or more of logic conjunction (logic and), logic disjunction (logic or), exclusive OR (XOR), deleting bits or zero-padding operations.

In one embodiment, a transmitting end of the first signal performs calculation or/and judgment to determine the third radio resource block.

In one embodiment, a receiving end of the first signal performs calculation or/and judgment to determine the third radio resource block.

## Embodiment 8B

Embodiment 8B illustrates a schematic diagram of relations among a second signaling, a first radio resource block, a first signaling, a radio resource block and a second time-frequency resource block according to one embodiment of the present application, as shown in FIG. 8B.

In Embodiment 8B, a second signaling indicates a first radio resource block; the first radio resource block and a second time-frequency resource block are non-overlapping in time domain; a first signaling indicates a radio resource block; the radio resource block and the second time-frequency resource block are overlapping in time domain.

In one embodiment, the second signaling is an RRC layer signaling.

In one embodiment, the second signaling comprises one or more fields in an RRC layer signaling.

In one embodiment, the second signaling is dynamically configured.

In one embodiment, the second signaling is a physical layer signaling.

In one embodiment, the second signaling comprises a physical-layer signaling.

In one embodiment, the second signaling comprises a higher-layer signaling.

In one embodiment, the second signaling is an Uplink (UL) scheduling signaling.

In one embodiment, the second signaling is a Downlink (DL) scheduling signaling.

In one embodiment, the second signaling is DCI.

In one embodiment, the second signaling comprises one or more fields in a DCI.

In one embodiment, the second signaling comprises one or more fields in an IE.

In one embodiment, the second signaling is transmitted in a downlink physical layer control channel (i.e., a downlink channel only capable of bearing physical layer signaling).

In one embodiment, the second signaling is DCI format 1_0, for the specific definition of the DCI format 1_0, refer to 3GPP TS38.212, Chapter 7.3.1.2.

In one embodiment, the second signaling is DCI format 1_1, for the specific definition of the DCI format 1_1, refer to 3GPP TS38.212, Chapter 7.3.1.2.

In one embodiment, the second signaling is DCI format 1_2, for the specific definition of the DCI format 1_2, refer to 3GPP TS38.212, Chapter 7.3.1.2.

In one embodiment, the second signaling is a signaling used for scheduling a downlink physical layer data channel.

In one embodiment, the second signaling is a signaling used for scheduling a downlink physical layer shared channel.

In one embodiment, the second signaling comprises scheduling information of a PDSCH.

In one embodiment, the second signaling indicates a Semi-Persistent Scheduling (SPS) Release.

In one embodiment, the second signaling is DCI format 0_0, for the specific definition of the DCI format 0_0, refer to 3GPP TS38.212, Chapter 7.3.1.1.

In one embodiment, the second signaling is DCI format 0_1, for the specific definition of the DCI format 0_1, refer to 3GPP TS38.212, Chapter 7.3.1.1.

In one embodiment, the second signaling is DCI format 0_2, for the specific definition of the DCI format 0_2, refer to 3GPP TS38.212, Chapter 7.3.1.1.

In one embodiment, the second signaling comprises scheduling information of a PUSCH.

In one embodiment, the second signaling comprises scheduling information of a PSSCH.

In one embodiment, the second signaling is a signaling used for scheduling an uplink physical layer data channel.

In one embodiment, the second signaling is a signaling used for scheduling an uplink physical layer shared channel.

In one embodiment, the radio resource block indicated by the first signaling is reserved for a bit block other than the first bit block.

In one embodiment, the radio resource block indicated by the first signaling is not the first radio resource block.

In one embodiment, the first node in the present application receives the second signaling before receiving the first signaling.

In one embodiment, the second signaling and the first signaling are respectively different signalings.

In one embodiment, the second signaling and the first signaling are respectively different DCIs.

In one embodiment, the second signaling indicates frequency-domain resources occupied by the first radio resource block.

In one embodiment, the second signaling indicates time-domain resources occupied by the first radio resource block.

In one embodiment, the second signaling explicitly indicates the first radio resource block.

In one embodiment, the second signaling implicitly indicates the first radio resource block.

In one embodiment, a number of bits comprised in the first bit block is used to determine a first radio resource block set; the second signaling indicates the first radio resource block in the first radio resource block set; the first radio resource block set comprises multiple radio resource blocks.

In one subembodiment, N number ranges respectively correspond to N radio resource block sets; the N radio resource block sets include the first radio resource block set, and the N number ranges include a first number range; the first number range corresponds to the first radio resource block set; a number of bits comprised in the first bit block belongs to the first number range.

In one embodiment, the first signal carries a bit block generated by the second bit block; the number of bits comprised in the first bit block and a number of bits comprised in a bit block generated by the second bit block are used together to determine a first radio resource block set; the second signaling indicates the first radio resource block in the first radio resource block set; the first radio resource block set comprises multiple radio resource blocks.

In one subembodiment, N number ranges respectively correspond to N radio resource block sets; the N radio resource block sets include the first radio resource block set, and the N number ranges include a first number range; the first number range corresponds to the first radio resource block set; a sum of the number of bits comprised in the first bit block and the number of bits comprised in a bit block generated by the second bit block belongs to the first number range.

In one embodiment, the second signaling comprises scheduling information of the first bit block.

In one subembodiment, the scheduling information comprises at least one of time-domain resources occupied, frequency-domain resources occupied, an MCS, configuration information of DMRS, a HARQ process ID, an RV, an NDI, a transmission antenna port or a corresponding TCI state.

In one embodiment, the first bit block comprises a HARQ-ACK related to the second signaling.

In one embodiment, the radio resource block indicated by the first signaling is reserved for a bit block other than the first bit block; the first radio resource block and the second time-frequency resource block are respectively comprised in different slots in time domain.

In one embodiment, the radio resource block indicated by the first signaling is reserved for a bit block other than the first bit block; the first radio resource block and the second time-frequency resource block are respectively comprised in different sub-slots in time domain.

## Embodiment 9A

Embodiment 9A illustrates a schematic diagram of a procedure of determining whether a first signal carries a bit block generated by a second bit block depending on whether a third radio resource block is the same as a radio resource block in a first radio resource block group according to one embodiment of the present application, as shown in FIG. 9A.

In Embodiment 9A, the first node in the present application determines in step S91 whether a third radio resource block is the same as a radio resource block in a first radio resource block group; if the determination turns out to be yes, move forward to step S92 to determine that a first signal does not carry a bit block generated by a second bit block; if the determination turns out to be no, move forward to step S93 to determine that a first signal carries a bit block generated by a second bit block.

In one embodiment, the phrase that the third radio resource block is the same as a radio resource block in the first radio resource block group includes that the third radio resource block and the radio resource block in the first radio resource block group are reserved for a same physical layer channel.

In one embodiment, the phrase that the third radio resource block is the same as a radio resource block in the first radio resource block group includes that the third radio resource block and the radio resource block in the first radio resource block group both comprise radio resources reserved for a same physical layer channel.

In one embodiment, the phrase that the third radio resource block is different from a radio resource block in the first radio resource block group includes that the third radio resource block and the radio resource block in the first radio resource block group are respectively reserved for different physical layer channels.

In one embodiment, the phrase that the third radio resource block is different from a radio resource block in the first radio resource block group includes that the third radio resource block and the radio resource block in the first radio resource block group respectively comprise radio resources reserved for different physical layer channels.

In one embodiment, the phrase that the third radio resource block is the same as a radio resource block in the first radio resource block group includes that the third radio resource block is the radio resource block in the first radio resource block group.

In one embodiment, the phrase that the third radio resource block is different from a radio resource block in the first radio resource block group includes that the third radio resource block is not the radio resource block in the first radio resource block group.

In one embodiment, when time-domain resources occupied by the third radio resource block are the same as time-domain resources occupied by a radio resource block in the first radio resource block group, a bit block generated by the second bit block is transmitted in the third radio resource block, the first signal not carrying any bit block generated by the second bit block;

when time-domain resources occupied by the third radio resource block are different from time-domain resources occupied by a radio resource block in the first radio resource block group, the first signal carries a bit block generated by the second bit block.

In one embodiment, the sixth radio resource block is the first radio resource block; the first radio resource block group only comprises the radio resource block corresponding to the first index that is different from the first radio resource block; when the third radio resource block is the same as the radio resource block corresponding to the first index that is different from the first radio resource block, a bit block generated by the second bit block is transmitted in the third radio resource block, the first signal not carrying any bit block generated by the second bit block; when the third radio resource block is different from the radio resource block corresponding to the first index that is different from the first radio resource block, the first signal carries a bit block generated by the second bit block.

In one embodiment, when time-domain resources occupied by the third radio resource block are the same as time-domain resources occupied by the radio resource block corresponding to the first index that is different from the first radio resource block, a bit block generated by the second bit block is transmitted in the third radio resource block, the first signal not carrying any bit block generated by the second bit block; when time-domain resources occupied by the third radio resource block are different from time-domain resources occupied by the radio resource block corresponding to the first index that is different from the first radio resource block, the first signal carries a bit block generated by the second bit block.

In one embodiment, when all time-domain resources occupied by the third radio resource block are a subset of time-domain resources occupied by the radio resource block corresponding to the first index that is different from the first radio resource block, a bit block generated by the second bit block is transmitted in the third radio resource block, the first signal not carrying any bit block generated by the second bit block; when all or partial time-domain resources occupied by the third radio resource block are time-domain resources other than those occupied by the radio resource block corresponding to the first index that is different from the first radio resource block, the first signal carries a bit block generated by the second bit block.

## Embodiment 9B

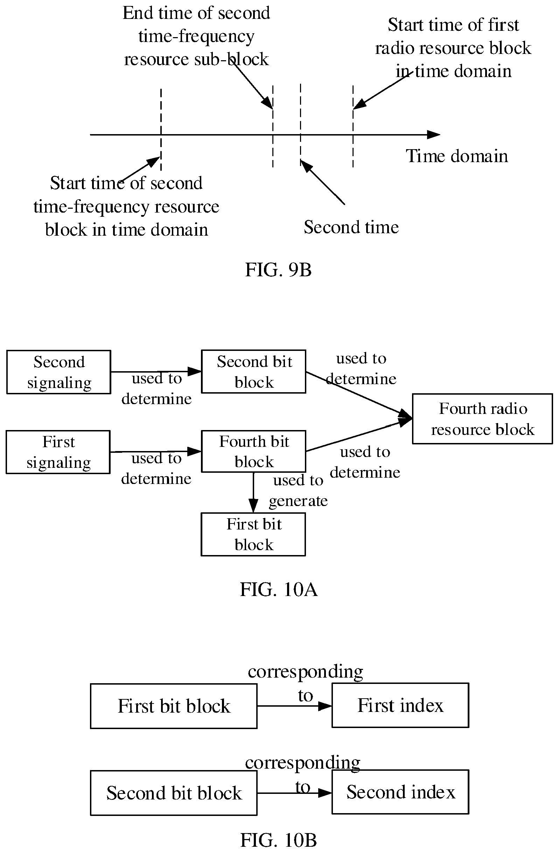

Embodiment 9B illustrates a schematic diagram of relations among a start time of a second time-frequency resource block in time domain, an end time of a second time-frequency resource sub-block, a second time and a start time of a first radio resource block in time domain according to one embodiment of the present application, as shown in FIG. 9B.

In Embodiment 9B, a start time of a second time-frequency resource block in time domain is earlier than a second time; an end time of the second time-frequency resource block is no later than the second time; a start time of a first radio resource block in time domain is no earlier than the second time.

In Embodiment 9B, time-domain resources occupied by the first signaling in the present application are used to determine the second time.

In one embodiment, a start time of the first radio resource block in time domain is later than the second time.

In one embodiment, a start time of the second time-frequency resource block in time domain is a start time of a first multicarrier symbol comprised in the second time-frequency resource block.

In one embodiment, a start time of the first radio resource block in time domain is a start time of a first multicarrier symbol comprised in the first radio resource block.

In one embodiment, an end time of the second time-frequency resource sub-block is an end time of a last multicarrier symbol comprised in the second time-frequency resource sub-block in time domain.

In one embodiment, an end time of time-domain resources occupied by the first signaling is used to determine the second time.

In one embodiment, an end time of a last multicarrier symbol comprised in time-domain resources occupied by the first signaling is used to determine the second time.

In one embodiment, a start time of time-domain resources occupied by the first signaling is used to determine the second time.

In one embodiment, the first signaling is transmitted in a first time-frequency resource block; an end time of the first time-frequency resource block is used to determine the second time.

In one embodiment, an end time of the second time-frequency resource sub-block is equal to the second time.

In one embodiment, an end time of the second time-frequency resource sub-block is earlier than the second time.

In one embodiment, the second time is an end time of time-domain resources occupied by the first signaling.

In one embodiment, the second time is after an end time of time-domain resources occupied by the first signaling; a time interval between the second time and an end time of time-domain resources occupied by the first signaling is equal to time-domain resources occupied by K multicarrier symbol(s); K is greater than 0.

In one embodiment, the first signaling is transmitted in a first time-frequency resource block; the second time is an end time of the first time-frequency resource block in time domain.

In one embodiment, the first signaling is transmitted in a first time-frequency resource block; the second time is after an end time of the first time-frequency resource block in time domain; a time interval between the second time and an end time of the first time-frequency resource block in time domain is equal to time-domain resources occupied by K multicarrier symbol(s); K is greater than 0.

In one embodiment, the first time-frequency resource block comprises a PDCCH.

In one embodiment, the first time-frequency resource block comprises a Physical Sidelink Control CHannel (PSCCH).

**Embodiment 10A**

Embodiment 10A illustrates a schematic diagram of relations among a second signaling, a second bit block, a first signaling and a fourth bit block, a first bit block and a fourth radio resource block according to one embodiment of the present application, as shown in FIG. 10A.

In Embodiment 10A, a second signaling is used to determine a second bit block, while a first signaling is used to determine a fourth bit block, the fourth bit block being used for generating a first bit block, and the second bit block and the fourth bit block being used together to determine a fourth radio resource block.

In one embodiment, the second bit block comprises information indicating whether the second signaling is correctly received, or, the second bit block comprises information indicating whether a bit block scheduled by the second signaling is correctly received.

In one embodiment, the first bit block is the fourth bit block; the second bit block and the first bit block are used together to determine a fourth radio resource block.

In one embodiment, the phrase that the first signaling is used to determine the fourth bit block includes that the fourth bit block comprises information indicating whether the first signaling is correctly received, or, the fourth bit block comprises information indicating whether a bit block scheduled by the first signaling is correctly received.

In one embodiment, the first bit block is the fourth bit block.

In one embodiment, the first bit block comprises the fourth bit block.

In one embodiment, the first bit block comprises all or partial bits comprised in the fourth bit block.

In one embodiment, the first bit block is an output by partial or all bits in the fourth bit block through one or more of logic conjunction (logic and), logic disjunction (logic or), exclusive OR (XOR), deleting bits or zero-padding operations.

In one embodiment, the fourth bit block comprises information indicating whether the first signaling is correctly received, or, the fourth bit block comprises information indicating whether a bit block scheduled by the first signaling is correctly received.

In one embodiment, a sum of a number of bits comprised in the second bit block and a number of bits comprised in the first bit block is used to determine the third radio resource block.

In one embodiment, a sum of a number of bits comprised in a fifth bit block and a number of bits comprised in the first bit block is used to determine the fourth radio resource block; the second bit block is used for generating the fifth bit block.

In one embodiment, N3 value range(s) respectively corresponds/correspond to N3 radio resource block set(s); a third value range is one of the N3 value range(s); a third radio resource block set is a radio resource block set corresponding to the third value range among the N3 radio resource block set(s); a third value is equal to a value in the third value range; the first signaling indicates the fourth radio resource block in the third radio resource block set; the second bit block and the fourth bit block are used together to determine the third value.

In one subembodiment, the third value is equal to a sum of a number of bits comprised in the second bit block and a number of bits comprised in the first bit block.

In one subembodiment, the third value is equal to a sum of a number of bits comprised in a fifth bit block and a number of bits comprised in the first bit block; the second bit block is used for generating the fifth bit block.

In one subembodiment, the N3 radio resource block set(s) is(are respectively) N3 PUCCH resource set(s).

In one embodiment, a transmitting end of the first signal performs calculation or/and judgment to determine the fourth radio resource block.

In one embodiment, a receiving end of the first signal performs calculation or/and judgment to determine the fourth radio resource block.

## Embodiment 10B

Embodiment 10B illustrates a schematic diagram of relations among a first bit block, a second bit block, a first index and a second index according to one embodiment of the present application, as shown in FIG. 10B.

In Embodiment 10B, a first bit block corresponds to a first index, while a second bit block corresponds to a second index, the first index being different from the second index.

In one embodiment, the first index and the second index are both priority indexes.

In one embodiment, the first index and the second index are both CORESETPoolIndexes.

In one embodiment, the first index and the second index respectively indicate indexes of different Service Types.

In one embodiment, the first index and the second index respectively indicate different priorities.

In one embodiment, the different service types include URLLC and eMBB.

In one embodiment, the first index and the second index respectively indicate transmissions on different links.

In one embodiment, the first index and the second index respectively correspond to different time windows.

In one embodiment, both the first bit block and the second bit block are transmitted in different time windows.

In one embodiment, the different time windows are different slots.

In one embodiment, the different time windows are different sub-slots.

In one embodiment, the different links include Uplink and Sidelink.

In one embodiment, a priority index corresponding to the first bit block is equal to 1.

In one embodiment, a priority index corresponding to the second bit block is equal to 0.

In one embodiment, a priority index corresponding to the first bit block is equal to 0.

In one embodiment, a priority index corresponding to the second bit block is equal to 1.

In one embodiment, the first bit block is a first-type bit block, while the second bit block is a second-type bit block; the first index and the second index respectively indicate the first type and the second type.

In one subembodiment, the first type and the second type are respectively high priority and low priority.

In one subembodiment, the first type and the second type are respectively low priority and high priority.

In one subembodiment, the first type and the second type are respectively URLLC and eMBB.

In one subembodiment, the first type and the second type are respectively eMBB and URLLC.

In one embodiment, the first signaling in the present application indicates the first radio resource block in the present application; the first signaling indicates the first index.

In one embodiment, the first signaling in the present application indicates the first radio resource block in the present application; the first signaling indicates the first index, and the first signaling comprises scheduling information of the first bit block.

In one embodiment, the first signaling in the present application indicates the first radio resource block in the present application; the first signaling indicates the first index; the first signaling comprises scheduling information of a sixth bit block; the first bit block comprises a HARQ-ACK indicating whether the sixth bit block is correctly received.

In one embodiment, the first signaling in the present application indicates the first radio resource block in the present application; the first signaling indicates the first index; the first signaling is used to indicate a Semi-Persistent Scheduling (SPS) Release; the first bit block comprises a HARQ-ACK indicating whether the first signaling is correctly received.

In one embodiment, the first node in the present application receives a fourth signaling; the fourth signaling indicates the second index; the second bit block comprises a HARQ-ACK related to the fourth signaling.

In one embodiment, the first node in the present application receives a fourth signaling; the fourth signaling indicates the second index; the fourth signaling comprises scheduling information of a fifth bit block; the second bit block comprises a HARQ-ACK indicating whether the fifth bit block is correctly received.

In one embodiment, the first node in the present application receives a fourth signaling; the fourth signaling indicates the second index; the fourth signaling is used to indicate a Semi-Persistent Scheduling (SPS) Release; the second bit block comprises a HARQ-ACK indicating whether the fourth signaling is correctly received.

In one embodiment, the first node in the present application receives a fourth signaling; the fourth signaling indicates the second index, and the fourth signaling comprises scheduling information of the second bit block.

In one embodiment, the fourth signaling is an RRC layer signaling.

In one embodiment, the fourth signaling comprises one or more fields in an RRC layer signaling.

In one embodiment, the fourth signaling is a physical layer signaling.

In one embodiment, the fourth signaling comprises a physical-layer signaling.

In one embodiment, the fourth signaling is a higher-layer signaling.

In one embodiment, the fourth signaling is DCI.

In one embodiment, the fourth signaling comprises one or more fields in a DCI.

In one embodiment, the fourth signaling comprises one or more fields in an IE.

In one embodiment, a Radio Network Temporary Identity (RNTI) of the fourth signaling implicitly indicates the second index.

In one embodiment, a signaling Format of the fourth signaling implicitly indicates the second index.

In one embodiment, the fourth signaling comprises a Priority Indicator field; the Priority Indicator field comprised in the fourth signaling indicates the second index.

In one embodiment, the second bit block is used for generating the third bit block in the present application; the third bit block corresponds to the second index.

In one embodiment, the first signaling in the present application comprises a Priority Indicator field; the Priority Indicator field indicates a priority index; the Priority Indicator field comprised in the first signaling indicates the first index.

In one embodiment, the third signaling in the present application comprises a Priority Indicator field; the Priority Indicator field indicates a priority index; the Priority Indicator field comprised in the third signaling indicates the second index.

In one embodiment, the first index is indicated by an RRC signaling.

In one embodiment, the first index is indicated by a physical layer signaling.

In one embodiment, the first index is indicated by a higher layer signaling.

In one embodiment, the second index is indicated by an RRC signaling.

In one embodiment, the second index is indicated by a physical layer signaling.

In one embodiment, the second index is indicated by a higher layer signaling.

In one embodiment, the first signaling in the present application indicates the first radio resource block in the present application; an RNTI of the first signaling implicitly indicates the first index.

In one embodiment, an RNTI of the third signaling in the present application implicitly indicates the second index.

In one embodiment, the first signaling in the present application indicates the first radio resource block in the present application; a signaling format of the first signaling implicitly indicates the first index.

In one embodiment, a signaling format of the third signaling in the present application implicitly indicates the second index.

## Embodiment 11A

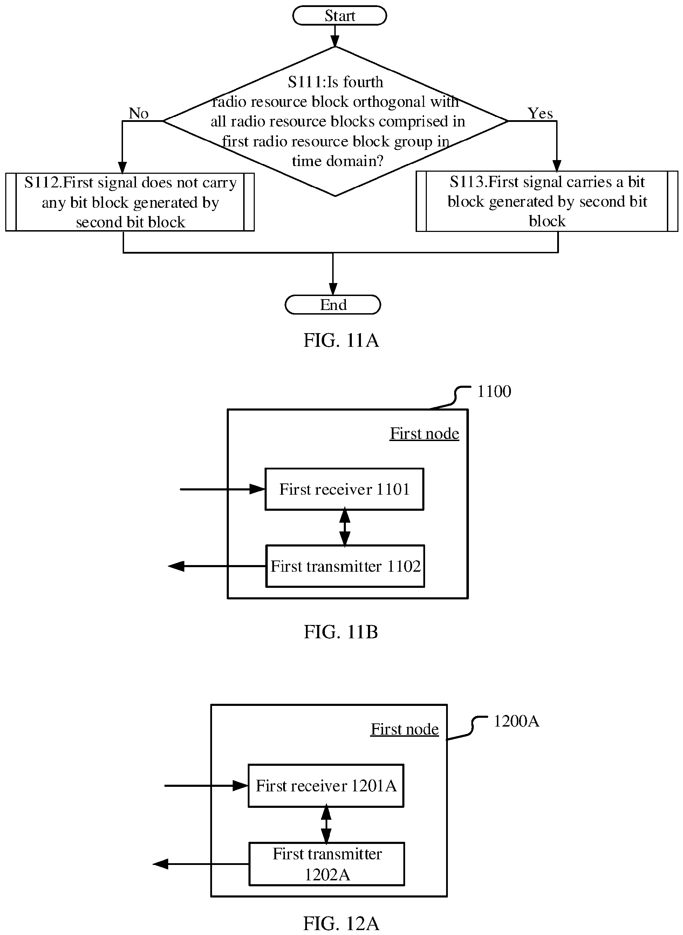

Embodiment 11A illustrates a schematic diagram of a procedure of determining whether a first signal carries a bit block generated by a second bit block depending on whether a fourth radio resource block is orthogonal in time domain with each radio resource block in a first radio resource block group according to one embodiment of the present application, as shown in FIG. 11A.

In Embodiment 11A, the first node in the present application determines whether a fourth radio resource block is orthogonal with each radio resource block in a first radio resource block group in time domain in step S111; if the determination turns out to be no, move forward to step S112 to determine that a first signal does not carry a bit block generated by a second bit block; if the determination turns out to be yes, move forward to step S113 to determine that a first signal carries a bit block generated by a second bit block.

In one embodiment, the first radio resource block group only comprises the radio resource block corresponding to the first index that is different from the first radio resource block; when the fourth radio resource block is overlapping with the radio resource block corresponding to the first index that is different from the first radio resource block, the first signal does not carry any bit block generated by the second bit block; when the fourth radio resource block is orthogonal with the radio resource block corresponding to the first index that is different from the first radio resource block, the radio resource block determined by the first signaling is the fourth radio resource block, and the first signal carries a bit block generated by the second bit block.

In one embodiment, a transmitting end of the first signal drops signal transmitting in the second radio resource block.

In one embodiment, the sixth radio resource block is the first radio resource block, or, the sixth radio resource block is the fourth radio resource block.

In one embodiment, when the fourth radio resource block is overlapping with at least one radio resource block in the first radio resource block group in time domain, the sixth radio resource block is the first radio resource block, and the first signal does not carry any bit block generated by the second bit block; when the fourth radio resource block is orthogonal with all radio resource blocks in the first radio resource block group in time domain, the sixth radio resource block is the fourth radio resource block, and the first signal carries a bit block generated by the second bit block.

In one embodiment, the fourth radio resource block and at least one radio resource block in the first radio resource block group are overlapping in time domain; the sixth radio resource block is the first radio resource block, the first signal not carrying any bit block generated by the second bit block; a bit block generated by the second bit block is transmitted in the radio resource block corresponding to the first index that is different from the first radio resource block.

In one embodiment, the fourth radio resource block and at least one radio resource block in the first radio resource block group are overlapping in time domain; the sixth radio resource block is the first radio resource block, the first signal not carrying any bit block generated by the second bit block; a bit block generated by the second bit block is not transmitted in the radio resource block corresponding to the first index that is different from the first radio resource block.

In one embodiment, the first radio resource block and the fourth radio resource block are comprised in a same time-domain unit.

In one embodiment, an end time of the fourth radio resource block in time domain is no later than a fifth time; an end time of the first radio resource block in time domain is used to determine the fifth time.

In one embodiment, a transmitting end of the first signal performs calculation or/and judgment to determine that an end time of the fourth radio resource block in time domain is no later than a fifth time; an end time of the first radio resource block in time domain is used to determine the fifth time.

In one embodiment, a receiving end of the first signal performs calculation or/and judgment to determine that an end time of the fourth radio resource block in time domain is no later than a fifth time; an end time of the first radio resource block in time domain is used to determine the fifth time.

In one embodiment, the fifth time in the present application is an end time of the first radio resource block in time domain.

In one embodiment, the fifth time in the present application is after an end time of the first radio resource block in time domain; a time interval between the fifth time and the end time of the first radio resource block in time domain is equal to time-domain resources occupied by K multicarrier symbol(s); where K is a positive integer.

**Embodiment 11B**

Embodiment 11B illustrates a structure block diagram a processing device in a first node according to one embodiment of the present application, as shown in FIG. 11B. In FIG. 11B, a processing device 1100 in the first node comprises a first receiver 1101 and a first transmitter 1102.

In one embodiment, the first node 1100 is a UE.

In one embodiment, the first node 1100 is a relay node.

In one embodiment, the first node 1100 is vehicle-mounted communication equipment.

In one embodiment, the first node 1100 is a UE supporting V2X communications.

In one embodiment, the first node 1100 is a relay node supporting V2X communications.

In one embodiment, the first receiver 1101 comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1101 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1101 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1101 comprises at least the first three of the antenna 452, the receiver 454, the multi-antenna receiving processor 458, the receiving processor 456, the controller/processor 459, the memory 460 and the data source 467 in FIG. 4 of the present application.

In one embodiment, the first receiver 1101 comprises at least the first two of the antenna 452, the receiver 454, the multi-antenna receiving processor 458, the receiving processor 456, the controller/processor 459, the memory 460 and the data source 467 in FIG. 4 of the present application.

In one embodiment, the first transmitter 1102 comprises at least one of the antenna 452, the transmitter 454, the multi-antenna transmitting processor 457, the transmitting processor 468, the controller/processor 459, the memory 460 or the data source 467 in FIG. 4 of the present application.

In one embodiment, the first transmitter 1102 comprises at least the first five of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1102 comprises at least the first four of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1102 comprises at least the first three of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1102 comprises at least the first two of the antenna 452, the transmitter 454, the multi-antenna transmitting processor 457, the transmitting processor 468, the controller/processor 459, the memory 460 and the data source 467 in FIG. 4 of the present application.

In Embodiment 11B, the first receiver 1101 receives a first signaling; the first transmitter 1102 transmits a second signal in a second time-frequency resource sub-block, the second signal carrying a fourth bit block and a third bit block; and the first transmitter 1102 transmits a first signal in a first radio resource block, the first radio resource block being reserved for a first bit block, the first signal carrying the first bit block; the second time-frequency resource sub-block is a subset of a second time-frequency resource block, an end time of the second time-frequency resource sub-block is no later than a second time, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is a first time; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by a second bit block, the second bit block being used for generating the third bit block.

In one embodiment, when the first time is no later than the second time, the first signal does not carry a bit block generated by the second bit block; when the first time is later than the second time, the first signal carries a bit block generated by the second bit block.

In one embodiment, the first signaling indicates the first radio resource block.

In one embodiment, the first receiver 1101 receives a second signaling; the second signaling indicates the first radio resource block; the second signaling is different from the first signaling.

In one embodiment, the first bit block corresponds to a first index, while the second bit block corresponds to a second index, the first index being different from the second index.

In one embodiment, the second bit block comprises a HARQ-ACK.

In one embodiment, the first receiver 1101 receives a third signaling; the third signaling indicates the second time-frequency resource block; the third signaling comprises scheduling information of the fourth bit block.

In one embodiment, a second time-frequency resource block comprises a PUSCH; a first radio resource block comprises a PUCCH; a first bit block corresponds to a first index, while a second bit block corresponds to a second index, the first index and the second index respectively being different priority indexes; the first receiver 1101 receives a first signaling; the first transmitter 1102 transmits in a second time-frequency resource sub-block part of a second signal that is mapped in the second time-frequency resource sub-block, the second signal carrying a fourth bit block and a third bit block; and the first transmitter 1102 transmits a first signal in the PUCCH, the PUCCH being reserved for the first bit block, the first signal carrying the first bit block; the second time-frequency resource sub-block is a subset of time-frequency resources occupied by the PUSCH, an end time of the second time-frequency resource sub-block is no later than a second time, and an end time of time-domain resources occupied by the first signaling is used to determine the second time; the PUSCH is reserved for the fourth bit block; the first signaling indicates the PUCCH, the PUSCH and the PUCCH being overlapping in time domain; an end time of time-frequency resources in the PUSCH being allocated to the third bit block is a first time; a start time of the PUCCH in time domain is no earlier than the second time; when the first time is no later than the second time, the first signal does not carry a bit block generated by a second bit block; when the first time is later than the second time, the first signal carries a bit block generated by the second bit block; the second bit block is used for generating the third bit block; the third bit block comprises a HARQ-ACK; the fourth bit block comprises a TB or a CBG; the first bit block comprises a HARQ-ACK.

In one subembodiment, the first index and the second index are respectively priority index 0 and priority index 1.

In one subembodiment, the first index and the second index are respectively priority index 1 and priority index 0.

In one subembodiment, the first receiver 1101 receives a third signaling; the third signaling indicates the PUSCH; the third signaling indicates the second index.

In one subembodiment, the first signaling indicates the first index.

In one subembodiment, the first transmitter 1102 drops transmitting the second signal in time-frequency resources in the PUSCH other than the second time-frequency resource sub-block.

In one subembodiment, the first signaling comprises one or more fields in a DCI.

In one embodiment, a second time-frequency resource block comprises a PUSCH; a first radio resource block comprises another PUSCH; a first bit block corresponds to a first index, while a second bit block corresponds to a second index, the first index and the second index respectively being different priority indexes; the first receiver 1101 receives a first signaling; the first transmitter 1102 transmits in a second time-frequency resource sub-block part of a second signal that is mapped in the second time-frequency resource sub-block, the second signal carrying a fourth bit block and a third bit block; and the first transmitter 1102 transmits a first signal in the other PUSCH, the other PUSCH being reserved for the first bit block, the first signal carrying the first bit block; the second time-frequency resource sub-block is a subset of time-frequency resources occupied by the PUSCH, an end time of the second time-frequency resource sub-block is no later than a second time, and an end time of time-domain resources occupied by the first signaling is used to determine the second time; the PUSCH is reserved for the fourth bit block; the first signaling indicates the other PUSCH, the PUSCH and the other PUSCH being overlapping in time domain; an end time of time-frequency resources in the PUSCH being allocated to the third bit block is a first time; a start time of the other PUSCH in time domain is no earlier than the second time; when the first time is no later than the second time, the first signal does not carry a bit block generated by a second bit block; when the first time is later than the second time, the first signal carries a bit block generated by the second bit block; the second bit block is used for generating the third bit block; the third bit block comprises a HARQ-ACK; the fourth bit block comprises a TB or a CBG; the first bit block comprises a TB or a CBG.

In one subembodiment, the first index and the second index are respectively priority index 0 and priority index 1.

In one subembodiment, the first index and the second index are respectively priority index 1 and priority index 0.

In one subembodiment, the first receiver 1101 receives a third signaling; the third signaling indicates the PUSCH; the third signaling indicates the second index.

In one subembodiment, the first signaling indicates the first index.

In one subembodiment, the first transmitter 1102 drops transmitting the second signal in time-frequency resources in the PUSCH other than the second time-frequency resource sub-block.

In one subembodiment, the first signaling comprises one or more fields in a DCI.

## Embodiment 12A

Embodiment 12A illustrates a structure block diagram of a processing device in a first node according to one embodiment of the present application, as shown in FIG. 12A. In FIG. 12A, a processing device 1200A in a first node comprises a first receiver 1201A and a first transmitter 1202A.

In one embodiment, the first node 1200A is a UE.

In one embodiment, the first node 1200A is a relay node.

In one embodiment, the first node 1200A is vehicle-mounted communication equipment.

In one embodiment, the first node 1200A is a UE supporting V2X communications.

In one embodiment, the first node 1200A is a relay node supporting V2X communications.

In one embodiment, the first receiver 1201A comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1201A comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1201A comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1201A comprises at least the first three of the antenna 452, the receiver 454, the multi-antenna receiving processor 458, the receiving processor 456, the controller/processor 459, the memory 460 and the data source 467 in FIG. 4 of the present application.

In one embodiment, the first receiver 1201A comprises at least the first two of the antenna 452, the receiver 454, the multi-antenna receiving processor 458, the receiving processor 456, the controller/processor 459, the memory 460 and the data source 467 in FIG. 4 of the present application.

In one embodiment, the first transmitter 1202A comprises at least one of the antenna 452, the transmitter 454, the multi-antenna transmitting processor 457, the transmitting processor 468, the controller/processor 459, the memory 460 or the data source 467 in FIG. 4 of the present application.

In one embodiment, the first transmitter 1202A comprises at least the first five of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1202A comprises at least the first four of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1202A comprises at least the first three of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1202A comprises at least the first two of the antenna 452, the transmitter 454, the multi-antenna transmitting processor 457, the transmitting processor 468, the controller/processor 459, the memory 460 and the data source 467 in FIG. 4 of the present application.

In Embodiment 12A, the first receiver 1201A receives a first signaling and a second signaling; the first transmitter 1202A transmits a first signal in a sixth radio resource block, the first signal carrying a first bit block; the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

In one embodiment, the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

In one embodiment, a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block.

In one embodiment, when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

In one embodiment, the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block.

In one embodiment, when the fourth radio resource block is overlapping with at least one radio resource block in the first radio resource block group in time domain, the first signal does not carry any bit block generated by the second bit block; when the fourth radio resource block is orthogonal with all radio resource blocks in the first radio resource block group, the first signal carries a bit block generated by the second bit block.

In one embodiment, the first receiver 1201A receives first information; herein, the first information indicates that a bit block corresponding to a target index is allowed to be transmitted in a radio resource block corresponding to an index different from the target index.

In one embodiment, the first radio resource block group comprises the radio resource block corresponding to the first index that is different from the first radio resource block; the first radio resource block and the radio resource block corresponding to the first index that is different from the first radio resource block are respectively reserved for a PUCCH and a PUSCH, or, the first radio resource block and the radio resource block corresponding to the first index that is different from the first radio resource block are respectively reserved for a PUSCH and a PUCCH; the second radio resource block is reserved for another PUCCH; the PUCCH and the PUSCH are orthogonal in time domain; the other PUCCH and the PUSCH are overlapping in time domain, while the other PUCCH and the PUCCH are overlapping in time domain; a bit block generated by the second bit block is transmitted in the PUSCH; the PUCCH is not used for transmitting a bit block generated by the second bit block.

In one subembodiment, the PUSCH is a PUSCH of priority index 1.

In one subembodiment, the PUCCH is a PUCCH of priority index 1.

In one subembodiment, the other PUCCH is a PUCCH of priority index 0.

In one subembodiment, the PUSCH and the PUCCH correspond to a priority index that indicates high priority between two priority indexes; while the other PUCCH corresponds to the other priority index that indicates low priority between two priority indexes.

In one subembodiment, the first signaling is a DCI indicating priority index 1.

In one subembodiment, the second signaling is a DCI indicating priority index 0.

In one embodiment, the first radio resource block group comprises the radio resource block corresponding to the first index that is different from the first radio resource block; the first radio resource block and the radio resource block corresponding to the first index that is different from the first radio resource block are respectively reserved for a PUCCH and a PUSCH, or, the first radio resource block and the radio resource block corresponding to the first index that is different from the first radio resource block are respectively reserved for a PUSCH and a PUCCH; the second radio resource block is reserved for another PUCCH; the PUCCH and the PUSCH are orthogonal in time domain; the other PUCCH and the PUSCH are overlapping in time domain, while the other PUCCH and the PUCCH are overlapping in time domain; a bit block generated by the second bit block is transmitted in the PUCCH; the PUSCH is not used for transmitting a bit block generated by the second bit block.

In one subembodiment, the PUSCH is a PUSCH of priority index 1.

In one subembodiment, the PUCCH is a PUCCH of priority index 1.

In one subembodiment, the other PUCCH is a PUCCH of priority index 0.

In one subembodiment, the PUSCH and the PUCCH correspond to a priority index that indicates high priority between two priority indexes; while the other PUCCH corresponds to the other priority index that indicates low priority between two priority indexes.

In one subembodiment, the first signaling is a DCI indicating priority index 1.

In one subembodiment, the second signaling is a DCI indicating priority index 0.

In one embodiment, the first radio resource block group comprises the radio resource block corresponding to the first index that is different from the first radio resource block; the first radio resource block and the radio resource block corresponding to the first index that is different from the first radio resource block are respectively reserved for a PUCCH and a PUSCH; the second radio resource block is reserved for another PUCCH; the PUCCH and the PUSCH are orthogonal in time domain; the other PUCCH and the PUCCH are overlapping in time domain; a transmitting end of the first signal performs calculation or/and judgment to determine the third radio resource block; when the third radio resource block is the same as the radio resource block corresponding to the first index that is different from the first radio resource block, a bit block generated by the second bit block is transmitted in the third radio resource block, the first signal not carrying any bit block generated by the second bit block; when the third radio resource block is different from the radio resource block corresponding to the first index that is different from the first radio resource block, the first signal carries a bit block generated by the second bit block.

In one subembodiment, the other PUCCH and the PUSCH are overlapping in time domain.

In one subembodiment, the other PUCCH and the PUSCH are orthogonal in time domain.

In one subembodiment, the PUSCH is a PUSCH of priority index 1.

In one subembodiment, the PUCCH is a PUCCH of priority index 1.

In one subembodiment, the other PUCCH is a PUCCH of priority index 0.

In one subembodiment, the PUSCH and the PUCCH correspond to a priority index that indicates high priority between two priority indexes; while the other PUCCH corresponds to the other priority index that indicates low priority between two priority indexes.

In one subembodiment, a receiving end of the first signal performs calculation or/and judgment to determine the third radio resource block.

In one subembodiment, the first signaling is a DCI indicating priority index 1.

In one subembodiment, the second signaling is a DCI indicating priority index 0.

In one embodiment, the first radio resource block group comprises the radio resource block corresponding to the first index that is different from the first radio resource block; the first radio resource block is reserved for a PUCCH; the second radio resource block is reserved for another PUCCH; the radio resource block corresponding to the first index that is different from the first radio resource block is reserved for a physical layer channel different from the PUCCH and the other PUCCH; the PUCCH is orthogonal with the physical layer channel different from the PUCCH and the other PUCCH in time domain; the other PUCCH and the PUCCH are overlapping in time domain; a transmitting end of the first signal performs calculation or/and judgment based on the first bit block and the second bit block to determine the fourth radio resource block; when the fourth radio resource block is overlapping with the physical layer channel different from the PUCCH and the other PUCCH in time domain, the first signal does not carry any bit block generated by the second bit block; when the fourth radio resource block is orthogonal with the physical layer channel different from the PUCCH and the other PUCCH in time domain, the sixth radio resource block is the fourth radio resource block, and the first signal carries a bit block generated by the second bit block.

In one subembodiment, the physical layer channel different from the PUCCH and the other PUCCH is a PUSCH of priority index 1 or a PUCCH of priority index 1.

In one subembodiment, the PUCCH is a PUCCH of priority index 1.

In one subembodiment, the other PUCCH is a PUCCH of priority index 0.

In one subembodiment, both the PUCCH and the physical layer channel different from the PUCCH and the other PUCCH correspond to a priority index that indicates high priority between two priority indexes; while the other PUCCH corresponds to the other priority index that indicates low priority between two priority indexes.

In one subembodiment, a receiving end of the first signal performs calculation or/and judgment based on the first bit block and the second bit block to determine the fourth radio resource block.

In one subembodiment, the first signaling is a DCI indicating priority index 1.

In one subembodiment, the second signaling is a DCI indicating priority index 0.

In one subembodiment, both the first bit block and the second bit block comprise a HARQ-ACK.

In one subembodiment, a transmitting end of the first signal performs calculation or/and judgment based on a sum of a number of bits comprised in the first bit block and a number of bits comprised in the second bit block to determine the fourth radio resource block.

### Embodiment 12B

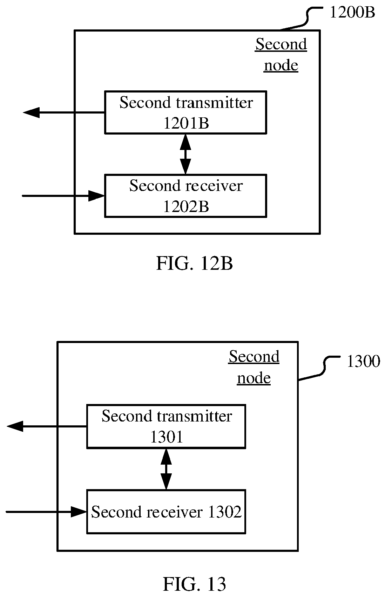

Embodiment 12B illustrates a structure block diagram of a processing device in a second node according to one embodiment of the present application, as shown in FIG. 12B. In FIG. 12B, a processing device 1200B in a second node comprises a second transmitter 1201B and a second receiver 1202B.

In one embodiment, the second node 1200B is a UE.

In one embodiment, the second node 1200B is a base station.

In one embodiment, the second node 1200B is a relay node.

In one embodiment, the second node 1200B is vehicle-mounted communication equipment.

In one embodiment, the second node 1200B is UE supporting V2X communications.

In one embodiment, the second transmitter 1201B comprises at least one of the antenna 420, the transmitter 418, the multi-antenna transmitting processor 471, the transmitting processor 416, the controller/processor 475 or the memory 476 in FIG. 4 of the present application.

In one embodiment, the second transmitter 1201B comprises at least the first five of the antenna 420, the transmitter 418, the multi-antenna transmitting processor 471, the transmitting processor 416, the controller/processor 475 and the memory 476 in FIG. 4 of the present application.

In one embodiment, the second transmitter 1201B comprises at least the first four of the antenna 420, the transmitter 418, the multi-antenna transmitting processor 471, the transmitting processor 416, the controller/processor 475 and the memory 476 in FIG. 4 of the present application.

In one embodiment, the second transmitter 1201B comprises at least the first three of the antenna 420, the transmitter 418, the multi-antenna transmitting processor 471, the transmitting processor 416, the controller/processor 475 and the memory 476 in FIG. 4 of the present application.

In one embodiment, the second transmitter 1201B comprises at least the first two of the antenna 420, the transmitter 418, the multi-antenna transmitting processor 471, the transmitting processor 416, the controller/processor 475 and the memory 476 in FIG. 4 of the present application.

In one embodiment, the second receiver 1202B comprises at least one of the antenna 420, the receiver 418, the multi-antenna receiving processor 472, the receiving processor 470, the controller/processor 475 or the memory 476 in FIG. 4 of the present application.

In one embodiment, the second receiver 1202B comprises at least the first five of the antenna 420, the receiver 418, the multi-antenna receiving processor 472, the receiving processor 470, the controller/processor 475 and the memory 476 in FIG. 4 of the present application.

In one embodiment, the second receiver 1202B comprises at least the first four of the antenna 420, the receiver 418, the multi-antenna receiving processor 472, the receiving processor 470, the controller/processor 475 and the memory 476 in FIG. 4 of the present application.

In one embodiment, the second receiver 1202B comprises at least the first three of the antenna 420, the receiver 418, the multi-antenna receiving processor 472, the receiving processor 470, the controller/processor 475 and the memory 476 in FIG. 4 of the present application.

In one embodiment, the second receiver 1202B comprises at least the first two of the antenna 420, the receiver 418, the multi-antenna receiving processor 472, the receiving processor 470, the controller/processor 475 and the memory 476 in FIG. 4 of the present application.

In Embodiment 12B, the second transmitter 1201B transmits a first signaling; the second receiver 1202B receives a second signal in a second time-frequency resource sub-block, the second signal carrying a fourth bit block and a third bit block; and the second receiver 1202B receives a first signal in a first radio resource block, the first radio resource block being reserved for a first bit block, the first signal carrying the first bit block; the second time-frequency resource sub-block is a subset of a second time-frequency resource block, an end time of the second time-frequency resource sub-block is no later than a second time, and time-domain resources occupied by the first signaling are used to determine the second time; the second time-frequency resource block is reserved for the fourth bit block; the first signaling indicates a radio resource block, and the second time-frequency resource block is overlapping with the radio resource block indicated by the first signaling in time domain; an end time of time-frequency resources in the second time-frequency resource block being allocated to the third bit block is a first time; a start time of the second time-frequency resource block in time domain is earlier than a start time of the first radio resource block in time domain, and a start time of the first radio resource block in time domain is no earlier than the second time; a relative relation between the first time and the second time is used to determine whether the first signal carries a bit block generated by a second bit block, the second bit block being used for generating the third bit block.

In one embodiment, when the first time is no later than the second time, the first signal does not carry a bit block generated by the second bit block; when the first time is later than the second time, the first signal carries a bit block generated by the second bit block.

In one embodiment, the first signaling indicates the first radio resource block.

In one embodiment, the second transmitter 1201B transmits a second signaling; the second signaling indicates the first radio resource block; the second signaling is different from the first signaling.

In one embodiment, the first bit block corresponds to a first index, while the second bit block corresponds to a second index, the first index being different from the second index.

In one embodiment, the second bit block comprises a HARQ-ACK.

In one embodiment, the second transmitter 1201B transmits a third signaling; the third signaling indicates the second time-frequency resource block; the third signaling comprises scheduling information of the fourth bit block.

In one embodiment, a second time-frequency resource block comprises a PUSCH; a first radio resource block comprises a PUCCH; a first bit block corresponds to a first index, while a second bit block corresponds to a second index, the first index and the second index respectively being different priority indexes; the second transmitter 1201B transmits a first signaling; the second receiver 1202B receives in a second time-frequency resource sub-block part of a second signal that is mapped in the second time-frequency resource sub-block, the second signal carrying a fourth bit block and a third bit block; and the second receiver 1202B receives a first signal in the PUCCH, the PUCCH being reserved for the first bit block, the first signal carrying the first bit block; the second time-frequency resource sub-block is a subset of time-frequency resources occupied by the PUSCH, an end time of the second time-frequency resource sub-block is no later than a second time, and an end time of time-domain resources occupied by the first signaling is used to determine the second time; the PUSCH is reserved for the fourth bit block; the first signaling indicates the PUCCH, the PUSCH and the PUCCH being overlapping in time domain; an end time of time-frequency resources in the PUSCH being allocated to the third bit block is a first time; a start time of the PUCCH in time domain is no earlier than the second time; when the first time is no later than the second time, the first signal does not carry a bit block generated by a second bit block; when the first time is later than the second time, the first signal carries a bit block generated by the second bit block; the second bit block is used for generating the third bit block; the third bit block comprises a HARQ-ACK; the fourth bit block comprises a TB or a CBG; the first bit block comprises a HARQ-ACK.

In one subembodiment, the first index and the second index are respectively priority index 0 and priority index 1.

In one subembodiment, the first index and the second index are respectively priority index 1 and priority index 0.

In one subembodiment, the second transmitter 1201B transmits the third signaling; the third signaling indicates the PUSCH; the third signaling indicates the second index.

In one subembodiment, the first signaling indicates the first index.

In one subembodiment, the first signaling comprises one or more fields in a DCI.

In one embodiment, a second time-frequency resource block comprises a PUSCH; a first radio resource block comprises another PUSCH; a first bit block corresponds to a first index, while a second bit block corresponds to a second index, the first index and the second index respectively being different priority indexes; the second transmitter 1201B transmits a first signaling; the second receiver 1202B receives in a second time-frequency resource sub-block part of a second signal that is mapped in the second time-frequency resource sub-block, the second signal carrying a fourth bit block and a third bit block; and the second receiver 1202B receives a first signal in the other PUCCH, the other PUCCH being reserved for the first bit block, the first signal carrying the first bit block; the second time-frequency resource sub-block is a subset of time-frequency resources occupied by the PUSCH, an end time of the second time-frequency resource sub-block is no later than a second time, and an end time of time-domain resources occupied by the first signaling is used to determine the second time; the PUSCH is reserved for the fourth bit block; the first signaling indicates the other PUSCH, the PUSCH and the other PUSCH being overlapping in time domain; an end time of time-frequency resources in the PUSCH being allocated to the third bit block is a first time; a start time of the other PUSCH in time domain is no earlier than the second time; when the first time is no later than the second time, the first signal does not carry a bit block generated by a second bit block; when the first time is later than the second time, the first signal carries a bit block generated by the second bit block; the second bit block is used for generating the third bit block; the third bit block comprises a HARQ-ACK; the fourth bit block comprises a TB or a CBG; the first bit block comprises a TB or a CBG.

In one subembodiment, the first index and the second index are respectively priority index 0 and priority index 1.

In one subembodiment, the first index and the second index are respectively priority index 1 and priority index 0.

In one subembodiment, the second transmitter 1201B transmits the third signaling; the third signaling indicates the PUSCH; the third signaling indicates the second index.

In one subembodiment, the first signaling indicates the first index.

In one subembodiment, the first signaling comprises one or more fields in a DCI.

## Embodiment 13

Embodiment 13 illustrates a structure block diagram a processing device in a second node according to one embodiment of the present application, as shown in FIG. 13. In FIG. 13, a processing device 1300 in a second node is comprised of a second transmitter 1301 and a second receiver 1302.

In one embodiment, the second node 1300 is a UE.

In one embodiment, the second node 1300 is a base station.

In one embodiment, the second node 1300 is a relay node.

In one embodiment, the second node 1300 is vehicle-mounted communication equipment.

In one embodiment, the second node 1300 is UE supporting V2X communications.

In one embodiment, the second transmitter 1301 comprises at least one of the antenna 420, the transmitter 418, the multi-antenna transmitting processor 471, the transmitting processor 416, the controller/processor 475 or the memory 476 in FIG. 4 of the present application.

In one embodiment, the second transmitter 1301 comprises at least the first five of the antenna 420, the transmitter 418, the multi-antenna transmitting processor 471, the transmitting processor 416, the controller/processor 475 and the memory 476 in FIG. 4 of the present application.

In one embodiment, the second transmitter 1301 comprises at least the first four of the antenna 420, the transmitter 418, the multi-antenna transmitting processor 471, the transmitting processor 416, the controller/processor 475 and the memory 476 in FIG. 4 of the present application.

In one embodiment, the second transmitter 1301 comprises at least the first three of the antenna 420, the transmitter 418, the multi-antenna transmitting processor 471, the transmitting processor 416, the controller/processor 475 and the memory 476 in FIG. 4 of the present application.

In one embodiment, the second transmitter 1301 comprises at least the first two of the antenna 420, the transmitter 418, the multi-antenna transmitting processor 471, the transmitting processor 416, the controller/processor 475 and the memory 476 in FIG. 4 of the present application.

In one embodiment, the second receiver 1302 comprises at least one of the antenna 420, the receiver 418, the multi-antenna receiving processor 472, the receiving processor 470, the controller/processor 475 or the memory 476 in FIG. 4 of the present application.

In one embodiment, the second receiver 1302 comprises at least the first five of the antenna 420, the receiver 418, the multi-antenna receiving processor 472, the receiving processor 470, the controller/processor 475 and the memory 476 in FIG. 4 of the present application.

In one embodiment, the second receiver 1302 comprises at least the first four of the antenna 420, the receiver 418, the multi-antenna receiving processor 472, the receiving processor 470, the controller/processor 475 and the memory 476 in FIG. 4 of the present application.

In one embodiment, the second receiver 1302 comprises at least the first three of the antenna 420, the receiver 418, the multi-antenna receiving processor 472, the receiving processor 470, the controller/processor 475 and the memory 476 in FIG. 4 of the present application.

In one embodiment, the second receiver 1302 comprises at least the first two of the antenna 420, the receiver 418, the multi-antenna receiving processor 472, the receiving processor 470, the controller/processor 475 and the memory 476 in FIG. 4 of the present application.

In Embodiment 13, the second transmitter 1301 transmits a first signaling and a second signaling; the second receiver 1302 receives a first signal in a sixth radio resource block, the first signal carrying a first bit block; the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

In one embodiment, the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

In one embodiment, a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block.

In one embodiment, when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

In one embodiment, the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block.

In one embodiment, when the fourth radio resource block is overlapping with at least one radio resource block in the first radio resource block group in time domain, the first signal does not carry any bit block generated by the second bit block; when the fourth radio resource block is orthogonal with all radio resource blocks in the first radio resource block group, the first signal carries a bit block generated by the second bit block.

In one embodiment, the second transmitter 1301 transmits first information; herein, the first information indicates that a bit block corresponding to a target index is allowed to be transmitted in a radio resource block corresponding to an index different from the target index.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The base station or network equipment in the present application includes but is not limited to macro-cellular base stations, micro-cellular base stations, home base stations, relay base station, eNB, gNB, Transmitter Receiver Point (TRP), GNSS, relay satellite, satellite base station, airborne base station and other radio communication equipment.

The above are merely the preferred embodiments of the present disclosure and are not intended to limit the scope of protection of the present disclosure. Any modification, equivalent substitute and improvement made within the spirit and principle of the present disclosure are intended to be included within the scope of protection of the present disclosure

**Claims**

1. A first node for wireless communications, comprising:

   a first receiver, receiving a first signaling and a second signaling; and
   a first transmitter, transmitting a first signal in a sixth radio resource block, the first signal carrying a first bit block;
   wherein the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

2. The first node according to claim 1, wherein the sixth radio resource block is the first radio resource block.

3. The first node according to claim 1 or 2, wherein the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

4. The first node according to claim 1 or 2, wherein the second radio resource block and the radio resource block that corresponds to the first index and is different from the first radio resource block are overlapping in time domain; a radio resource block in the first radio resource block group is the radio resource block that corresponds to the first index and is different from the first radio resource block; the sixth radio resource block is the first radio resource block; one of the first radio resource block and the radio resource block that corresponds to the first index and is different from the first radio resource block is reserved for a first-type physical-layer channel, and the other one of the first radio resource block and the radio resource block that corresponds to the first index and is different from the first radio resource block is reserved for a second-type physical-layer channel; when the radio resource block that corresponds to the first index and is different from the first radio resource block is reserved for a said first-type physical-layer channel, the first radio resource block is reserved for a said second-type physical-layer channel, the first signal not carrying any bit block generated by the second bit block; when the radio resource block that corresponds to the first index and is different from the first radio resource block is reserved for a said second-type physical-layer channel, the first radio resource block is reserved for a said first-type physical-layer channel, where the first signal carries a bit block generated by the second bit block.

5. The first node according to claim 1 or 2, wherein a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block.

6. The first node according to claim 5, wherein when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

7. The first node according to claim 1, wherein the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block.

8. The first node according to claim 7, wherein the sixth radio resource block is the fourth radio resource block.

9. The first node according to claim 7 or 8, wherein when the fourth radio resource block and at least one radio resource block in the first radio resource block group are overlapping in time domain, the first signal does not carry any bit block generated by the second bit block; when the fourth radio resource block and all radio resource blocks in the first radio resource block group are orthogonal in time domain, the first signal carries a bit block generated by the second bit block.

10. The first node according to any of claims 7-9, wherein an end time of the fourth radio resource block in time domain is no later than a fifth time; an end time of the first radio resource block in time domain is used to determine the fifth time.

11. The first node according to any of claims 1-10, comprising:

the first receiver, receiving first information; wherein the first information indicates that a bit block corresponding to a target index is allowed to be transmitted in a radio resource block corresponding to an index different from the target index.

12. A second node for wireless communications, comprising:

a second transmitter, transmitting a first signaling and a second signaling; and a second receiver, receiving a first signal in a sixth radio resource block, the first signal carrying a first bit block; wherein the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

13. The second node according to claim 12, wherein the sixth radio resource block is the first radio resource block.

14. The second node according to claim 12 or 13, wherein the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

15. The second node according to claim 12 or 13, wherein the second radio resource block and the radio resource block that corresponds to the first index and is different from the first radio resource block are overlapping in time domain; a radio resource block in the first radio resource block group is the radio resource block that corresponds to the first index and is different from the first radio resource block; the sixth radio resource block is the first radio resource block; one of the first radio resource block and the radio resource block that corresponds to the first index and is different from the first radio resource block is reserved for a first-type physical-layer channel, and the other one of the first radio resource block and the radio resource block that corresponds to the first index and is different from the first radio resource block is reserved for a second-type physical-layer channel; when the radio resource block that corresponds to the first index and is different from the first radio resource block is reserved for a said first-type physical-layer channel, the first radio resource block is reserved for a said second-type physical-layer channel, the first signal not carrying any bit block generated by the second bit block; when the radio resource block that corresponds to the first index and is different from the first radio resource block is reserved for a said second-type physical-layer channel, the first radio resource block is reserved for a said first-type physical-layer channel, where the first signal carries a bit block generated by the second bit block.

16. The second node according to claim 12 or 13, wherein a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block.

17. The second node according to claim 16, wherein when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

18. The second node according to claim 12, wherein the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block.

19. The second node according to claim 18, wherein the sixth radio resource block is the fourth radio resource block.

20. The second node according to claim 18 or 19, wherein when the fourth radio resource block and at least one radio resource block in the first radio resource block group are overlapping in time domain, the first signal does not carry any bit block generated by the second bit block; when the fourth radio resource block and all radio resource blocks in the first radio resource block group are orthogonal in time domain, the first signal carries a bit block generated by the second bit block.

21. The second node according to any of claims 18-20, wherein an end time of the fourth radio resource block in time domain is no later than a fifth time; an end time of the first radio resource block in time domain is used to determine the fifth time.

22. The second node according to any of claims 12-21, comprising:

the second transmitter, transmitting first information;
wherein the first information indicates that a bit block corresponding to a target index is allowed to be transmitted in a radio resource block corresponding to an index different from the target index.

23. A method in a first node for wireless communications, comprising:

receiving a first signaling and a second signaling; and
transmitting a first signal in a sixth radio resource block, the first signal carrying a first bit block;
wherein the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

24. The first node according to claim 23, wherein the sixth radio resource block is the first radio resource block.

25. The first node according to claim 23 or 24, wherein the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

26. The first node according to claim 23 or 24, wherein the second radio resource block and the radio resource block that corresponds to the first index and is different from the first radio resource block are overlapping in time domain; a radio resource block in the first radio resource block group is the radio resource block that corresponds to the first index and is different from the first radio resource block; the sixth radio resource block is the first radio resource block; one of the first radio resource block and the radio resource block that corresponds to the first index and is different from the first radio resource block is reserved for a first-type physical-layer channel, and the other one of the first radio resource block and the radio resource block that corresponds to the first index and is different from the first radio resource block is reserved for a second-type physical-layer channel; when the radio resource block that corresponds to the first index and is different from the first radio resource block is reserved for a said first-type physical-layer channel, the first radio resource block is reserved for a said second-type physical-layer channel, the first signal not carrying any bit block generated by the second bit block; when the radio resource block that corresponds to the first index and is different from the first radio resource block is reserved for a said second-type physical-layer channel, the first radio resource block is reserved for a said first-type physical-layer channel, where the first signal carries a bit block generated by the second bit block.

27. The first node according to claim 23 or 24, wherein a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block.

28. The first node according to claim 27, wherein when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

29. The first node according to claim 23, wherein the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block.

30. The first node according to claim 29, wherein the sixth radio resource block is the fourth radio resource block.

31. The first node according to claim 29 or 30, wherein when the fourth radio resource block and at least one radio resource block in the first radio resource block group are overlapping in time domain, the first signal does not carry any bit block generated by the second bit block; when the fourth radio resource block and all radio resource blocks in the first radio resource block group are orthogonal in time domain, the first signal carries a bit block generated by the second bit block.

32. The first node according to any of claims 29-31, wherein an end time of the fourth radio resource block in time domain is no later than a fifth time; an end time of the first radio resource block in time domain is used to determine the fifth time.

33. The first node according to any of claims 23-32, comprising:

   receiving first information;
   wherein the first information indicates that a bit block corresponding to a target index is allowed to be transmitted in a radio resource block corresponding to an index different from the target index.

34. A method in a second node for wireless communications, comprising:

   transmitting a first signaling and a second signaling; and
   receiving a first signal in a sixth radio resource block, the first signal carrying a first bit block; wherein the first signaling and the second signaling are respectively used to determine a first radio resource block and a second radio resource block; the first signaling is used to determine the first bit block; the first radio resource block and the second radio resource block are overlapping in time domain; the first radio resource block and the second radio resource block respectively correspond to a first index and a second index, the first index being different from the second index; the second radio resource block is reserved for a second bit block, the second bit block corresponding to the second index; a first radio resource block group comprises a radio resource block that corresponds to the first index and is different from the first radio resource block; the first radio resource block group is used to determine whether the first signal carries a bit block generated by the second bit block; the first radio resource block and any radio resource block in the first radio resource block group are orthogonal in time domain.

35. The first node according to claim 34, wherein the sixth radio resource block is the first radio resource block.

36. The first node according to claim 34 or 35, wherein the second radio resource block and the radio resource block that corresponds to the first index and is different from the first radio resource block are overlapping in time domain; the first radio resource block and a radio resource block in the first radio resource block group are respectively reserved for different types of physical-layer channels; whether the radio resource block in the first radio resource block group is reserved for a first-type physical-layer channel or a second-type physical-layer channel is used to determine whether the first signal carries a bit block generated by the second bit block.

37. The first node according to claim 34 or 35, wherein the second radio resource block and the radio resource block that corresponds to the first index and is different from the first radio resource block are overlapping in time domain; a radio resource block in the first radio resource block group is the radio resource block that corresponds to the first index and is different from the first radio resource block; the sixth radio resource block is the first radio resource block; one of the first radio resource block and the radio resource block that corresponds to the first index and is different from the first radio resource block is reserved for a first-type physical-layer channel, and the other one of the first radio resource block and the radio resource block that corresponds to the first index and is different from the first radio resource block is reserved for a second-type physical-layer channel; when the radio resource block that corresponds to the first index and is different from the first radio resource block is reserved for a said first-type physical-layer channel, the first radio resource block is reserved for a said second-type physical-layer channel, the first signal not carrying any bit block generated by the second bit block; when the radio resource block that corresponds to the first index and is different from the first radio resource block is reserved for a said second-type physical-layer channel, the first radio resource block is reserved for a said first-type physical-layer channel, where the first signal carries a bit block generated by the second bit block.

38. The first node according to claim 34 or 35, wherein a radio resource block in the first radio resource block group is reserved for a third bit block; a third radio resource block and the first radio resource block group are jointly used to determine whether the first signal carries a bit block generated by the second bit block; the second bit block and the third bit block are used together to determine the third radio resource block.

39. The first node according to claim 38, wherein when the third radio resource block is the same as a radio resource block in the first radio resource block group, a bit block generated by the second bit block is transmitted in the third radio resource block, the first signal not carrying any bit block generated by the second bit block; when the third radio resource block is different from a radio resource block in the first radio resource block group, the first signal carries a bit block generated by the second bit block.

40. The first node according to claim 34, wherein the first signaling is used to determine a fourth bit block; the fourth bit block is used for generating the first bit block; a fourth radio resource block and the first radio resource block group are used together to determine whether the first signal carries a bit block generated by the second bit block; the fourth bit block and the second bit block are jointly used to determine the fourth radio resource block.

41. The first node according to claim 40, wherein the sixth radio resource block is the fourth radio resource block.

42. The first node according to claim 40 or 41, wherein when the fourth radio resource block and at least one radio resource block in the first radio resource block group are overlapping in time domain, the first signal does not carry any bit block generated by the second bit block; when the fourth radio resource block and all radio resource blocks in the first radio resource block group are orthogonal in time domain, the first signal carries a bit block generated by the second bit block.

43. The first node according to any of claims 40-42, wherein an end time of the fourth radio resource block in time domain is no later than a fifth time; an end time of the first radio resource block in time domain is used to determine the fifth time.

44. The first node according to any of claims 34-43, comprising:

transmitting first information;
wherein the first information indicates that a bit block corresponding to a target index is allowed to be transmitted in a radio resource block corresponding to an index different from the target index.

**100A**

First node

receiving first signaling and second signaling — **101A**

transmitting first signal in sixth radio resource block — **102A**

FIG. 1A

**100B**

First node

receiving first signaling — **101B**

transmitting second signal in second time-frequency resource sub-block — **102B**

transmitting first signal in first radio resource block — **103B**

FIG. 1B

**EPS 200**

HSS — 220

NG-RAN **202**

UE — 201

First link

NR Node B — 203

Other NR Nodes B — 204

Third link

UE — 241

Second link

MME/AMF/UPF — 211

Other MMEs/AMFs/UPFs — 214

S-GW — 212

P-GW — 213

EPC/5G-CN **210**

Internet Service — 230

FIG. 2

Control plane
300

| L3 | | RRC | 306 |

305

| L2 | | PDCP | 304 |
| | RLC | 303 |
| | MAC | 302 |
| L1 | | PHY | 301 |

User plane
350

| | SDAP | 356 |

355 | L2 |

| | PDCP | 354 |
| | RLC | 353 |
| | MAC | 352 |
| L1 | | PHY | 351 |

FIG. 3

**410**

416 Transmitting processor

471 Multi-antenna transmitting processor

418 420 Transmitter / Receiver

452 454 Transmitter / Receiver

457 Multi-antenna transmitting processor

**450**

468 Transmitting processor

475 Controller /processor

Memory
476

470 Receiving processor

472 Multi-antenna receiving processor

418 420 Transmitter / Receiver

452 454 Transmitter / Receiver

458 Multi-antenna receiving processor

456 Receiving processor

459 Controller /processor

Memory 460

Data source 467

FIG. 4

| Second node U2A | | First node U1A |
|---|---|---|

S5201A. transmitting first information

first information →

S5101A. receiving first information

F1A, optional

S521A. transmitting second signaling

second signaling →

S511A. receiving second signaling

S522A. transmitting first signaling

first signaling →

S512A. receiving first signaling

S513A. transmitting first signal in sixth radio resource block

← first signal

S523A. receiving first signal in sixth radio resource block

End

End

FIG. 5A

Second node U2B

First node U1B

S5201B. transmitting second
signaling

─────second signaling─────→

S5101B. receiving second
signaling

**F1B,
optional**

S5202B. transmitting third
signaling

────third signaling────→

S5102B. receiving third
signaling

**F2B,
optional**

S521B. transmitting first signaling

────first signaling────→

S511B. receiving first signaling

S512B. transmitting second signal
in second time-frequency resource
sub-block

←────second signal────

S522B. receiving second signal in
second time-frequency resource
sub-block

S513B. transmitting first signal in
first radio resource block

←────first signal────

S523B. receiving first signal in
first radio resource block

( End )

( End )

FIG. 5B

Start

S61A:is a radio resource block in first radio resource block group reserved for a first-type physical-layer channel or a second-type physical-layer channel?

Reserved for a first-type physical-layer channel

S62A.First signal does not carry any bit block generated by second bit block

Reserved for a second-type physical-layer channel

S63A.First signal carries a bit block generated by second bit block

End

FIG. 6A

Start

S61B:Is first time later than second time?

Yes

S62B.First signal carries a bit block generated by second bit block

No

S63B.First signal does not carry any bit block generated by second bit block

End

FIG. 6B

Second radio resource block

overlapping in time domain

First radio resource block

All radio resource blocks in first radio resource block group

orthogonal in time domain

FIG. 7A

First signaling → indicating → First radio resource block ← overlapping in time domain with → Second time-frequency resource block

FIG. 7B

Second radio resource block → reserved for → Second bit block → used to determine → Third radio resource block

A radio resource block in first radio resource block group → reserved for → Third bit block → used to determine → Third radio resource block

FIG. 8A

Second signaling → indicating → First radio resource block

First signaling → indicating → A radio resource block

non-overlapping in time domain ← Second time-frequency resource block

overlapping in time domain

FIG. 8B

Start

S91:is third radio resource block the same as a radio resource block in first radio resource block group?

Yes → S92.First signal does not carry any bit block generated by second bit block

No → S93.First signal carries a bit block generated by second bit block

End

FIG. 9A

End time of second
time-frequency
resource sub-block

Start time of first
radio resource block
in time domain

Time domain

Start time of second
time-frequency resource
block in time domain

Second time

**FIG. 9B**

| Second signaling | used to determine | → Second bit block | used to determine |
|---|---|---|---|

| First signaling | used to determine | → Fourth bit block | used to determine |
|---|---|---|---|

used to generate

First bit block

Fourth radio resource block

**FIG. 10A**

corresponding to

| First bit block | → | First index |
|---|---|---|

corresponding to

| Second bit block | → | Second index |
|---|---|---|

**FIG. 10B**

Start

S111:Is fourth
radio resource block orthogonal with
all radio resource blocks comprised in
first radio resource block group in
time domain?

No

Yes

S112.First signal does not carry
any bit block generated by
second bit block

S113.First signal carries a bit
block generated by second bit
block

End

FIG. 11A

1100

First node

First receiver 1101

First transmitter 1102

FIG. 11B

1200A

First node

First receiver 1201A

First transmitter
1202A

FIG. 12A

1200B

Second
node

Second transmitter
1201B

Second receiver
1202B

FIG. 12B

Second
node

1300

Second transmitter
1301

Second receiver 1302

FIG. 13

## INTERNATIONAL SEARCH REPORT

| International application No. |
|---|
| **PCT/CN2021/091264** |

**A. CLASSIFICATION OF SUBJECT MATTER**

H04L 5/00(2006.01)i; H04W 28/26(2009.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 第一, 第二, 信令, 比特块, 空口资源, 时频资源, 正交, 交叠, 重叠, 索引, 复用, 优先级, RRC, PUCCH, time, frequency, resource, URLLC, eMBB, priority, overlap, index, HARQ, ACK, multiplexing

**C. DOCUMENTS CONSIDERED TO BE RELEVANT**

| Category* | Citation of document, with indication, where appropriate, of the relevant passages | Relevant to claim No. |
|---|---|---|
| Y | CN 111049627 A (LONGBO COMMUNICATION TECHNICAL CO., LTD.) 21 April 2020 (2020-04-21) <br> description paragraphs 0014, 0086-0254, 0469, figures 1-4 | 1-2, 11-13, 22-24, 33-35, 44 |
| Y | VIVO. "3GPP TSG RAN WG1 #96bis R1-1904082" <br> *UCI enhancements for URLLC*, 12 April 2019 (2019-04-12), <br> section 2.3 | 1-2, 11-13, 22-24, 33-35, 44 |
| A | CN 111049627 A (LONGBO COMMUNICATION TECHNICAL CO., LTD.) 21 April 2020 (2020-04-21) <br> description paragraphs 0014, 0086-0254, 0469, figures 1-4 | 3-10, 14-21, 25-32, 36-43 |
| A | CN 111083782 A (LONGBO COMMUNICATION TECHNICAL CO., LTD.) 28 April 2020 (2020-04-28) <br> entire document | 1-44 |
| A | CN 107343297 A (LONGBO COMMUNICATION TECHNICAL CO., LTD.) 10 November 2017 (2017-11-10) <br> entire document | 1-44 |

☑ Further documents are listed in the continuation of Box C. ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **14 July 2021** | **26 July 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

# EP 4 152 668 A1

| International application No. |
| --- |
| **PCT/CN2021/091264** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2019335423 A1 (SHANGHAI LANGBO COMMUNICATION TECHNOLOGY COMPANY LIMITED) 31 October 2019 (2019-10-31) entire document | 1-44 |

Form PCT/ISA/210 (second sheet) (January 2015)

**INTERNATIONAL SEARCH REPORT**
Information on patent family members

International application No.

**PCT/CN2021/091264**

| Patent document cited in search report | | | Publication date (day/month/year) | Patent family member(s) | | | Publication date (day/month/year) |
|---|---|---|---|---|---|---|---|
| CN | 111049627 | A | 21 April 2020 | US | 2020120696 | A1 | 16 April 2020 |
| CN | 111083782 | A | 28 April 2020 | US | 2020127788 | A1 | 23 April 2020 |
| CN | 107343297 | A | 10 November 2017 | CN | 110932832 | A | 27 March 2020 |
| | | | | WO | 2017190586 | A1 | 09 November 2017 |
| US | 2019335423 | A1 | 31 October 2019 | CN | 110401980 | A | 01 November 2019 |

Form PCT/ISA/210 (patent family annex) (January 2015)